(19) Europäisches Patentamt
European Patent Office
Office européen des brevets

(11) **EP 2 230 794 A2**

(12) **EUROPEAN PATENT APPLICATION**

(43) Date of publication:
**22.09.2010 Bulletin 2010/38**

(51) Int Cl.:
*H04L 9/32* (2006.01)          *H01Q 15/00* (2006.01)
*H01Q 17/00* (2006.01)

(21) Application number: **09175069.5**

(22) Date of filing: **04.11.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **16.03.2009 EP 09003763
24.06.2009 EP 09163641**

(71) Applicants:
• **Technische Universität München
80333 München (DE)**
• **Rührmair, Ulrich
83679 Sachsenkamp (DE)**

(72) Inventors:
• **Stutzmann Martin
85435 Erding (DE)**

• **Csaba, György
80634 München (DE)**
• **Lugli, Paoli
85399 Halbergmoos (DE)**
• **Finley, Jonathan
85609 Aschheim (DE)**
• **Jirauschek, Christian
80538 München (DE)**
• **Jäger, Christian
81543 München (DE)**
• **Rührmair, Ulrich
München (DE)**

(74) Representative: **Herrmann, Franz
Dendorfer & Herrmann
Patentanwälte Partnerschaft
Bayerstrasse 3
80335 München (DE)**

(54) **Towards Electrical, Integrated Implementations of SIMPL Systems**

(57) This application discusses the practical implementation of a novel security tool termed SIMPL system, which was introduced in [1]. SIMPL systems can be regarded as a public key version of physical unclonable functions (PUFs). Like the latter, a SIMPL system S is physically unique and non reproducible, and implements an individual function FS. In opposition to a PUF, however, a SIMPL system S possesses a publicly known numerical description, which allows its digital simulation and prediction. At the same time, any such simulation must work at a detectably lower speed than the real-time behaviour of S. As argued in [1], SIMPL systems have certain practicality and security advantages in comparison to PUFs, certificates of authenticity, physically obfuscated keys, and also to standard mathematical crypto technics. In [1], definitions, protocols, and optical implementations of SIMPL systems were presented. This manuscript focuses on concrete electrical, integrated realizations of SIMPL systems, and proposes two potential candidates: SIMPL systems derived from special SRAM-architectures (so called "skew designs" of SRAM cells), and implementations based on Cellular Non-Linear Networks (CNNs).

This is used in a system and method for security purposes an inner structure that is accessible by a plurality of terminals, wherein the system allows a measurement on the inner structure of the system by using a challenge signal comprising a plurality of input signals applied in parallel to the terminals and by receiving a response signal dependent on a setting of the challenge signal and dependent on the inner structure of the system, wherein the system comprises the ability to process non-binary input signals, a bandwidth at the terminals and an information content ensuring a incomplete readout of the information content within a predefined access time period, a spatial and/or logical disorder of the inner structure, a non-linear relation between the input signals and output signals appearing at the terminals, and that from the knowledge of a subset of the predefined settings and of associated response signals, the response signal associated with a particular setting outside the subset is not predictable with a probability higher than the probability for guessing the response signal.

# FIG 2

**Bank**

| $ID_{PUF}, n', m', \{C_i, W_i, S_i\}$ |

**ATM + PUF**

| $ID_{PUF}, n, m = h^n(x)$ |

Check $n \geq n'$.
Compute $M = h^{n-n'}(m')$.
$K_1' = h(m, ID_{PUF})$.
Randomly select challenge $C$.
Generate random $\beta$.

$\xleftarrow{\quad \alpha, n, ID_{PUF} \quad}$

Generate random $\alpha$.

$K_1 = h(m, ID_{PUF})$.

$\xrightarrow{\quad E\&MAC_{K_1'}(\alpha, C, W, \beta) \quad}$

Check MAC.
Measure PUF response
and extract bitstring $S$.

$K' = h(K_1', S')$.

$\xleftarrow{\quad MAC_K(\beta) \quad}$

$K = h(K_1, S)$.

Check MAC.
$n' \rightarrow n+1, \quad m' \rightarrow h(M)$.
Remove $C$ from database.

$\xleftarrow{\quad Use\ K\ as\ session\ key \quad}\dashrightarrow$

$n \rightarrow n+1, \quad m \rightarrow h(m)$.

**Description**

The invention relates to a method comprising the acts of performing a measurement by generating a challenge signal comprising a plurality of input signals, by applying the plurality of input signals to at least one terminal of a system having a inner structure and by receiving a response signal dependent on a setting of the challenge signal and dependent on the inner structure of the system.

The invention further relates to devices for security purposes.

Such a method is known from SUH, Edward G., DEVADAS, Srinivas: Physical Unclonable Functions for Device Authentication and Secret Key Generation, Proceedings of the 44th Design Automation Conference (DAC), 2007. The known system exploits the facts that due to inevitable production irregularities, even nominally identical chips defer in the precise properties of their internal components, for example in their internal runtime delays. In the known system an incoming signal is split into two signals which race in parallel as top signal or bottom signal through a sequence of multiplexers. Each of the multiplexers is controlled by an individual single bit from a multi-bit external challenge signal. Depending on the value of the respective control bit, the top and bottom signal either change place when running through a multiplexer, thereby crossing each other, or continue to run in parallel. Nominally, both signal paths are of the same length, but in reality the runtimes vary due to manufacturing variations, as noted above. At the end of the sequence of multiplexers, an arbiter circuit decides whether the top or bottom signal arrives first and generates a corresponding output signal.

The known method is relatively stable with respect to varying environmental conditions, since the relative runtime delays are measured. The known method can further be implemented using a single chip as system.

Nevertheless, one problem with the known system is that the overall runtime can be modeled as the sum of the runtimes in the subcomponents. Since there is only a small number of relevant sub-components in each multiplexer, relatively simple modeling of the structure is possible. Indeed, successful machine learning experiments with these systems have been reported in LIM, D.: Extracting secret keys from integrated circuits, MSc thesis, MIT, 2004, and in the Appendix of RÜHRMAIR, Ulrich, SÖLTER, Jan, SEHNKE, Frank: On the Foundations of Physical Unclonable Functions, 2009. Cryptology ePrint Archive, Report No. 2009/277. Available from http://eprint.iacr.org/index.html.

In particular, it is revealed in these publications that machine learning algorithms such as Support Vector Machines, Logistic Regression with $R_{prop}$ gradient descent, Evolution Strategies and Policy Gradients with parameter-based exploration can be applied successfully to machine learn and subsequently predict conventional electrical PUFs. The models used in the machine learning experiments are mostly the standard parametric Arbiter PUF model described already in LIM, D.: Extracting secret keys from integrated circuits, MSc thesis, MIT, 2004, or variants thereof. The parameters used in the respective Machine Learning algorithms are mostly standard parameters, such as (6,36)-selection and a global mutation operator of $\tau = 1 / \sqrt{n}$. The prediction rates are above the known real-world stabilities of the respective PUFs.

Another method has been proposed in PAPPU, R.; RECHT, B.; TAYLOR, J.; GERSHENFELD, N.: "Physical One-Way Functions", Science, Volume 297, pages 2026-2030, September 20, 2002. In the known method, a scattering token is irradiated by laser from various directions and with various points of incidence. The pattern of the scattered light is detected by a detector. The images generated by the detector are analyzed and characterized by a key that allows for distinguishing between different scattering patterns contained in the images of the detector. The known apparatus can be used for implementing an authentication protocol based on illumination-key pairs. During the enrollment stage, several illumination-key pairs are acquired at a trusted terminal. During the verification stage of the protocol, the server challenges the scattering token with a specific illumination and compares the key of the response with the known key. The scattering module is authenticated if the Hamming-distance between the actual key and the key measured previously is below a predefined threshold.

One disadvantage of the known system and of the known method is that the laser needs to be adjusted precisely so that reproducible measurements can be performed on the scattering module. In consequence, the known system is expensive, big and very sensitive against perturbations.

The known methods and systems relate to physical one-way functions (POWF), physical random functions (PRF) or physical uncloneable functions (PUF). Whereas the two former terms have been coined first, today mainly the expression "physical uncloneable function" or PUF is used. A PUF is a mathematical function that is derived from the behavior of a complex physical system or device. If a challenge signal is supplied to the complex system the system reacts with corresponding response signals. This allows for regarding the behavior of the system as a function that maps challenge signals to response signals.

For security purposes one of the most important features of a PUF is that it shall be practically infeasible to predict an unknown response signal to a given challenge signal without conducting an actual measurement on the system. This property shall even hold if many other pairs of challenges and corresponding responses are known. It shall yet be upheld if an adversary had previous physical access to the system for a limited period, in which he could make arbitrary measurements on it.

Proceeding from this related art, the present invention seeks to provide simplified and/or improved security methods and devices.

This objective is achieved by the methods and devices having the features of the independent claims. Advantageous embodiments and refinements are specified in claims dependent thereon.

According to one embodiment of the method, the following acts are performed:

- a non-volatile data storage having a plurality of data cells containing random data content is used as system having an inner structure;
- an addressing signal applied to at least one address terminal of the data memory is used as challenge signal for addressing the data cells;
- data signals depending on the random data content of the data memory are received as response signals at data terminals;
- the access time for an adversarial read-out process is restricted to a predefined access time period, and
- the data rate of the read-out process disables a complete adversarial readout of the data content within the predefined access time period.

By implementing such a method, a complete read-out of the data content of the system can be prohibited. Due to the large information content of the inner structure and due to the restriction of the access time period for an unnoticed adversarial read-out process, an adversary cannot retrieve the full data content of the system within the predefined access time period during which has access could remain unnoticed. Since the data content is a random data content, the adversary cannot predict the responses from the restricted data amount already retrieved from the system if addressing signals are applied to the system that have not yet been applied to the system by himself since an subsequent numeric modeling of the input/output behavior of the structure after the access time period is not possible. Therefore, the response signal associated with a particular addressing signal outside the subset of already used addressing signal is not predictable with a probability higher than the probability for randomly guessing the response signal. It should be noted that the method can be implemented in a very compact way. Finally, the method can easily be used since no moving components are needed. Therefore, the method comprises a high degree of reliability. In spite of its simplicity such a system can be used to realize highly secure physical uncloneable function, whose security does not depend on assumptions on the adversary's computational power, but only on his access time to the system. It is automatically and naturally immune against any modeling or machine learning attacks. In other words, it is secure even against computationally unbounded adversaries, provided that they only had a limited period of access to the system such as a few days or even weeks. These features are not met by current implementations of PUFs.

In one particular embodiment, the inner structure of the system comprises a non-volatile memory-like structure with a high, random information content and with a slow access speed or low read-out rate, respectively. Such a type of memory can be realized, for example, by a crossbar memory with a plurality of input lines connected to the input terminals and a plurality of output lines connected with the output terminals. The data contained in the crossbar memory are stored in the crossbar memory in logical disorder (i.e. with a high, random information content), and the bandwidth for the readout process of the data content ensures an incomplete readout within a predefined access time period.

The bandwidth can be restricted, for example, by the internal RC constants of the crossbar structure. Since the bandwidth and the access time period is restricted an adversary will not be able to retrieve the full data content of the memory within the access time period. The logical disorder of the data stored in the memory further ensures that the structure of data can not be derived from the data obtained by an incomplete readout and subsequent numeric modeling or prediction attempts.

According to another embodiment of the method, the following acts are performed:

- a unique two-dimensional analog cellular network is used as system having a inner structure;
- the network comprises a plurality of cells directly interconnected to at least three other cells; and
- the response signal depends on individualized characteristics of the inner structure or on manufacturing variations of the inner structure.

In such a method, the response signal can be generated by sampling an output of the network which may be based on the current state of a particular node. This particular node might also be determined by the challenge signal which contains a selection of nodes to be sampled and the initial states of all or a selection of nodes. Since the method is based on a cellular network that includes a plurality of cells interconnected to other cells, the temporal behavior of the state of a particular cell depends on the state and on differentials with respect to the state of neighboring cells. Such systems can assume a degree of complexity in their temporal behavior that prevents any successful attack of an adversary and in particular the prediction of an unknown response signals that is caused by a challenge signal that has not yet been applied to the system.

The cellular network can also be a cellular non-linear network (CNN) wherein the cellular non-linear network (CNN) comprises a plurality of cells interconnected to other cells within a finite radius and wherein a temporal behavior of a state variable of a particular cell depends on a state variable and on differentials with respect to the state variables of the interconnected cells. Since these non-linear cellular networks show a particular complex behavior, a method using these cellular non-linear networks (CNNs) is particularly suited for providing a secure PUF.

The method can also be realized by using wave signals as input signals generated by a plurality of input signals sources. These wave signals may be electromagnetic, mechanical or acoustic waves wherein the electromagnetic waves may be waves with wavelengths ranging from the microwave wavelength range up to the ultraviolet wavelength range. In this case, output signal detectors that are associated with terminals of the inner structure are generally arranged for receiving wave signals as output signals.

In particular, if a medium is placed between the input signal sources and the output signal detectors that results in a non-linear relationship between the input signal and the output signal the complexity of the system can be significantly increased.

The medium may, for example, be a optical gain medium comprising a plurality of scattering centers or be a non-amplifying medium comprising a plurality of amplifying particles.

In further embodiments of the methods, at least one set of challenge signal and response signal is changed, rewritten or erased from the system or set to a predefined state without affecting other sets of challenge signals and response signals. Such a method uses an erasable system. Erasable systems have the special property that arbitrary single measurement values can be changed or rewritten or erased without affecting the value of the other measurement values. Such a feature is not possible on the basis of previously known PUF-architectures, because they consist of many subcomponents that interact with each other. Changing the read-out value for one single external stimulus or measurement parameter hence also affects the read-out value for different measurement parameters or stimuli.

Erasable systems can lead to strongly improved practicality in protocols that are based on the methods described above. For example, erasable systems can limit the storage volume that must be reserved for storing the response signals of previous measurements of the system in authentication or identification protocols. Furthermore, they allow to re-use the same system in many subsequent protocols without affecting the security of previous protocol executions. This leads to obvious economic advantages.

The system can also be used for further methods for security purposes. In one particular embodiment, the method starts by requesting a measurement on the system, wherein the measurement is performed by applying a challenge signal to the system and by receiving a response signal dependent on a setting of the challenge signal and dependent on the inner structure of the system. The response signal is further validated by comparing the response obtained by the measurement with a response obtained from a previous measurement. Such a method can in particular be used for a secure cryptographic key exchange, for securing identification of entities over an insecure network and for testing labels.

The method can further be used for performing an oblivious transfer of information, or for performing any process or protocol according to the bounded storage model (BSM).

Furthermore, protocols based on the methods described may also use a number of systems, which can also form a joined system if the systems are arranged for generating a response signal that depends (i) on a challenge signal applied to the joined system and (ii) the inner structure of the joined system and (iii) the physical distance of the (sub-) systems forming the joined system. The response signal can be sent to a remote system, and the challenge signal can be provided by a remote system, too. This technique allows for proving the physical distance of the systems forming the joined system to a third party. In particular, it enables the proof that two systems are in close physical proximity (so-termed proof of colocality).

Furthermore, the described method may be employed to build environmental sensors such as cameras, temperature sensors, audio sensors/microphones which can authenticate the recorded sensor data to a third party without using secret keys stored in the sensor system, or without secure environments build around the sensors.

Further advantages and properties of the present invention are disclosed in the following description, in which exemplary embodiments of the present invention are explained in detail based on the drawings:

Figure 1    shows an embodiment of an optical system without any moving part, which can be realized on a chip;

Figure 2    describes a communication protocol for the establishment of a cryptographic session key between two parties, in this case a Bank and an ATM with a PUF/SHIC System inserted into it;

Figure 3    illustrates the basic construction of a crossbar memory;

Figure 4     is a schematic view of a small crossbar memory, used for explaining the read-out process,

Figure 5     is a RC equivalent circuit of the read-out process of a crossbar memory;

Figure 6     is an approximate equivalent circuit of a crossbar memory;

Figure 7     shows the current voltage characteristics of an exemplary diode-backed junction of a crossbar memory;

Figure 8     shows the useful (read) and parasitic currents for the above diode backed junction, as a function of array sizes, simulated by SPICE;

Figure 9     illustrates the read and write procedure in the crossbar memory, showing the time dependence of the $I_{sens}$ current;

Figure 10     shows the steps of an Aluminum-Induced Layer Exchange Process (ALILE Process), which can be used in the fabrication of the (random) crossbar- based SHIC systems;

Figure 11     shows typical crystallite growth in the ALILE process, illustrating the appearing randomness;

Figure 12     shows several typical measurement current voltage curves in the random diodes produced by the ALILE process, illustrating the large, random varia- tion in the curves;

Figure 13     shows a schematic illustration for a possible wiring of a TFT-based SHIC system;

Figure 14     shows I(V) curve for a particular phase-change memory element (taken from [79]);

Figure 15     illustrates a system with an inner structure formed by the plurality of disordered filaments that are contacted via a large number of contacts that are drilled into the material;

Figure 16     depicts a system that exploits interference between analog and digital units;

Figure 17     is a schematic of a two-dimensional, nearest-neighbour connected Cellular Nonlinear Network;

Figure 18     shows the circuit schematics of a general CNN single cell, realized by controlled current and voltage sources;

Figure 19     is a circuit solving Helmholtz' equation;

Figure 20     depicts voltage distributions on chip that show patterns similar to optical interference phenomena;

Figure 21     shows voltage distributions on chip that show patterns similar to optical interference in an inhomogenous medium;

Figure 22     illustrates the voltage distribution of a CNN circuit that solves Maxwell equation, but which displays nonlinear waves due to cell to cell mismatches;

Figure 23     shows the strongly varying states of some reference cells upon the change of the initial condition of one particular cell;

Figure 24     is a close-up view of the irregular, but continuous curves shown in Figure 23;

Figure 25     shows a difference map of a 80 by 80 cell CNN, in which the template of one cell has been changed, illustrating the global sensitivity of the circuit behavior to local changes;

Figure 26     gives a possible circuit implementation of a non-programmable CNN cell;

Figure 27     shows a CNN cell, based on Chua's circuit;

Figure 28     is a picture showing natural and artificial domain patterns of a CoPt film; the upper portion illustrates the artificial pattern;

Figure 29    depicts a system that uses surface acoustic waves;

Figure 30    depicts a system that is based on frequency-selective antennas and spectra of the excitation signal, in this example with 8 excitation channels and 2 bits per channel;

Figure 31    illustrates an array of LEDs and photo detectors that are coupled to an optical matrix;

Figure 32    illustrates a laser array provided with a random gain medium and a photo detector array;

Figure 33    illustrates a system based on a photonic crystal;

Figure 34    illustrates a secure circuit intermingled with a CNN-like tamper sensitive system;

Figure 35    depicts two interacting systems; and

Figure 36    depicts a SHIC Sensor and its communication with a second party (Bob).

In the following various embodiments are described in detail.

## 1. Introduction

In the following, SHIC systems and some of their applications are described. In a nutshell, SHIC systems are very complex, disordered physical systems which must contain an extraordinarily high amount of structural information. More precisely, they should have the following properties:

1. The information content of a SHIC system can be extracted reliably and repeatedly through measurements with different measurement parameters/challenges/inputs $p_i$ and obtaining the resulting measurement value/results/output/response $M(p_i)$ of the system.
2. The number of possible measurement parameters $p_i$ is so large that the values $M(p_i)$ cannot be determined for all possible measurement parameters $p_i$ within limited time.
3. Due to the high information content in the system is must also be impossible to model, computationally learn, simulate, or otherwise *numerically* predict the results of unknown measurement results $M(p_k)$ from known results $M(p_i)$, without making an actual measurement on the system.
4. It must be prohibitively difficult to physically reproduce or clone a SHIC system.

The acronym SHIC stands for the term "**S**uper **H**igh **I**nformation **C**ontent", and is pronounced as *"chique"*. In a useful analogy, one can imagine a SHIC system as a huge memory chip: The chip's memory is supposed to be so large that it is impossible to read it out completely. At the same time, it shall be possible to deliberately address and to read-out any single register of the chip. The same properties should hold for a SHIC system.
A conceptually simple, very impractical, but illustrative example of a SHIC system is given by a surface which exhibits irregular features at nanosize lengthscales. By suitable microscopic methods (ultimately an atomic force microscope) it is possible to observe the irregularities in the neighborhood of any surface coordinate $X_i$ (please note that the coordinates $X_i$ play the role of the measurement parameters $p_i$ mentioned above). Since a surface region of 1 $cm^2$ typically contains around $10^{14}$ to $10^{15}$ atoms, the whole information content of the surface cannot be obtained completely in practice. Still, it is conceivable to repeatedly read out the same information around the same coordinates $X_i$. Several much more practical SHIC systems devised in our group, including the first integrated optical and the first secure electrical on-chip implementations, will be discussed in the following.
It should be noted, that the SHIC systems described herein cannot be maschine learned by machine learning algorithms such as Support Vector Machines, Logistic Regression with $R_{prop}$ gradient descent, Evolution Strategies and Policy Gradients with parameter-based exploration as described in LIM, D.: Extracting secret keys from integrated circuits, MSc thesis, MIT, 2004, or by variants thereof. The parameters used in the respective Machine Learning algorithms are mostly standard parameters, such as (6,36)-selection and a global mutation operator of $\tau = 1/\sqrt{n}$ .

**Related Work**

Physical systems similar to SHIC systems have been studied under the names of Physical One-Way Functions, Physical Random Functions and Physical Unclonable Functions (PUFs). Our novel contributions are as follows:

1. The new formal notion of a SHIC system puts its emphasis on the information content of the considered structures, and on the adversary's strict inability to imitate the system numerically, in particular on the system's immunity against machine learning attacks. We do not focus on non-invertability such as [1, 2], or pseudo-randomness like properties as in [12, 14, 48, 46]. Also, we do not mainly consider unclonable structures which can be machine learned or fully read out in short time due to their small number of challenges, such as those described in [48, 14, 46, 50].

2. We provide several cryptographic and security applications and protocols based on SHIC systems. Some of these applications and protocols have previously been known in the context of Physical Unclonable Functions (PUFs); others have been modified or improved compared to the known, PUF-related protocols; still others are completely new and have not been considered anywhere earlier.

(a) The first class includes the applications random number generation, remote identification/authentication of entities, and highly secure, forgery proof labels (Sec. 3.3.2, 3.3.3, and 3.3.6).

(b) The second includes a new, online communication protocol, which verifies remotely over arbitrary distances that a tamper sensitive SHIC system has not been tampered with, and which considerably saves upon storage requirements compared to existing protocols. It also contains a new protocol for secure key exchange (Sec. 3.3.1 and 4.3.1).

(c) The third class, which consists of entirely new protocols and applications, includes oblivious transfer, the implementation of the Bounded Storage Model, and a novel protocol that proves that two SHIC systems are in the same location at a specific point in time (Sec. 3.3.4, 3.3.5, 5.3.1), and protocols for proving the validity of sensor data such as the data recorded by cameras or temperature sensors.

3. We provide new physical implementations of SHIC systems, including the following:

- The first secure (in terms of the desired high information complexity) electrical implementations, which can withstand machine learning attacks and very long access times of a cryptographic adversary.
- The first SHIC systems or Physical Unclonable Functions (PUFs) which are secure against computationally unbounded adversaries.
- New optical implementations with integrated read-out mechanisms, which can be implemented on a chip.
- We propose SHIC systems with an intentionally slow read-out speed, which achieve their security against exhaustive read-out not only from their high information content, but also from their intrinsically slow read-out rate.
- We propose the first erasable SHIC systems / the first erasable PUFs. Erasable SHIC systems have the following additional property: Certain read-out values in an erasable SHIC systems can be altered/overwritten/erased without affecting the other, remaining read-out values of the system.
- We propose sensors with SHIC-like properties, which can prove the validity or authenticity of the sensor data.

## 2. Definitions

We start with some formalism that enables us to talk about measurements and measurement results. In doing so, we will try to strike a balance between strict formality and pragmatism that suits our cause.

**Definition 2.1 (Measurement Apparatuses and Measurement Results)**

An apparatus $M$ is called a measurement apparatus for physical objects if it meets the following requirements:

1. $M$ is capable of executing a finite number of measurements $M^1,...,M^n$ on a given physical system.
2. Each measurement $M^i$ can be fully characterized by an associated numerical parameter $p_i$. These parameters are called the measurement parameters of $M$ (later, they will also often be denoted as challenges or inputs ) We use the term $P_M$ to denote the set of all measurement parameters of a measurement apparatus $M$ .
3. $M$ has the following functional behavior: Provided with a physical system $S$ and a measurement parameter $p_i$ as

input, *M* executes the measurement $M^i$ characterised by $p_i$ on *S* . After that it outputs a numerical measurement result (also termed output or response), which we denote by $M(p_i,S)$ $M^S_{p_i}$ . or

Please note that item 2.1 implicitly assumes that the measurement result is stable for different executions of one measurement. This approximation is justified for two reasons: First of all, it expresses the later requirement that a SHIC system can be measured upon multiple occasions with (approximately) stable results. Secondly, the varying results of different measurements can be accompanied with error correcting syndromes, which allows the extraction of correct, stable, and error-free measurement values in practice.

**3. SHIC Systems**

**3.1 Definition**

We will now define SHIC systems. Our definition makes the informal characterization given in the introduction (section 1) formally more precise.

**Definition 3.1 (SHIC Systems)**

Let *S* be a physical system, and let *M* be a measurement apparatus. *S* is called a SHIC system with respect to *M* if it is practically infeasible for any adversary Eve to succeed in the following experiment with a probability greater than 3 / 4 :

1. Eve is given the system *S* and the measurement apparatus *M* for a period of several days or weeks. During this period, she is allowed to collect as many meausrement values M(p$_i$, S) of the system as the bandwidth and possible read-out frequency of the system allows; we do not assume that the security of the system only or mainly comes from a restriction of access to the system's direct responses, such as in a controlled PUF. After that period, access to the system S is withdrawn from Eve.

2. After access to the object has been withdrawn, Eve is given a measurement parameter *p* chosen uniformly at random from $P_M$, and is asked to return an answer *V* .

3. The experiment is called successful if

$$V = M(p, S).$$

Thereby the probability is taken over the uniformly random choice of the measurement parameter and the random choices or procedures that Eve employed during steps 1 and 2.
Several conclusions can be drawn from the formal definition, which are in agreement with the properties of SHIC systems that we described in section 1.

**Large Cardinality of $P_M$**

It is obvious that the set $P_M$ of all measurement parameters of *M* must be very large, as otherwise Eve could measure the values $M(p,S)$ for all $p \in P_M$ while she holds possession of S , and store them in a look-up table. This would subsequently enable her to output the correct value $V=M(p,S)$ for any random choice of $p$ , which was in contradiction with the definition.

**No Simulation Model or Machine Learning**

On the basis of the measurements that are possible during step 1 of the experiment, it must also be infeasibly difficult for Eve to build a numerical simulation model of S , which allows her to computationally predict the correct values $M(p,S)$ . In particular, it must be infeasible to machine learn the behavior of *S* . Please note that it is quite involved to prove that building a simulation model or machine learning is infeasible for a specific physical object. From our perspective, the best abstract argument to rule out efficient simulatability would be a high entropy/random information content of $S$, and/or a complex, possibly non-linear internal process that generates the system's outputs.

**Physical Uncloneability**

Furthermore, the definition implies that it must be impossible to fabricate a physical copy $S'$ of $S$ within a short time period, such that it holds for more than 25% of all $p \in P_M$ that

$$M_p^S = M_p^{S'}.$$

Please note that this feature is not equivalent to the requirements imposed on unique objects that are used as unforgeable labels or Certificates of Authenticity [21, 22, 23, 24, 25, 26, 26a, 26b]: It is required there in the properties of unique objects that there is a list of *relatively few* properties that are unreproducible.

**Threshold**

Why did we stipulate a threshold of 3 / 4 for Eve's success probability in the definition? Would a small value such as 10% not be more suggestive? The reason is that the measurement value $M_p^S$ may be a single bit value, which means that Eve's chance to randomly guess it are already 50%. Our definition demands that Eve must not be able to do much better than random guessing, that is, that her success probability is not too far away from 50%. The particular numeric choice of 3 / 4 is, to some extent, arbitray.

Please note that the threshold can be made arbitrarily small by standard probability amplification. Whenever the set of possible measurement results has large cardinality, as is the case with many practical implementations of SHIC systems, the effective threshold will be much smaller from the start.

**Slow Read-Out Speed**

Another measure to prevent Eve from creating a full look-up table (besides a large cardinality of $P_M$) can be to design the system S with an intrinsically low read-out rate.

This can be achieved, for example, by devising S such that it reaches a stable equilibrium only after comparably long timescales, such as $10^{-2}$ or $10^{-3}$ *sec.* If $S$ was an integrated circuit, one could realise this property by designing its *RC* constants in a suitable fashion. Please note that an intrinsically slow read out speed is not a necessary characteristic of a SHIC system; it is a complementary measure besides the large cardinality of $P_M$.

**3.2 Realisation**

A full discussion of the physical realisations of SHIC systems will be given in later sections (e.g. sections 7 to 24), but for reasons of illustration we will include a brief overview already here. In principle, any disordered system with a sufficiently high entropy can be suitable as a SHIC system, provided that the following additional conditions are met:

   1. The measurement results obtained from the system are sufficiently stable and repeatable under everyday conditions.

   2. The measurement can be carried out in an efficient fashion.

These two conditions are non-trivial to fulfill in practice, however. One advantageous strategy is to integrate the measurement apparatus within the SHIC system, and to excite the system with a so-called *"combinatorial"* excitation scheme: Several measuring probes or sensors are hardwired into the object, and can be operated and switched on and off independently. Upon being switched on, any probe independently stimulates the SHIC system with a signal at a controlled level. That method leads to a very large number of possible overall stimuli: Provided that each probe operates on two distinctive stimulus levels, and assuming that there are $n$ probes, this results in $2^n$ overall possibilities to excite the system. For $m$ distinctive stimulus levels, this number already raises to $m^n$. This implies that the required large number of possible measurement parameters can be easily met by such combinatorial excitation schemes.

Let us now discuss a few concrete examples that use this technique.

**Optical SHIC Systems**

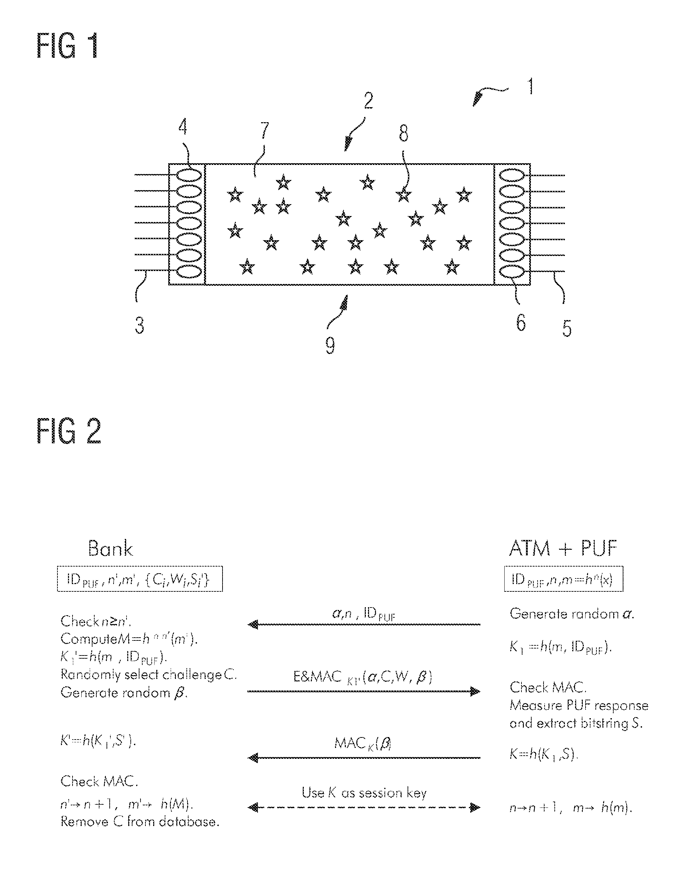

Figure 1 shows a SHIC system 1 formed by an optical device 2, that comprises a plurality of input terminals 3, which are connected to an array of light sources 4, such as diodes or possibly phase locked diodes. The optical device 2 further comprises output terminals 5, that are connected to an array of detectors 6 such as a CCD or a photosensitive diode (array). A solid body transparent matrix 7 is disposed between the arrays of light sources 4 and detectors 6. One suggestive possibility for creating a SHIC system consists of a random distribution of optically active, possibly non-linear particles 8 in a transparent solid body matrix as shown in Figure 1. Such as system 1 can be excited by the diode array 4, and read out by the detector arrangement 6. The light source 4, the medium 7 an the detectors 6 form a inner structure 9 of the optical device 2.

In order to further increase the complexity of the system 1, several different types of nanoparticles can be used in the mixture, such as particles of different size and shape, elongated nanoparticles, metal nanoparticles, fluorescent particles, semiconductor particles such as colloidal quantum dots, etc. Both active nonlinear (comprising nonlinear gain and / or loss, e.g. using saturation effects) and passive nonlinear particles can be used. Please note the mixture can be generated in a thin film, if necessary, and that the approach is well suitable for on-chip implementation.

Furthermore, different ways of exciting or stimulating such a structure are conceivable: Irradiating it with radition or light with different frequencies, angles and/or points of incidence, polarization etc. is conceivable.

Basically any other sufficiently complex optical structure can be used in connection with this basic excitation and read-out scheme, such as photonic crystals, photonic crystal microcavity arrays, etc.

**Circuit-based SHIC Systems**

Appropriately designed integrated circuits, such as networks of nonlinear resistors, diodes or arrays of active circuit elements (transistors, analog circuit blocks) can be used for SHIC systems. Upon fabrication, each of these elements is usually subject to random, uncontrollable variations, making them unique. Known analog circuit design techniques can be applied to make the systems resistant against temperature, power supply, and other variations [71].

**Disordered Electrical SHIC Systems**

It is also possible to use highly disordered electrical systems, for example random 3D arrangements of nanofibers, as electrical SHIC systems. The advantage of such structures is their possibly higher random information content in comparison with ICs, since they are three-dimensional. One difficulty in comparison with optical SHIC systems is that interference effects do not occur in electrical systems at room temperature. This means that there is the danger that small differences "average out" in large systems, leading to the same measurement results for different measurement parameters. Furthermore, integrated internal mechanisms that correct temperature and external variations, which are possible for circuit based SHIC systems, are difficult to achieve for disordered electrical SHIC systems. Their stability has to be reached by numerical error correcting mechanisms or careful preparation and execution of the measurement, or by choosing appropriate materials.

**Slow Read-Out SHIC Systems**

The idea of the SHIC systems listed above is to meet the characteristics of Definition 3.1 by their ultra-high internal complexity. An additional possibility to protect a SHIC system against exhaustive read-out is to design it in such a manner that only a very slow read-out rate is possible. This measure has been discussed already in section 3 on page 17.

**3.3 Applications of SHIC Systems**

We will now sketch several important applications of SHIC Systems.

**3.3.1 Secure Exchange of a Secret Cryptographic Key**

The scenario of secret key exchange can be described as follows: Suppose that two cryptographic players Alice and Bob are located remotely. They are connected by a binary channel and a physical channel, over which physical objects can be sent (for example postal delivery). The binary channel is supposed to be authenticated, but can be eavesdropped, and the physical channel is assumed to be completely insecure, meaning that sent objects can be examined or taken from the channel, new objects can be inserted, and sent objects can be manipulated. Now, Alice's and Bob's task is to agree upon a secret sequence of bits (the cryptographic key) by communication over these two channels. At the same time, an adversary Eve, who has got access to the channels in the described manner, shall be unable to learn significant information about the exchanged key.

Under the presumption that Alice holds a SHIC system S with respect to a measurement apparatus $M$ with set of measurement parameters $P_M$, Alice and Bob can achieve secure key exchange as follows.

**Protocol 3.2 (Secure Physical Key Exchange via SHIC systems)**

1. Alice chooses at random measurement parameters $p_1,..., p_k$ and $q_1,..., q_m$ from the set $P_M$. She measures the SHIC system S to determine all values $M(p_i,O)$ and $M(q_j,S)$.

2. Alice sends the system S over the physical channel to Bob.

3. Bob receives a system $S'$, which is not necessarily equal to S (recall that it could have been exchanged by Eve).

4. Bob sends the message *"I received a system!"* over the authenticated binary channel to Alice.

5. Alice and Bob check that S is equal to $S'$. That is, they check that Bob received the system that was sent away by Alice, and that the system has not been exchanged or manipulated while it was sent. To that aim, they execute the following subprotocol:

(a) Alice sends the values $p_1,..., p_k$ to Bob.
(b) Bob measures the system $S'$ with the parameters $p_i$ and obtains the values $M(p_i,S')$. He sends these values to Alice.
(c) Alice checks if the values she got from Bob match the values she measured herself in step 1 of the protocol. That is, she checks if

$$M(p_i,S) = M(p_i,S') \quad \text{for all} \quad i = 1,...,k.$$

If the number of mismatches is above a certain threshold, Alice sends "Stop!" over the binary channel, and Alice and Bob abort the protocol.
Otherwise, they believe that the system S has not been exchanged, and continue the protocol.

6. Alice sends the values $q_1,...,q_m$ over the binary channel to Bob.

7. Bob determines the values $M(q_j,S)$ by measurement on the SHIC system.

8. Alice and Bob take the binary sequence $M(q_j,S)$, which is known to both of them, as the secret binary key.

Alternatively, Alice and Bob can apply an arbitrary publicly known procedure $P$ to the values $M(q_j,S)$ in order to obtain their joint secret binary key, for example a hash function [47, 49], a privacy amplification scheme [52, 51], etc. Also, any other alternative means for information reconciliation and/or privacy amplification can be employed (see, for example, [78], and/or chapter 2 of [78], and the references contained therein).

Why is the described protocol secure? In a nutshell, the problem that Eve faces is as follows: When she has got access to the SHIC system during the physical transfer phase of the SHIC system (step 2 in the protocol), she does not know the measurement parameters that Alice has been using. This prevents her from deliberately making the same measurements as Alice and Bob. When she eventually can learn the measurement parameters by eavesdropping in step 6, she has lost access to the SHIC system, since it is in Bob's possession now. According to Definition 3.1, this implies that she has only got at most a 3 / 4 chance of guessing each single value $M(p_i,S)$ correctly. Thus, her chance to guess the whole key correctly decrease exponentially in the key length, and can be made arbitrarily small if Alice and Bob choose to use long keys. Bitwise security of the key can be achieved by hashing or privacy amplification (again, see the above references or chapter 2 of [78] and the references contained therein).

### 3.3.2 Identification of Entities

The problem of the identification of entities over insecure networks can be described as follows: Alice and Bob are connected by an insecure channel, to which an adversary Eve has got access. Alice wants to convince Bob that he is indeed talking to her over the channel, not to Eve or other communicants. It shall remain impossible for Eve to impersonate Alice even if Eve has successfully eavesdropped, and learned from, earlier identification communications between Alice and Bob. Identification is a very general protocol that plays a role in a large variety of settings, ranging from military to network to bank card and access card applications.

SHIC systems can be applied successfully to that setting. We assume that Alice possesses a SHIC system $S$ , and that Bob has a look-up table of several measurement parameters $p_i$ and corresponding values $M(p_i,S)$. This look-up table may have been generated during a secure set-up phase during which Bob had access to $S$ , or it can be provided to Bob by a trusted third authority. The look-up table must be secret and unknown to any cryptographic adversaries. Under these presumptions, the two can proceed as follows.

**Protocol 3.3 (Secure Identification of Entities over Insecure Networks)**

1. Bob chooses at random $k$ measurement parameters $p_i$,..., $p_k$ from his look-up table. He sends these measurement parameters to Alice.
2. Alice measures her SHIC system $S$ with these parameters, and obtains values $V_1$,..., $V_k$. She sends these values to Bob.
Please note that if Alice follows the protocol correctly and indeed possesses the SHIC system $S$ , then $V_i=M(p_i,S)$ for $i = 1,...,k$.
3. Bob checks if the values $V_i$ that he received match the values that are recorded his look-up table, that is, Bob checks if

$$V_i = M(p_i, S) \quad \text{for } i = 1, \ldots, k.$$

If the number of mismatches is below a certain threshold, Bob believes Alice's identity, otherwise he does not.

Please note that this protocol is particularly suited for mobile environments: If standard, binary identification protocols are used there, fraudsters with physical access to the hardware may extract any stored secret binary keys by various types of attacks [26]. In opposition to that, the use of SHIC systems in such applications allows the realisation of better security properties at lower cost, and avoid the storage of binary keys in dedicated non-volatile memory, where it can often be identified and read out by invasive means.

### 3.3.3 Forgery-Proof Labels

In our parlance, the *"labeling problem"* consists of the following issue: How can we attach a physical marker, a so-called *"label"*, to a valuable item (e.g. a credit card, a banknote, a passport, a pharmaceutical product) in such a manner that the following requirements are met:

1. The validity of the label can be tested by automatised, mechanical testing apparatuses.
2. The label is highly secure against forging by fraudsters.

SHIC systems can be successfully applied to this problem, as described in the following protocol. We assume that there is a central database which stores the properties of all valid labels, and which is contacted each time a testing apparatus wants to check a label.

**Protocol 3.4 (Forgery-Proof Labels through SHIC Systems)**

**Issuing of a Label:**

1. The forgery-proof label includes a label ID-number *ID* and a SHIC system *S* .

2. Upon or before creation of the label, several measurement values $M(p_i, S)$ are determined. The value pairs ($p_i$, $M(p_i,S)$) have been stored in a central database together with the ID-No. of the label and possibly additional product data.

It is assumed that all testing apparatuses maintain authenticated online connections with the database, or with a central institution running the database, or that they possess a list of the value pairs ($p_i,M(p_i,S)$) themselves.

**Testing of a Label, Version I: Trusted Testing Apparatus**

1. The testing device reads the ID-number *ID* of the label and sends it to the database.

2. The database chooses at random *k* value pairs $p_i,M(p_i,S)$ that are stored under that ID-number, and sends the values $p_i,M(p_i,S)$ to the testing apparatus.

3. The testing apparatus measures the SHIC system *S* with measurement parameters $p_1,..., p_k$, or communicates the values $p_1,..., p_k$ to the SHIC system *S* in case it has an integrated measurement mechanism.
As response, the testing apparatus receives values $V_1,...V_k$.

4. The testing apparatus checks if

$$V_i = M(p_i,S) \quad \text{for all} \ \ i = 1,\ldots,k.$$

It regards the label as genuine if and only if the number of mismatches is below a certain threshold.

**Testing of a Label, Version II: Untrusted Testing Apparatus**

1. The testing device reads the ID-number *ID* of the label and sends it to the database.

2. The database chooses at random *k* value pairs $p_i,M(p_i,S)$ that are stored under that ID-number, and sends the values $p_i$ to the testing apparatus.

3. The testing apparatus measures the SHIC system *S* with measurement parameters $p_1,..., p_k$, or communicates the values $p_1,..., p_k$ to the SHIC system *S* in case it has an integrated measurement mechanism.
As response, the testing apparatus receives values $V_1,..., V_k$. The testing apparatus sends these values $V_1,..., V_k$ to the database.

4. The database (or the central institution running the database) checks if

$$V_i = M(p_i,S) \quad \text{for all} \ \ i = 1,\ldots,k.$$

It regards the label as genuine if and only if the number of mismatches is below a certain threshold.

In a nutshell, both versions of the protocol are secure since an adversary can neither physically copy the SHIC system, nor fully read it out to create an exhaustive look-up table, nor machine learn or model its behavior in order to simulate the correct answers $M(p_i,S)$ of the system. Please note that in case the SHIC system has an integrated measurement apparatus, the communication between the SHIC system and the testing apparatus is merely digital, and can thus be carried out very conveniently and reliably, for example via radiowave communication.

### 3.3.4 Oblivious Transfer

We will now turn to the problem of *oblivious transfer* or *OT.* This is a very general cryptographic primitive, on the basis of which basically any cryptographic two-party problem, in particular secure two-party computation protocols, can be implemented [43, 44]. A number of variants of the oblivious transfer problem coexist, all of which can be shown to be equivalent in the sense that each one of them is sufficient to implement all the others. Probably the most common version is 1-out-of-2 OT. It can roughly be defined as follows (but see also [54] and [55] and references contained therein for full details).

### Definition 3.5 (1-out-of-2 OT)

A protocol between two players Alice and Bob is said to implement 1-out-of-2 oblivious transfer between Alice and Bob if the following holds:

1. At the beginning of the protocol, Alice and Bob execute or have executed the following events:

   (a) Alice chooses (in secret) two bits $b_0$ and $b_1$.
   (b) Bob chooses (in secret) one choice bit $c$.

2. If both parties behave honestly, then after the execution of the protocol, the following conditions are met:

   (a) Bob has learned the bit $b_c$ (that is, Bob has obtained $b_0$ if $c = 0$, and $b_1$ if $c = 1$).
   (b) Bob essentially cannot learn any information about the other bit $b_{1-c}$.
   (c) Alice does not know which of the two bits $b_0$ and $b_1$ Bob has obtained (that is, Alice does not learn Bob's choice bit c).

3. Even if one of the parties is dishonest and deviates maliciously from the protocol, he/she cannot influence properties 2 (b) and 2(c) unless with very small probability.

We will now provide an implementation of oblivious transfer on the basis of SHIC Systems. It draws on a technique originally developed by Cachin, Crepeau and Marcil [54] in the context of the Bounded Storage Model, and splits into two parts: A technique called interactive hashing, and the actual protocol. As interactive hashing probably is not generally known, we will review this technique first. Again, see [54] and references contained therein for further details.

### Definition 3.6 (Interactive Hashing)

Let $m$ be a natural number, and let $S \in \{0,1\}^m$. A communication protocol between two players Alice and Bob is called a protocol for interactive hashing if the following conditions are met:

1. At the beginning of the protocol, Alice has no input, while Bob holds the m -bit string S as input.

2. At the end of the protocol, one of the following two cases occurs:

   a. Alice knows two $m$ -bit strings $U_1$ and $U_2$, with the property that $U_b = S$ for some bit $b \in \{0,1\}$, but Alice does not know the value of $b$.
   In other words: Alice knows two strings, one of which is equal to $S$ , but she does not know which.
   At the same time, Bob can only influence the value of the term $U_{b-1}$, i.e. the value of the string which is not equal to S, with negligible probability (or not at all).
   b. One of the players has aborted the protocol. If both players behave honestly, however, then abort occurs with negligible probability only.

3. Even if one of the players behaves dishonestly, he cannot violate condition 2.

A protocol for interactive hashing can be constructed in the following way (see [54] and references therein):

**Protocol 3.7 (Interactive Hashing)**

**Prerequisites and Situation:**

    1. Alice holds no input, Bob holds an $m$-bit string $S$ as input.
    2. Let $G$ be the following class of 2-universal hash functions:

$$G = \left\{ g(x) = a * x \mid a \text{ is an element of the set} \{0,1\}^m \right\},$$

where * denotes the scalar product between the vectors $a$ and $x$.

**Protocol:**

The protocol consists of $m$-1 rounds. In the $j$-th round, for $j$ = 1,..., $m$-1, Alice executes the following steps:

    1. Alice chooses a function $g_j$ uniformly at random from the set $G$. Let the m-ary binary vector $a_j$ be the description of $G$. If $a_j$ is linearly dependent on the $a_1$,..., $a_{m-1}$, then Alice repeats step 1 until $a_j$ is linearly independent.
    2. Alice announces $g_j$ to Bob.
    3. Bob computes $b_j = g_j(S) = a_j * S$ and sends $b_j$ to Alice.

Note that at the end of the protocol, Alice knows $m$-1 linear equations satisfied by $S$. Since the $a_j$'s are linearly independent, there are exactly two different $m$-bit strings $U_1$ and $U_2$ that satisfy the system of equations set up by Bob. These solutions can be found by Alice via standard linear algebra. $U_1$ and $U_2$ have the property that exactly one of them is equal to $S$, but obviously Alice has no chance in telling which one it is. Hence, the above scheme indeed constitutes an interactive hashing scheme for arbitrary binary $m$-bit strings. For further details see [54].
We will now use interactive hashing in order to set up a 1-out-of-2 oblivious transfer scheme on the basis of SHIC systems.

**Protocol 3.9 (Oblivious Transfer by SHIC Systems)**

**Prerequisites:**

    1. Bob holds a SHIC system $S$.

    2. Without loss of generality, we assume that the measurement apparatus $M$ of $S$ has the set $\{0,1\}^m$ as set of all measurement parameters.

    3. We assume that Alice and Bob have agreed on an encoding scheme $E(\cdot)$ with the following properties:

    (a) $E(\cdot)$ efficiently encodes finite sets of finite binary strings (i.e. sets of the form $\{p_1, ..., p_n\}$, with $p_i$ in $\{0,1\}^*$) as finite binary strings.
    (b) $E(\cdot)$ is reversed by a decoding scheme $D(\cdot)$, such that $D(E(R)) = R$ for any set $R$ of the form $\{p_1, ..., p_n\}$, with $p_i$ in $\{0,1\}^*$.
    (c) $E$ is a surjective mapping onto the set of all finite binary strings. That means that $D(\cdot)$ uniquely associates a set $R = D(x)$ with *any* finite binary string $x$.

Such an encoding scheme can be found, for example, in [53] or [54].

4. Alice holds two bits $b_0$ and $b_c$.

5. Bob has selected a choice bit $c$.

**Protocol:**

1. Bob chooses a set $R$ of measurement parameters, $R = \{p_1, ..., p_n\}$, and determines the corresponding measurement values $M(p_i, S)$.

2. Bob sends or transfers the system S to Alice.

3. Alice and Bob get engaged in an interactive hashing protocol, where Bob's input is $E(R)$ .

4. The output of this interactive hashing protocol, which is both known to Alice and Bob, are two strings $U_0$ and $U_1$. One of the strings $U_0$, $U_1$ is equal to $E(R)$. Let us call the index of that string $i_0$, meaning that $U_{i_0} = E(R)$ . Please note that Bob knows $i_0$, since he knows both $U_0, U_1$, and $E(R)$.

5. Bob chooses a bit $c'$ such that

$c' = 0$ , if $i_0 = c$
$c' = 1$ , else.

6. Bob sends $c'$ to Alice.

7. Alice determines the values

$$M(r_1, S), \ldots, M(r_n, S),$$

where the $r_i$ are the elements of the set $D(U_{c'})$, and the values

$$M(t_1, S), \ldots, M(t_n, S),$$

where the $t_i$ are the elements of the set $D(U_{1-c'})$, by measurement on the system S.

8. Alice forms the two strings $z_0$ and $z_1$ according to the following rules:

$$z_0 = b_0 + M(r_1, S) + \ldots + M(r_n, S) \bmod 2,$$

and

$$z_1 = b_1 + M(t_1, S) + \ldots + M(t_n, S) \bmod 2.$$

9. Alice sends $z_0$ and $z_1$ to Bob.

10. Bob obtains the bit $b_c$ he selected through his choice bit $c$ as

$$b_c = z_c + M(p_1, S) + \ldots + M(p_n, S) \bmod 2.$$

Why does the protocol work? The properties of the interactive hashing protocol ensure that Alice does not know which string $U_0$ and $U_1$ is equal to $R$. This means that she does not learn Bob's choice bit. Again by the properties of the interactive hashing protocol, Bob cannot influence the value of the term $U_i$ that is unequal to $R$. Therefore, the chances that he knows the corresponsing measurement values for the measurement parameters that are encoded by $U_i$ are very low. Furthermore, the fact that S is a SHIC system also ensures that Bob cannot decrypt both values $z_0$ and $z_1$. Together, this ensures that Bob cannot learn both bits $b_0$ and $b_1$.

It is interesting to note that the above protocol imposes no large storage requirements on Alice and Bob, as both have to memorize only a very small number of bits. This is in contrast to the original implementation of this technique in the context of the Bounded Storage Model [54]. There, the number of bits that the honest parties must be able to store is $O(n^{2/3})$, while n must be a guaranteed upper bound on the storage capacity of dishonest players that are trying to cheat in the protocol (and hence is very large).

A suggestive improvement is to reduce the number of binary communication rounds of Alice and Bob. In order to execute the interactive hashing scheme described earlier, they need $n$ -1 rounds of communication. Indeed, further development of the interactive hashing technique allows to reduce this number to a constant. The corresponding approach is detailed in [55], to which we refer the reader.

Furthermore, please note that oblivious transfer is known to be a symmetric primitive [55a]. Therefore, the above protocol can also be used as a basis for executing oblivious transfer in the other direction, i.e. from Bob to Alice, without re-transferring the SHIC system from Alice to Bob. A single transfer of a SHIC system in one direction hence is sufficient to carry out many oblivious transfer protocols in both directions. This is obviously a great practicality asset for protocols where a SHIC system is contained on a mobile item such as bank card etc., or in hardware systems that are shipped from one place to another: In such cases, the transfer of the SHIC system in one direction (for example the transfer from the bank headquarters to the Automated Teller Machine (ATM)) is carried out naturally (in said example by the customer who carries his bank card to the ATM). Once accomplished, it allows oblivious transfer and secure two-party computations, in our example between the ATM with the card containing the SHIC system and the bank.

**Variants**

In a variant of the above protocol, Alice may hold the SHIC system and send it to Bob in an intial protocol phase.

It should be noted that an oblivious transfer can principally also be performed using a convential PUF but posisibly at a lower security level depending on the computational power of an adversary..

**3.3.5 Practical Realisation of the Bounded Storage Model**

The Bounded Storage Model (BSM) is a theoretical or hypothetical scenario in cryptography, in which a number of cryptographic problems can be treated favourably and with provable security. It can be described as follows:

    1. The following entities take part in the scenario:

        (a) A source $S$ , which broadcasts a stream $B_1 \cdots B_N$ of random bits at an extremely high bitrate per second.
        (b) $n$ parties $P_1,...,P_n$, which can receive the broadcasted bits at said high rates.

    2. Due to the ultra-high bitrate of the source, it is assumed that neither of the participants (and also no subgroup of the participants together) can store the whole bitstream $B_1 \cdots B_N$ that has been generated and broadcasted by the source after some non-trivial time interval, such as several hours or days. Any of the participants can only store a fraction $c$ of the stream.

The BSM has been introduced in [57] and has been discussed in a large number of subsequent publications. In particular, it has been shown that secure key exchange, encryption, authentication, oblivious transfer, non-interactive time stamping and several other problems can be treated with provable security in this model.

Regarding the practical realisation of the model, however, some problems arise both in the generation of the random bits, the high broadcasting rates, the authentication of the broadcasted bitstream for multiple parties, the synchronisation of all receivers of the bitstream, error correction, and other issues. It is not fully clear whether a dedicated adversary with a high budget would really be unable to record the full bitstream. In [56], it is estimated that "an adversary with a cluster of $N$ computers and enough technicians to replace filled magnetic discs with fresh ones can capture an arbitrarily large portion of a public random string with a data rate of 200 · N MiB/second at a cost of $O(1) / GiB$ stored." In other words, the cost for storing the whole bitstream scales only linearly, and with mild constants, too.

This means that with currently achievable bitrates of broadcasting sources, it is questionable whether the Bounded Storage Model can be practically realised in a secure fashion. Another, possibly more practical option is to use SHIC systems for the same purpose. Instead of broadcasting bits, the source S can send one or more SHIC systems to the participants. The measurement values $M(p_i, S)$ (or values derived from them) serve as the equivalent to the large number of bits $B_1 \cdots B_N$ in the BSM. An adversary, and also any participant or even group of participants, who only had temporal access to the SHIC system, cannot learn or read-out all possible values $M(p_i, S)$.

This allows the transfer of all protocols that have up to date been realized in the Bounded Storage Model (Encryption, Authentication, Identification, Oblivious Transfer, Non-Interactive Time Stamping, Intrusion Resilience and Malware Resistant Protocols, Secret Key Exchange, etc[U1].) into a setting based on SHIC systems.

In opposition to the broadcasting approach, this implementation of the Bounded Storage Model can be realised on the basis of currently existing technology, however. Furthermore, the security does not depend on the financial investment of a potential adversary (see [56] and quotation above), but depends on hard technological limits that an adversary faces with respect to the complex, random inner structure and high information content of the SHIC system.

### 3.3.6 Random Number Generation

SHIC systems can also be used to generate "true" random numbers of very high quality. Their high internal complexity makes the prediction of their behaviour and of the generated random numbers extremely difficult. If implemented correctly, they are presumably more secure than the pseudo-random, algorithmic random number generators which, in fact, operate deterministically and start from a comparably smaller amount of random information, the so-called numeric "seed".

If SHIC systems are used for random number generation, the earlier requirement of their stability and of the repeatability of the measurement results can be partially relaxed. In fact, it might even be advantageous to construct highly disordered systems which degrade or simply change or reconfigure over time, for example whenever they are powered on, or while electric energy flows through them.

In particular, it can be advantageous to use phase change materials or other substances that show a (at least partly) reversible behavior in the construction of random number generators. The reason is that their internal states can be reconfigured without loosing structural entropy, or without the whole system converging to a state with low disorder/ entropy, whose input/output behavior is less complex and less suited for the generation of (pseudo)-random numbers.

4. Tamper Sensitive SHIC Systems

### 4.1 Definition

**Another flavor of SH**IC systems, which has its applications mainly in hardware security, are tamper sensitive SHIC systems.

### Definition 4.1 (Tamper Sensitive SHIC Systems)

Let S be a physical system, and let $M$ be a measurement apparatus. $S$ is called a tamper sensitive SHIC system with respect to $M$ if it is practically infeasible for any adversary Eve to succeed in the following experiment with a probability greater than 3 / 4 :

1. Eve is given the object S and the measurement apparatus $M$ for a period of several weeks or months. She can execute any procedure or measurement she likes on the object during that period.

2. After that period, the structural integrity of S is violated significantly, for example through partially or fully disassembling the object, or through drilling a hole into the object. The object is not withdrawn from Eve, however.

3. Then, Eve is given a measurement parameter $p \in P_M$ chosen uniformly at random from $P_M$, and is asked to produce an output $V$.

4. The experiment is called successful if

$$V = M(p, S).$$

Thereby the probability is taken over the random choice of the measurement parameter and the random choices or procedures that Eve employed during steps 1 and 2.

The idea about a tamper-sensitive SHIC system is that after tampering or violations of its integrity (penetration, disassembly, etc.), it shall be impossible to physically or numerically reconstruct the original functionality of the system. This requires that the local penetration of the object should to some extent cause a non-local effect on the system behaviour.

### 4.2 Realisation

Please note that several of the SHIC systems that we presented in section 3.2 naturally possess some sort of tamper sensitivity. For example, the behavior of the optical system described in section 3.2 would change strongly if a hole was be drilled into the structure. The same holds for suitably designed IC structures, especially those with active circuit elements which amplify changes and spread them throughout the structure.

### 4.3 Applications

The main application of tamper sensitive SHIC systems is a remote check of hardware integrity, as described in the next section.

### 4.3.1 Remote Check of Hardware Integrity

Consider the following situation: Alice wants to check that some remotely located hardware system has not been tampered with or has not been maliciously altered. Further suppose that she can only use a binary communication channel to achieve that goal. One standard approach in that situation is to store a secret key in the hardware system, by which the system identifies itself to Alice as untampered (for example by a standard identification protocol such as Feige-Fiat-Shamir, or by periodically signing a message of the form "*I am untampered at time ...").* Furthermore, the system needs to be equipped with tamper detecting sensors, which detect any violations of the system's physical integrity, and react by erasing the secret key.

There are three potential problems with this approach:

1. Its security is based on unproven mathematical assumptions implicit in the identification or signature scheme.

2. The protection mechanisms (tamper sensors, etc.) can be bulky and expensive.

3. There are a number of attacks (invasive, semi-invasive, side channel, etc. [26, 45]) which may be able to read out the secret key, compromising the whole scheme.

In contrast, tamper sensitive SHIC systems enable a fully new type of hardware protection mechanism. The basic idea is as follows: One covers or encapsulates the hardware system by a protection layer made from a tamper sensitive SHIC system. Whenever that layer is removed or penetrated, its properties change in an irrecoverable manner, which can be detected by a challenge response protocol by Alice. The details are as follows.

### Protocol 4.2 (Remote Check of Hardware Integrity by Tamper Sensitive SHIC Systems)

### Prerequisites:

1. The hardware system that needs to be protected has been covered or encapsulated by a tamper sensitive SHIC system $S$.

2. A number of value pairs $(p_i, M(p_i, S))$ of the untampered system S have been determined and recorded in a list, which is known to Alice.

**Remote Check of the Hardware System:**

1. Alice chooses some of the measurement parameters $p_1,..., p_k$ from her list, and sends them to the hardware system. She may mark or erase the used parameters in order not to use them again.

2. The hardware system measures S by the parameters $p_i$ and receives values $V_i$. It returns these values to Alice.

3. Alice checks if

$$V_i = M(p_i, S) \quad \text{for all} \ \ i = 1,...,k.$$

She considers the hardware system non-tampered if and only if the number of mismatches is below a certain threshold.

If it is necessary that the communication between Alice and the hardware system is authenticated, this can be achieved by keys that are derived from measurement values $M(p_i,S)$ of the tamper sensitive SHIC system layer.

Please note further that the protocol requires that Alice holds a relatively long list of pairs $(p_i, M(p_i,S))$, each of which should not be used for more than one check. Whenever the resulting storage requirements cannot be met by Alice, the following protocol can be applied. It trades less storage against unproven computational assumptions, since it employs an encryption scheme for the communication between Alice and the hardware system.

**Protocol 4.3 (Remote Check of Hardware Integrity by Tamper Sensitive SHIC Systems - Version II, Saving Storage Requirements)**

**Prerequisites:**

1. The hardware system that needs to be protected has been covered or encapsulated by a tamper sensitive SHIC system $S$ .

2. A (small) number of $m + n$ value pairs $(p_1,M(p_1,S)),...,(p_m,M(p_m,S))$ and $(q_1,M(q_1,S)),...,(q_n,M(q_n,S))$ of the untampered system $S$ have been determined and recorded in a list, which is known to Alice.

**Remote Check of the Hardware System:**

1. Alice reads the parameters $p_1,..., p_m$ and $q_1,..., q_n$ from her list, and sends them to the hardware system. Furthermore, she chooses a number of parameters $r_1,..., r_{m+n}$ uniformly at random such that they are in the set $P_M$ , but not on her list.

2. The hardware system measures $S$ in order to obtain the values $M(p_i,S)$, M $M(q_j,S),M(r_k,S)$ . It uses the values $M(q_j,S)$ in order to derive a cryptographic key $K$ (for example by use of a hash function). It employs $K$ to encrypt the message $M(p_i,S),M(r_k,S)$, and sends the ciphertext to Alice.

3. Alice uses the values $M(q_1, S),..., M(q_n, S)$, which are contained in her list, in order to derive the same key $K$. She decrypts the encrypted message of the hardware system by use of $K$. The decrypted version of the message that Alice received is denoted as $(V_i, W_k)$.

4. Alice checks if

$$V_i = M(p_i, S) \quad \text{for all} \ \ i = 1,...,m,$$

that is, if the values in her list match the values in sent by the hardware system. If the number of mismatches is below a certain threshold, she considers the hardware system as untampered.

5. Alice erases her list, and sets the new list to be $(r_k, W_k)$. Recall here that if the device acted correctly, it holds that $W_k = M(r_k, S)$ for all $k = 1,..., m + n$ , meaning that the new list has the form $(r_k, M(r_k, S))$.

At the end of the protocol, Alice holds a list of the same form as at the beginning of the protocol, meaning that the protocol can be repeated many times without using up Alice's list. This saves her large storage requirements, but in turn makes the protocol dependent on the security of the employed encryption scheme (steps 2 and 3). Furthermore, please note that we assume that the communication between Alice and the hardware system is authenticated. This can be achieved by some standard means, or also by keys that are derived from the system S .

## 5. Interacting SHIC Systems

Another relevant security issue is to prove that two systems $S_1$ and $S_2$, or two parties Alice and Bob, have been at the same physical location or in relatively close proximity at a specific point in time. Usually, such a "proof of colocality" would have to be carried out with regard to a third party Claire. It is assumed that Claire is located remotely, and that she can communicate with the two systems/parties merely by a binary channel. This can make an unambiguous proof difficult, especially if it shall provide a security guarantee even in the case where Alice and Bob cooperate maliciously. A special type of SHIC system, which we call interacting SHIC system, can help us to achieve such guarantees.

### 5.1 Definition

We will start by a definition of interacting SHIC systems.

### Definition 5.1 (Interacting SHIC Systems)

Let $S_1$ and $S_2$ be two SHIC systems with respect to some measurement apparatuses $M_1$ and $M_2$ with sets of measurement parameters $P_{M_1}$ and $P_{M_2}$ . $S_1$ and $S_2$ are called interacting SIMPL systems if the following holds:

1. $S_1$ and $S_2$ can be linked together, or physically coupled, in such a way that they together form a new, joined SHIC system $S^*$ with respect to a measurement apparatus $M^*$ with set of measurement parameters $P_{M^*}$.

2. It is infeasible for an adversary Eve to succeed in the following experiment with a probability greater than $3 / 4$ :

(a) Eve is given a characterization of the sets $P_{M_1}$ and $P_{M_2}$.

(b) Eve is given arbitrary access to the two systems $S_1$ and $S_2$ for a period of several days.

(c) After that, Eve can still access both systems $S_1$ and $S_2$ and is allowed to use any set-up for handling them at will, but must place the two systems at a distance of at least 10 $m$ from each other.

(d) Then, Eve is presented with a measurement parameter $p^*$ that was chosen uniformly at random from the set $P_{M^*}$, and is asked to output a value $V$.

We say that Eve succeeded in the above experiment if

$$V = M(p^*, S).$$

Please note that said probability of $3 / 4$ is taken over the uniformly random choice of $p^* \in P_{M^*}$, and over the random choices or actions that Eve might take in steps 5.1, 5.1 and 5.1.

### 5.2 Realisation

Let us make some comments on the realisation of interacting SHIC systems. Again, certain complex electrical or optical structures seem well suitable, including complex integrated circuits such as cellular non-linear networks, complex non-linear and/or diode networks, complex SRAM or other memory structures with special designs, photonic crystal microcavity arrays, random dispersions of optically active particles in a solid body matrix, etc.

Regarding ICs, it is known that the transient behavior of ICs can be sensitive to processes in the nanosecond range (which applies, for example, trivially to ICs with GHz clock rates). If two suitably designed SHIC systems with such clock rates interact with each other, then the distance between them will sensitively influence their transient behavior. Recall that the information exchange between the systems is limited by the speed of light, which travels only 30 cm within one *ns*, and which requires the significant time interval of 33 *ns=0.03* μ*s* to cover a distance of 10 *m*. Placing the two systems at a distance of 10 *m* will thus influence their transient behavior in a distinctive way.

The two ICs can be coupled in many ways, ranging from optical, electrical, radiowave to magnetic or other data transmission or coupling effects. For example, it might be useful to convert the internal IC signals at the interface between the two SIMPL systems into radiowave or optical signals, in order to get better control of delay or temperature effects, or in order to achieve higher practicality and easier coupling.

### 5.3 Applications

### 5.3.1 Proof of Colocality

As is immanent from their definition, the properties of two interacting SHIC systems $S_1$ and $S_2$ can be used to prove to a third party that $S_1$ and $S_2$ are in the same location. The details are given in the next protocol.

**Protocol 5.2 (Proof of Colocality of two Interacting SHIC Systems)**

**Prerequisites:**

  1. Alice holds an interacting SHIC system $S_1$, and Bob holds an interacting SHIC system $S_2$. They claim that both are in the same location. Claire wants to verify this by virtue of a binary communication between Alice/Bob and herself.

  2. Claire has access to a list of values of the form $(p_i, M(p_i, S^*))$, which describe the behavior of the joined system $S^*$ formed from $S_1$ and $S_2$.

**Proof of Colocality:**

  1. Claire chooses parameters $p_1,..., p_k$ from her list, and sends them to Alice and Bob.

  2. Alice and Bob measure the joined system $S^*$ with these parameters, obtaining values $M(p_1, S^*),..., M(p_k, S^*)$, and send them to Claire.

  3. Claire receives values $V_1,..., V_k$. She checks if

$$V_i = M(p_i, S^*) \quad \text{for all} \quad i = 1, \ldots, k,$$

and believes that the two systems $S_1$ and $S_2$ are in the same location if and only if the number of mismatches is below a certain threshold.

The choice of 10 *m* as the mutual distance is to quite arbitrary; suitable other values could be used, too, and the protocol and the definitional properties of the systems could be adjusted accordingly. Please note that the protocol is secure against two maliciously cooperating parties Alice and Bob. It also requires no secure hardware or software environments on Alice's and Bob's side, nor any secret cryptographic keys stored in their hardware systems.

**Extension.**

By refinement of the described technique, it seems even possible to proof the metrical distance *m* of the two objects to Claire, albeit with certain limitations on precision. This presupposes that Claire had the chance to make some measurements on a coupled system $S^*$ in which the two objects were at a distance of $m$ meters to each other. For example, a sensitivity on the nanosecond range seems possible, which could allow determination of the distance at the order of 30 $cm$ or 1 $m$ .

## 6. Erasable/Rewritable SHIC Systems

An erasable SHIC system is a SHIC system S with the following additional property: There is a special operation that can be performed on S, which "erases" the measurement value $M(p_i, S)$ associated with one particular measurement parameter $p_i$, but without affecting the readability and/or the specific values of other measurement values $M(p_j, S)$, for $p_j \neq p_i$ . In other words, said operation erases the value $M(p_i, S)$ from the system, while leaving all other values $M(p_j, S)$ intact. (More generally, one could also stipulate that the erasure of *several* particular measurement values is possible, while leaving *most* other measurement values intact.)

Such erasable SHIC systems can be realized on the basis of slow read-out memories (like specially constructed crossbar memories and/or Flash memories). In opposition to currently existing PUF-architectures, such memories or memory-like structures consist of many isolated components which can be addressed (and "erased" or "overwritten") individually. In classical PUF architectures, many random subcomponents interact in order to produce the output. This makes them unsuited as erasable or rewritable SHIC systems: The alteration of one system component in the erasure process also affects the value of other measurement values $M(p_j, S)$.

The erasure process itself in erasable SHIC systems can consist, for example, of writing a random or predefined value in the respective part of the structure, or even of "burning" or destroying a part of the structure, thereby making it unreadable.

The potential for erasing specific measurement values leads to a number of security advantages, as can be illustrated by two concrete application examples.

*Example 1:* Suppose that Alice and Bob have exchanged a secret key by use of an erasable SHIC system. Then, the party that is in possession of the system at the end of the protocol can alter/erase the relevant information that they have been extracting from the system (i.e. the measurement values $M(p_i, S)$ from Alice and Bob derived their key). This step is necessary since future holders of the system S should be unable to extract the same values from S - otherwise they would learn Alice's and Bob's secret key.

With standard SHIC systems or PUFs, such an erasure operation is not possible. These systems can hence be used only once, and should not leave Alice's and Bob's hands after the key exchange protocol has been accomplished - in effect, the most practical option would be to destroy them after the key exchange protocol. This leads to obvious security, practicality and cost handicaps.

With erasable SHIC systems, however, the described problems do not occur - they can be reused multiple times, and even by multiple parties, without endangering the security or confidentiality of previous protocol executions.

*Example 2:* In [81], a protocol has been introduced that allows the exchange of a secure session key between a Bank and a Automated Teller Machine (ATM)/a PUF. This session key can subsequently be used for various purposes, including the encryption and authentication of new challenge-response-pairs (CRPs) that have been measured at the ATM, and which are transferred from the ATM to the Bank. This allows the "refreshment" of a list of CRPs stored at the Bank, which is later used in identification protocols between the Bank and the PUF. It thereby reduces the storage requirements imposed on the Bank.

The concrete protocol for the (supposedly) secure establishment of a session key that was given in [81] is shown in Fig. 2.

It illustrates the exchange of a session key K between two parties, in this case the Bank (Party 1) on the one hand and, on the other hand, the Automated Teller Machine (ATM) with a Physical Unclonable Function (PUF) (Party 2). Party 1 at the beginning of the protocol holds an identification number $ID_{PUF}$ associated with the PUF, a counter n', a value m' = x, where x is some randomly chosen value, and a set $\{C_i, W_i, S_i\}$, where the $C_i$ are randoly chosen challenges of the PUF, and the $W_i$ and $S_i$ are helper data and secrets that are extracted from the PUF's respective responses on the respective challenges $C_i$. Party 2 holds the same identification number $ID_{PUF}$ of the PUF, a counter value n, and a specific value $m = h^n(x)$ that arises from the n-fold application of a hash function h to the random value x. The rest of the protocol can be understood from Fig. 2 and [81].

The session key K exchanged in the protocol allows later "refreshment" of the challenge-response-pairs (CRPs) or the set $\{C_i, W_i, S_i\}$ stored at the bank: It can be used to transmit encrypted information between the ATM and the Bank, such as encrypted, newly measured CRPs or encrypted, newly measured tuples $(C_j, W_j, S_j')$. These new CRPs/ tuples $(C_j, W_j, S_j')$ can then be added to the bank's CRP list/to its set $\{C_i, W_i, S_i'\}$.

However, it can be seen relatively easily that the protocol becomes insecure and that the session key of a previous session can be obtained by Eve, provided that she can eavesdrop the communication and, in addition, gets access to the PUF twice (which is a very realistic assumption in many application scenarios).

Eve's attack works as follows: In the first access period, Eve reads out the current state $m = h^n(x)$ from the card. (Please note that if we were to assume that such binary values could be stored safely on the bank card, then we would not need PUFs to implement a secure identification protocol). She furthermore eavesdrops $ID_{PUF}$ from the communication between the ATM and the bank, or determines $ID_{PUF}$ by reading it out during her access to the card. This implies that Eve can derive $K_1 = h(m, ID_{PUF})$, since h must be assumed to be publicly known.

Later, when the bank sends $E\&MAC_{K1'}(\alpha, C, W, \beta)$, Eve can break the encryption, since she knows $K_1 = K_1'$. This means that she learns C.

(Note that if multiple encrypted&MACed values $E\&MAC_{K2'}(\alpha, C_2, W, \beta)$, $E\&MAC_{K3'}(\alpha, C_3, W, \beta)$, $E\&MAC_{K4'}(\alpha, C_4, W, \beta)$, ... were sent, Eve could still decrypt all of them, since she can obtain the keys $K_2'$, $K_3'$, ... by successive computation of the values $h^n(x)$, $h^{n+1}(x)$, $h^{n+2}(x)$, etc. This means that she can break the encryptions $E\&MAC_{K2'}(\alpha, C_2, W, \beta)$, $E\&MAC_{K3'}(\alpha, C_3, W, \beta)$, $E\&MAC_{K4'}(\alpha, C_4, W, \beta)$ and may obtain $C_2, C_3, C_4, ...$ ).

In her second access period, Eve can measure the PUF with the challenge C (and all other challenges $C_2$, $C_3$, $C_4$, if applicable). She can obtain S from the measured responses, and can derive the session key K.

This allows Eve, among other things, to recover any information that has been encrypted with the session key K and transferred between the ATM and the Bank. If K was used to encrypt CRPs or tuples $(C_j, W_j, S_j')$, Eve learns the CRPs/the tuples. Since these CRPs/tuples are used by the bank in future identification protocols with ATMs/the PUF, this enables Eve to impersonate the PUF. She can successfully fake a bank card and log in at ATMs.

If an erasable SHIC system S is used instead of a standard PUF in the protocol, the described security gap is avoided. Once the session key K has been established, the ATM can erase the measurement values $M(p_i, S)$ of the SHIC system that were used to derive K. Eve hence is unable to determine these measurement values in her second period of access, and cannot derive K herself. All previously exchanged session keys remain secure, too.

In particular, if some session keys have been used to encrypt and transmit new CRPs or new tuples $\{C_i, W_i, S_i\}$ from the ATM to the bank, then these CRPs or tuples remain secure and unknown to Eve.

Erasable SHIC systems therefore allow the first session key exchange protocol that remains secure if an adversary has access to the PUF twice, in particular if one access phase lies after the execution of the key exchange protocol. They hence allow secure identification applications with CRP refreshment, and significantly lowered storage requirement on the central server holding the CRP list, leading to obvious cost advantages.

Another important advantage of erasable/rewritable SHIC systems is the following. Let us assume that we can set arbitrary values as system responses (or as measurement values) for certain measurement parameters in our erasable SHIC system. Then, a SHIC system can be tuned to store arbitrary information in the measurement values $M(p_1, S), ..., M(p_k, S)$ for a certain set $L = \{p_1, ..., p_k\}$ of measurement parameters.

This information can be set to be a certain public key $PK_A$ that is associated with a certain party A. In other words, the SHIC system "hides" a public key that can be derived from the system if the set L is known. In opposition to that, current PUFs can only store random bit sequences, no predetermined values.

Therefore, a certain public key today is often stored in the following way in a system that comprises a PUF: A key K is derived from the responses of the PUF; the public key is encrypted (for example by the one-time pad) with K; and the encrypted public key is is stored in a non-volatile manner in the system. The downside is that this requires non-volatile memory cells in the system, which can be expensive. Furthermore, these cells can be identified relatively easily, allowing read-out of the encrypted key. The method proposed above can avoid this problem.

## 7. Secure SHIC Sensors and Authentication of Sensor Data

Consider the following situation between two cryptographic players Alice and Bob: Alice has a sensor S with her, which makes a recording of some parameter. Examples may include a temperature sensor, a pressure sensor, a humidity sensor, a camera, an audio-sensor, a fingerprint sensor, etc. Now, imagine that Alice sends the (digital) data supposedly recorded by the sensor to Bob, and claims that the data is authentic.

Which possibilities does Bob have to check the authenticity of the sensor data? In principle, Alice could have replaced the real sensor data by any other value of her choice; she could claim a temperature of 30°C instead of the real 20°C, or send a false fingerprint, or transfer a manipulated image. The standard security solution to this problem would be that Bob prepares a tamper proof sensor, which is encapsulated in a secure environment. This sensor would could contain a secret key known only to the sensor and Bob. Bob hands over that specially prepared sensor to Alice. Whenever the sensor makes a recording, it authenticates the data by its key, and sends it to Bob (or Alice passes it on to Bob).

The security perimeter required by this setting and the necessary secrecy of the key in the sensor makes the solution non-optimal in a number of scenarios, in particular also in terms of size and cost. An alternative option is the use of SHIC Sensors, as put forward in the next definition and protocol.

**Definition 7.1 (SHIC Sensors)**

Let *S* be a physical system, and let *M* be a measurement apparatus. *S* is called a SHIC sensor with respect to a physical quantity *Q* and with respect to *M* if the following holds:

1. It is difficult to physically reproduce or clone *S*.

2. The behavior of *S* under measurement by *M* does not only depend on the (numerical) measurement parameter $p_i$ and the inner structure of S, but also on a value *q* of a physical quantity *Q* that describes some aspect of the environment of *S* and/or *M*.
In the sequel, we will denote the measurement value/response of S under the environmental quantity *q* and under measurement by *M* with measurement parameter $p_i$ as

$$M(p_i, q, S).$$

3. It is practically infeasible for any adversary Eve to succeed in the following experiment with a probability greater than 3 / 4 :

a. Eve is given the system S and the measurement apparatus *M* for a time period *T* of up to several days, weeks or months. She can execute any procedure or measurement she likes on the system *S* during that period. She can expose it to any environmental condition *q* from the set *Q*. In particular, she can measure as many values $M(p_i, q, S)$ as possible during the period *T*. After the period, the system *S* is taken away from Eve.

b. Then, Eve is given a measurement parameter $p \in P_M$ that was chosen uniformly at random from $P_M$, and an environmental quantity *q* that was chosen uniformly at random from the set *Q*, and is asked to produce an output *V* .

c. The experiment is called successful if

$$V = M(p, q, S).$$

Thereby the probability is taken over the random choice of the measurement parameter and the random choices or procedures that Eve employed during steps 1 and 2.

Please note that *M* may or may not be integrated into *S*.
In other words, a SHIC sensor produces an individual, hard-to-predict output that depends both on its environment and the applied measurement parameter. It must be hard to predict its output without possessing the system and actually exposing it to the quantity q. This is in strong contrast to standard SHIC systems, which are most often expected to be independent of environmental features such as temperature, etc.
Said feature can be applied for a proof that some sensor data is authentic.

**Protocol 7.2: Proof of Authenticity of Sensor Data**

**Prerequisites:**

1. Alice holds a SHIC sensor *S*.
2. Bob has a list of pairs of environmental conditions, measurement parameters and corresponding measurement values of *S*, i.e. a list of the form

$$(p_i, q_i, M(p_i, q_i, S)),$$

where the $p_i$ are from the set $P_M$ and the $q_i$ are from the set $Q$.

This list may have been determined during some initialization phase, in which Bob had access to the sensor $S$.

**Protocol:**

1. Alice claims that the sensor $S$ is exposed to the the environmental quantity $q_0$, and sends $q_0$ to Bob.

2. Bob searches his list for pairs of the form $(p_j, q_0, M(p_j, q_0, S))$. He selects some of these pairs at random (a random subset $(p_k, q_0, M(p_k, q_0, S))$, say), and sends the values $p_k$ to Alice.

3. Alice responds with a number of values $V_k$.

4. Bob accepts the sensor data $q_0$ as authentic if and only if the number of indices $k$ for which $V_k = M(p_k, q_0, S)$ is above a certain threshold.

Please note that this protocol can be repeated many times for different quantities $q_0$, for example if the sensor is a camera that makes a sequence of recordings.

The advantages of the use of SHIC sensors instead of security perimiters are obvious: It may lead to smaller, more secure and, in particular, keyless systems. It can also withstand very long adversarial access times of Eve and Alice.

### 8. Physical realization of SHIC Systems

The previous sections described the concept of a SHIC system (and of several variants of SHIC systems), and gave a number of applications of these systems. They only sketched, however, how these systems can be practically implemented. In the sections 7 to 24, various embodiments of SHIC systems will now be described and discussed in greater detail. The current section 7 gives some general thoughts and some introductory discussion; the upcoming sections will provide various implementation with an increasing level of detail.

### 8.1 Introduction

In principle one has to distinguish between two classes of SHIC systems: So-termed *precision measurement SHIC systems* and *combinatorial SHIC systems.* The first class of SHIC systems realizes the large number of possible read-out parameters by a measurement apparatus, which applies precision measurements to extract information from the object. One example for this approach is the optical implementation of a Physical One-Way Function given in [2]. Typically, there is only a small number of independent measurement parameters in this approach, each of which can be tuned with high precision and a very small stepwidth. Some consideration shows that this approach is expensive and requires the use of an external measurement device, which is separate from the SHIC systems and typically exceeds them significantly in terms of size and cost. Any such measurement device is used to measure more than one PUF. The exact interaction of the PUF with the device (for example the high resolution local irradiation of the object with a laser beam) therefore is a source of measurement errors and instability.

Contrary to that, *combinatorial SHIC systems* realize a large number of possible measurement parameters through combinatorial complexity. Typically, measurement schemes applied to combinatorial SHIC systems are characterized by a large number of independent parameters, each of which can only take a small number of different values. Take as an example a situation where there are 100 different measurement parameters, each of which can independently take one of 5 values. This results in an overall number of $5^{100}$ possible different measurement vectors. As no comparably delicate "fine tuning" is needed for combinatorial SHIC systems, the read-out mechanism can be expected to be less demanding and may be integrated into the object itself. This has the advantage that the combination of the object and read-out mechanism does not require any moving part, can be protected against external influences, which significantly increases the stability and repeatability of the measurement outcomes in different measurements.

A further advantage of closely intertwining the read-out mechanism and the object is that both entities cannot be separated physically any more without noticeably altering either one. The possible peculiarities of the integrated read-out may even influence the response of the combined system. That means that any approach to circumvent the established read-out mechanism will deliver different results: Either because it will destroy the SHIC system or the read-out mechanism, or because it does not share the peculiarities of the original integrated read-out.

An additional benefit of the integrated read-out mechanism is a built-in, "intrinsic" delay between subsequent read-out events. This delay can either be realized by a peripheral general clock mechanism or by designing the SHIC system itself in such a way that the system cannot be read out in arbitrarily small read-out intervals, for example because it needs a relatively long time interval in order to reach a stable equilibrium.

## 8.2 Examples of SHIC systems

One possible embodiment of combinatorial SHIC systems consists of a random distribution of electrically active junctions in form of, for example, a thin film integrated electronic device. Such a system would contain information in the form individual current-voltage characteristics of a large number of interacting electronic junctions. A preferred property of such junctions is a strongly non-linear current-voltage behavior such as for a p-n-diode or a Schottky diode. The complexity of the system can be scaled by the amount of junctions realized in the device matrix. Since purely electrical signals are read out, the read-out mechanism can be based on the well-established multiplex addressing used in active matrix devices.

For example, take a matrix with 1000 by 1000 individual junctions, each of which has its own characteristic I-V-curve, which may depend also on the voltage applied to neighboring junctions. In a real situation a certain row of the matrix is biased with a fixed voltage which can take N different preset values. Then, simultaneously the resulting current in M selected columns is detected. At the same time, the same situation is generated at L selected different rows, each of which is biased with one of the N different voltages. A built in delay mechanism can be realized advantageously in this particular example by providing each junction with a suitable parallel capacitor and requiring that a valid measurement result is stable in time. Further, the delay before a stable measurement value is reached forces any adversary to wait for this period, too.

In addition all of the above properties of a given junction can be influenced significantly by external illumination, external magnetic or electrical fields and/or temperature. A further preferred property of the junctions consists in the fact that their behavior is mutually dependent on the behavior of one or more other junctions. For the present application it is of particular importance that the electrical properties of a given junction can be prepared during fabrication in a sufficiently random fashion, so that a sufficiently large array of junctions will be prohibitively difficult to clone or reproduce.

On the other hand, the unique properties of the described system can be read out electrically in a rather simple, reliable, inexpensive and time efficient manner, as is expected from a SHIC system.

## 8.3 Physical Principles

The physical principle behind the system as described above lies in the strong dependence of miniaturized electric semiconductor heterojunctions on physical parameters such as doping, temperature, area, defects, interface states and the applied bias. The basic physical quantity to be detected is the current across a given junction for a particular set of bias voltages applied to that junction or to other junctions interacting with that given junction. Contrary to the usual aim of integrated circuit design to produce reproducible devices, which exhibit minimized manufacturing fluctuations in their electronic behavior, the present system of junctions can be produced in such a way as to purposely increase the device to device fluctuations to a level that makes the inter device difference conveniently measurable. Already in standard production processes, the building blocks of an integrated circuit can show several percent (10%-20%) device to device variations upon fabrication.

All of the above properties can be detected with standard electrical conductivity measurements, which are easily achieved with high accuracy and high speed by conventional current voltage profilers.

## 8.4 Examples of Realization and Read-Out Mechanisms

## Example

One concrete implementation of the earlier, general description, which can be realized with inexpensive starting material and which would hence be suitable for mass production, consists of a matrix of silicon-based p-n- or Schottky diodes produced on a glass substrate by laterally inhomogeneous deposition techniques. This inhomogeneity is important to guarantee the desired significant junction to junction variations. Such a suitable deposition technique is the laser induced, thermal or metal catalyzed crystallization of thin amorphous or nanocrystalline precursor films of silicon, silicon-germanium, etc. Here the statistical nature of nucleation and growth of individual crystallites is of primary importance for the complexity and/or the unique properties of the system. With the help of suitable metal electrode arrays of desired area and pitch electrical contact can be made to individual or multiple crystallites in the form of a sandwich geometry. The electrical contact can either be Ohmic or of Schottky type, depending on the electrode metals and/or the doping properties of the thin semiconductor film. Moreover, in general non-linear interactions between neighboring junctions can be realized.

**Read-Out Mechanism**

A suitable read-out mechanism consists of the following protocol:

- Choosing at least two (preferentially as many as possible) contact pairs, where a contact pair means two metal contacts allowing the addressing of a particular junction.
- Application of a given voltage or multiple voltages to the input lines of one or more contact pairs, and determination of the corresponding currents in the output lines.
- Variation of the voltage(s) in order to utilize non-linear crosstalk between interacting contact pairs and/or the non-linear current-voltage-characteristics of a given contact pair.
- Further, external parameters such as temperature, illumination, time-varying vs. continuous voltages etc. can be introduced to further increase the accessible parameter space and the complexity of the measurement.

**Read-Out Aspects**

A general advantage of electrically addressable SHIC system is the ease of the read-out procedure, which can occur either in direct electrical contact or remotely via electromagnetic waves. In both cases it is possible to shield them from the external environment by Faraday cage-like constructions containing both the SHIC and the read-out system. This ensures that the detected signal indeed originates from the SHIC system, and not from an external fraudster equipped with large computing power for simulating or emulating the behaviour of the original system. For remotely readable systems even triangulation of the position of the object would be possible with a suitable antenna array to again exclude external mimic attacks. Another advantage of some of the above examples is that the response can be probed over a wide range in frequency, thus further enhancing the uniqueness and the resistance of the objects against counterfeiting.

**9. Circuit-based implementations: General overview**

We will now deal with increasing detail with various implementations for SHIC systems in sections 10 to 24, starting with an overview of circuit based implementations in this section 9.

**9.1 Origin of unique behavior and of high disorder/information content in electronic circuits**

The unique physical features of an electronic device can be given by:

- Unique current -- voltage characteristics (resistance, nonlinearity, etc.)

- Threshold voltages, amplification, transconductance/input impedance, serial resistance of MOS transistors. In nanoscale MOS devices even the position of individual atoms in the channel can be important [3]

- Absolute and relative values of resistances

- Nonlinearities of semiconductor/semiconductor or semiconductor/metal junctions (diodes, double-barrier type nonlinearities, tunneling diode characteristics)

- Unique time-dependent behavior of devices: Device and interconnect capacitances/inductances/resistances lead to unique transient behavior

- Materials with special characteristics added to the circuit elements. Magnetic nanoparticles, magnetic films can provide coupled nonlinear inductances and nonlinear dielectrics result in nonlinear capacitances

- An unique optical system coupled to photodiodes / photodetectors

The amount of structural information contained in the structure can be estimated from the number of equivalent circuit parameters needed for device description. It should be a few bytes per device instance/component. Since the number of devices in a modem integrated circuit can reach billions, this grants a very high structural information content, as desirable for SHIC systems.

## 9.2 Outline of the proposed systems

To our knowledge, we are the first who propose the following types of physical systems as SHIC systems:

- High capacity memories (esp. crossbar structures, but also transistor based memories like Flash and TFT-structures) with high information content and/or limited read-out speed. In a particular embodiment of this idea, the intrinsically slow access time comes from the inherent circuit construction (large time constants, RC constants) and cannot be sped up by an attacker.

- Nonlinear, inhomogeneous, conductive media which are accessed by electrical contacts at several points. One example is a medium that contains conducting wires in a complex and unique three dimensional arrangement. Such structures will typically be measured by a so-called "combinatorial" excitation scheme or read out (see above, for example section 7).

- A regular, cellular structure of active, interconnected circuit elements which produce a characteristic voltage/current pattern by a transient process. Such structures may incorporate circuit constructions for temperature correction and voltage stabilization, constructed in a similar fashion as for CNN's (Cellular Nonlinear Networks).

- Circuits incorporating particles or inhomogeneous films made of nonlinear dielectrics, or (nonlinear) magnetic materials, which are measured by an integrated sensor array by DC or AC techniques.

- Variants of the above described circuits, which are accessed by electromagnetic fields and can be used as secure RFIDs

- Hybrid electrical / optical SHIC systems, where the structural information is carried by a optical scattering media and which is accessed electrically via an array of lasers / LEDs and photodetectors and where the nonlinearity of the detector and light emitting elements and / or the optical media can result in combinatorial complexity.

## 9.3 Security considerations

The security properties of the proposed SHIC systems, on the one hand, stem from their high internal information content or internal disorder. These make it hard to characterize the systems completely. On the other hand, protection of "obfuscation" of the internal, structural information of the SHIC system against full read out and against reverse engineering is also provided by:

- The intrinsically limited read out speed and/or

- The intrinsically slow transient pattern formation in coupled nonlinear elements and/or

- The complexity of dynamic pattern formation phenomena, which makes reconstruction of circuit parameters formidably difficult and/or

- The complexity of the circuit interconnection graph and/or

- The difficulty of disassembling a monolithic circuit and measure individual device characteristics and/or

- The complex internal behavior/model of the system.

It is important to note that for linear circuits, any linear combination of excitation vectors results in the linear combination of the output vectors (with the same coefficients as the input excitation), and substantially complex input/ output behavior cannot appear. Circuit SHIC systems are hence preferrably nonlinear, or they should have so large number of inputs and outputs that even a linear system can achieve the required high input/output complexity.

## 9.4 Stability of non-linear circuits

Active circuit operation are influenced in practice by temperature variations and power fluctuations. Nevertheless, the stability of the read out values of the SHIC system is important for their various applications. Some error correction can be achieved by software measures such as error correcting codes. However, we also propose techniques drawn from analog circuit design to stabilize the behaviour of the IC against said effects (temperature/voltage variations). Degradation (coming from electromigration/charge trapping, etc) is a less significant problem, but will be accounted for, too.

**9.5 Combinatorial SHIC systems**

The first SHIC systems or "Physical One-Way Functions", as called then, were introduced and discussed in [2]. Their idea was to measure a complex physical system (a complex scattering token) by a high precision apparatus, which can interrogate the structure under a huge number of different measurement conditions (different laser angles and laser points of incidence in [2]). Since this method requires ultra-high precision positioning in order to achieve stability, plus an external, expensive measurement device, this method has strong practical disadvantages.

Another approach, which we will pursue, is to use "combinatorial" SHIC systems and a "combinatorial" way of read out that was explained already in section 7. Electrical circuits, in general, seem to be especially well-suited as combinatorial SHIC systems, since the measured physical system and its electrical read-out circuitry can be integrated very well. This method has the further security advantage that the critical internal analog signals (current and voltage levels), which determine the external circuit behaviour, are not visible or difficult to obtain from the outside.

**10. Memories with high information content and/or slow read-out**

**10.1 General Description**

We propose memory circuits with special designs as electrical SHIC systems. In particular, we suggest an N-bit memory characterized by the following properties as SHIC system:

- The read-out speed is *limited* by the design of the circuit to k bits/second, for a relatively small value of k. There are several ways to achieve said limitation of the read-out speed: For example, the memory can be driven by an intentionally slow access module. This possibility achieves medium security, since such a module could potentially be removed or circumvented by a very well equipped faker. Another, more secure possibility is that the read-out speed of the memory is limited intrinsically and directly by the circuit construction of the memory. For example, the RC constants of the memory could be designed in such a fashion that only slow read-out rates are achievable. Higher read-out frequencies that are artificially imposed upon the memory by a faker may burn the wires or otherwise destroy the circuitry, rendering the memory unusable. Another possibility is to use semiconductor traps at the circuit junctions, where the traps take sufficiently long time to fill / empty with charge carriers so the read-out current stabilizes only after a longer time.
- The time required for complete circuit characterization ($T_{full}$ = N/k seconds) exceeds the maximal time frame for which an adversary will ever have (unnoticed) direct or indirect access to the SHIC system. Practically, $T_{full}$ can be on the order of several days/weeks/years.

Reasonable numbers are, for example, N = $10^{10}$ bits, k = 100 bits/second, resulting in $T_{full}$ = $10^8$ seconds. This means that the corresponding SHIC system would be secure for more than three years *of continuous adversarial access*, quite a considerable time frame. Please note that the effective security lifetime of the SHIC system must not be mixed up with the time required for full characterization under continuous access. The former typically is much longer than the continuous access time of an adversary.

**10.2 One Possible Implementation: Crossbar Memories**

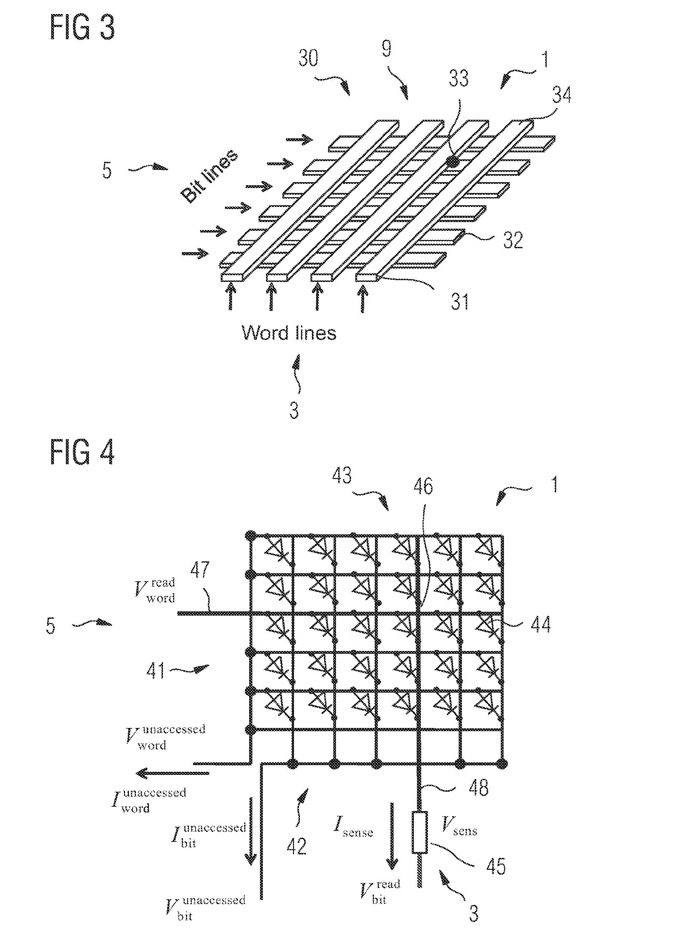

A possible high-capacity nanoscale memory meeting the above properties for a SHIC system is a suitably designed passive crossbar structure 30, shown in Figure 3, that shows the construction of a resistor/diode crossbar structure.

In such a structure, the information contained in an intermediate layer is accessed by vertically running wires and horizontally running wires (i.e. bit lines 32 and word lines 31). The information can be carried by:

- The presence or absence of an interconnection (such as a metal particle 33) at the junction. The maximum (random) information content is achieved when the junctions are connected independently of each other and with a 50% probability. These method extracts one bit information per crossing.

- The entire I(V) characteristic of acrossbar junction 34, which may carry several bits of information (e.g. due to a multilevel-storage like technique).

- The time-dependent, transient behavior of the junction.

There is also a diode at each crossing, which enables the addressing of the junction, by minimizing leakage currents through the unbiased crossings [7],[8].

The circuit schematics and the biasing of a crossbar memory 40 are illustrated in Figure 4. Figure 4 shows a crossbar memory 40 with word lines 41 and bit lines 42. At junctions 43, diode-type elements 44 are present. In this example architecture, a sense resistor 45 of resistance $R_{sens}$ is used in the bit lines 42. In this particular example, a junction 46 at the crossing of a particular accessed word line 47 and an accessed bit line 48 is being accessed. Thus, only the sense resistor 45 of the accessed bit line 48 is depicted in Figure 4.

One of the reasons why chossing crossbar memories is that they can be built in large, monolithic blocks (as further discussed in section 11). This helps us in achieving the slow read-out rates mentioned in the next chapter: Were the memory built from many smaller blocks with slow read-out rates, they could be read out in parallel in order to increase the effective read-out rate of the whole structure.

### 10.2.1 Slow Read-Out Speed

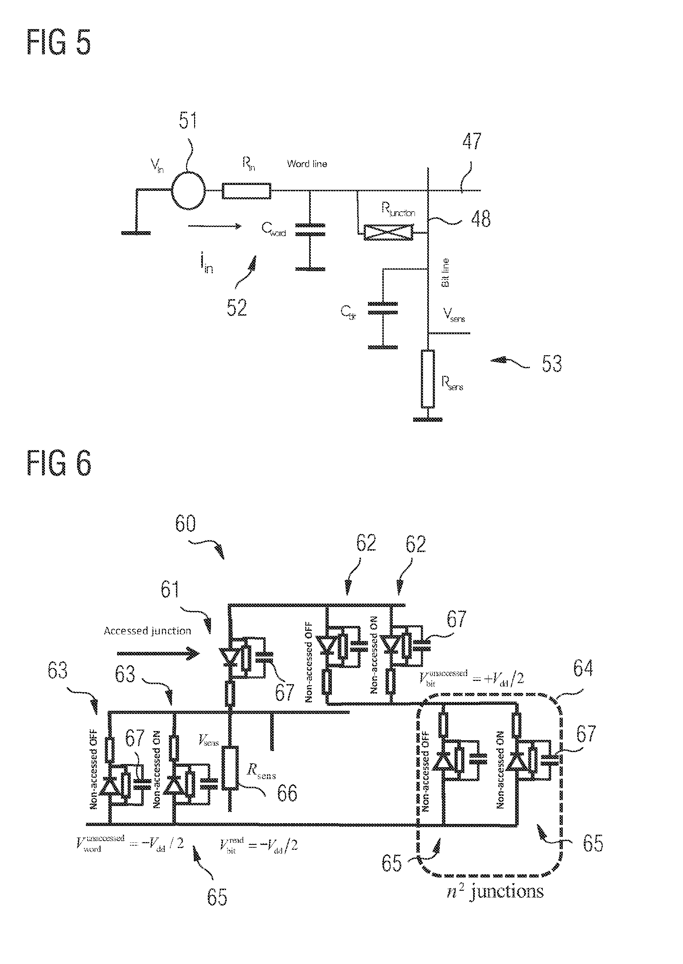

The internal RC time constants of the crossbar structure and the limited current-carrying capability ($i_{\max}^{in}$) of the bit / word lines delimit the read-out rate of the circuit. Figure 5 shows a read-out equivalent circuit 50 in a simplified form. The equivalent circuit 50 for the readout process of the crossbar memory 40 comprises the input voltage source 51 that is connected in series with a RC low-pass filter 52 comprising the input resistance $R_{in}$ and the net capacitance $C_{word}$ of the accessed word line 47, a junctional instance $R_{junction}$ and another RC element 53 comprising the sense resistance $R_{sens}$ and a capacitance $C_{bit}$ of the accessed bitline 48.

Under the assuption $R_{in} \sim R_{sens} \sim 10^6 \ \Omega$, $R_{junction} \sim 10^7 \Omega$ and assuming further that $C_{word} \sim C_{bit} \sim 10^5 \times 10^{-13}$ $F = 10^{-8}$ $F$, the time constante determining the speed of the readout process is $\tau = R_{in}C_{word} \approx 10^{-2}$ $s$. With this read-out speed even a larger size (10 Gbit) circuit would take three years to completely read-out.

If the input voltage $V_{in}$ is in the range of 10 Volt, the maximum of the current through the accessed wordline 47 and the accessed bitline 48 assumes currents obvious smaller than $10^{-5}$ A. If the attacker attempts to read out data at a higher rate, he should apply larger currents to charge up the bit / word lines faster. The memory is designed in such a way that this high current would burn or degrade the wire and destroy the memory.

### 10.2.2 Inducing a High Random Information Content in a Cross Bar Memory

How can the necessary high information content be generated in the intermediate layer between the bit and word lines? A random electrical medium between the two cross bar layers (with inhomogeneities ideally on the 10 nm size scale or below, but possibly also on much larger lengthscales) can be realized, for example, by:

- Phase change materials or light-sensitive chemicals (used in conventional photography), which are illuminated by a speckle pattern or series of unaligned speckle patterns, practically resulting in a randomly conducting, unique media,

- An inhomogenously doped semiconductor material, for example where dopant atoms are highly concentrated along crystalline boundaries and where these crystalline boundaries form a random network,

- Metal particles/fullerenes/nanotubes embedded in a polymer media,

- An aggregate of differently doped nanowires/nanoparticles, forming a layer on top of the diodes/word lines.

- A very thin insulating layer (acting as a tunnel barrier) with a non-uniform thickness in the size domain of the crossbar junction area. This layer can provide a tunneling current which is different from junction to junction.

- (Random) crystallization processes (see also our detailed descrption in the upcoming section 10)

### 10.2.3 Security assessment

The security of a SHIC system is broken if the attacker manages to read-out all the contents of the system within a short time frame. He could attempt this, for example, by one of the following approaches:

1. Tampering with the silicon-based read-out circuitry, and use a lower input resistance ($R_{in}$)

2. Reading out many bits in parallel

3. Cutting the circuit into pieces and reading them separately and parallel in time.

The described crossbar memory provides protection against these scenarios in the following way:

1. The value of the input resistance cannot be decreased, because it would result in high currents, which destroy the corresponding bit/word line. The read-out time constants are hence fixed by the circuit construction.

2. Parallel read-out would result in high currents, and therefore is not possible.

3. The circuit is fabricated at state of the art lithographic technology and resolution. Contacting internal nodes or partitioning the circuit without seriously damaging it is formidably difficult.

### 10.2.4 Crossbar implementation aspects

Due to their simplicity and the wealth of potential applications, crossbar memories are widely studied using different implementations/material systems.

- Crossbar memories made from standard semiconductor material systems (silicon, poly-Si) and oxide-based switching layers. Such devices offer higher density and cheaper technology than flash memories, at the price of a slower operation and no reprogrammability [63],[64].

- Crossbar memories made with a molecular switching element were proposed to achieve true nanometer-scale storage. This technology is still in its infancy [65].

- Crossbar memories are proposed to build from semiconductors, which allow low-temperature processing and thus higher integration densities (such as ZnO) [61].

- It is possible to implement the junctions with amorphous silicon suboxides [66]. These have a high rectification ratio, cheap fabrication technology and the serial resistance of the diodes changes in wide ranges depending on the fabrication conditions, history of applied currents, etc. If the current-voltage characteristic of the diodes is sufficiently random, it can substitute the layer with random particles.

The crossbar memory can be fabricated in a Back end of the Line (BEOL) process on top of a conventional silicon chip (the decoder/read-out circuitry). It can also provide a protective coating to the underlying chip layer, similarly to the "Read-Proof Memory" introduced in [67] (for details, see Section 26).

To increase the parasitic coupling capacitances between the wires, the entire crossbar structure can be surrounded by a highly polarizable medium (such as an electrolyte) or capacitive trenches can be fabricated underneath the wires.

### 10.2.5 Crossbar Summary

A high-capacity, hard-wired memory (passive crossbar), for which a random (maximum entropy) memory content can be accessed very slowly and the access time cannot be sped up without destroying the integrity of the memory and the information contained therein. The information content is very high, and well defined by the known number of junctions. Model building or reverse engnieering is prevented by time constraints. Contacting inner nodes of the memory to parallelize the read-out is a possible attack scenario, but highly risky, requires considerable effort and high-level nanofabrication capacity from the attacker. Error-correction algorithms are straightforward. Furthermore, if merely one bit of information is derived from each junction, error correction is further simplified.

This embodiment can be produced at reasonably low costs, especially if crossbar memories become widespread for other applications. A silicon-based multiplexer/decoder circuitry is required.

### 10.3 Alternative Implementations

We discussed two possibilities to realize SHIC systems with very high, random information content and slow read out speeds: Memories with slow access modules and Crossbar Structures with special RC constants. There are, of course, further variants of this idea.

One of them is to use transistor-based structures such as a network of thin film transistors (TFTs). This possibility is described in section 11. Another option are flash memory-like devices, where the information content of the cells could be given by random manufacturing variations, for example. The very high information density of flash memories, combined with purposely high capacitances and / or long access paths (similar to the ones in NAND flash) can help them to fulfil the necessary security requirements.

A further possibility is to add slow interface or oxide traps to the SHIC systems. This possibility is discussed in section 12.

## 11. Detailed Description of Crossbar Memories Used as SHIC Systems

We will now provide a fully detailed description of the use of crossbar memories as SHIC systems, and present detailed simulations as well as real measurement data from a first prototype. Throughout the detailed description, we will use the following values as a theoretical design target for the crossbar memory: A storage capacity of $N = 10^{10}$ bits and a read-out speed of around 100 bits per second. This results in a time $T_{full}$ required for full characterization of the information content of the memory (presuming uninterrupted, continuous access to it) of around $T_{full} = 10^8$ seconds (or roughly 3 years). Certainly many other meaningful and practically effective values are conceivable.

### 11.1 General Introduction and Overview

The sketch of a crossbar structure has been shown in Figure 3. A particular bit at an intersection 34 of the horizontal and vertical lines is addressed by activating the corresponding bit and word lines and measurement the current flowing through the crossing. Usually each junction is a multilayered structure showing nonlinear characteristics. We assume that only the storage array is implemented by crossbar technology and the read-out apparatus is a standard silicon-based circuit [10010].

A crossbar memory used as a SHIC System (a so-called "SHIC-crossbar" or "SHIC-memory") is different from a standard crossbar memory in the following aspects:

- The SHIC-crossbar does not need to be writable. Through all its lifetime, it carries a 'hard wired' information content, defined by the storage layer, which is unique and random for each instance of the fabricated memory. The storage layer is an inhomogeneously conducting material, with resistance changing on the size scale of $d$ (where ideally, but not necessarily, $d < 100$ nm).

- The space between the bit and word lines is filled with a high-k (high dielectric constant) material, which creates large interwire and junction capacitances.

- The entire SHIC-memory is built as one monolithic block, where the number of bit and word lines being around $n = \sqrt{N} \approx 10^5$. This prevents the attacker from accelerating the read-out by reading multiple memory banks in parallel.

Note that the most unusual character of a SHIC-crossbar is the last of the above items: Large memory circuits are usually realized from multiple banks in order to reduce access time, improve noise margin and yield. We demonstrate in the next section that reliable read-out in such large banks is nevertheless possible.

### 11.2 Accessing information in large, monolithic crossbar layers

The circuit schematics of a biased crossbar memory 40 has been illustrated in Figure 4.

For simplicity, all junctions 43 of the circuit shown in Figure 4 are drawn by the same diode symbol, but their $I(V)$ characteristics are obviously different, carrying the random structural information. In addition, there is a sense resistor 45 connected to the accessed bit line 48 which can have a low or a higher value, depending on whether current or voltage measurement is done by the sense amplifier connected to the accessed bit line 48.

We assume that the accessed word line 47 and bit lines 48 are biased on $V_{bit}^{read}$ and $V_{word}^{read}$ voltage, respectively. The unaccessed wires are on a fixed $V_{bit}^{unaccessed}$ and $V_{bit}^{unaccessed}$ voltage.

Ignoring the serial resistance of the interconnetcing wires, an equivalent circuit 60 of the crossbar memory 40 can be constructed, which will be explained in detail with reference to Figure 6. In particular, we consider the read-out of a bit stored in an interrogated junction 61. To interrogate a selected bit, we apply the bias scheme of Figure 6, that illustrates the read-out of bit stored in an interrogated junction 61. $V_{dd}$ is the power supply.

Assuming that the series resistances of the wires are negligible, one can construct a simple equivalent circuit model of the crossbar memory 40, which is shown in Figure 6. Here an equivalent ('average') lumped circuit element substitutes the junctions connecting to the accessed word lines 62 , accessed bit line 63 and the unaccessed rest 64 of the array with the unaccessed junctions 65. Junctions connected to the accessed bit line 63 can directly interfere by the read-out process, while others just add to the net current inflow (dissipation) of the structure. The interrogated junction 61 is connected to the sense resistor 66. The largest number of unaccessed junctions 65 are connected to the unselected bit and word lines.

To interrogate the selected bit in the crossbar array, we apply the bias scheme of Figure 6. Most of the unaccessed junctions $((n - 1) \cdot (n - 1)$ of them) are reverse-biased $(V_{word}^{unaccessed} = - V_{dd}/2,\ V_{bit}^{unaccessed} = V_{dd}/2)$, minimizing the magnitude of parasitic currents. The interrogated junction is the only forward biased in the array $(V_{word}^{read} = V_{dd}/2,\ V_{bit}^{read} = - V_{dd}/2)$. Unaccessed junctions connecting to the accessed bit and word lines get zero bias.

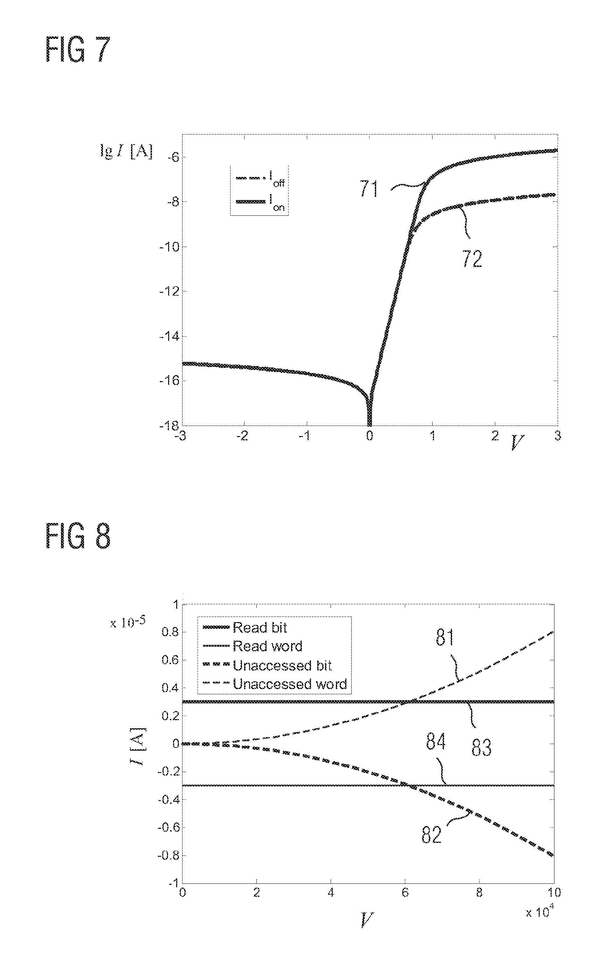

As an illustration, Figure 7 shows a typical diode $I(V)$ curve, with a high and low series resistance, representing the binary information carried by the junction. More specifically, it shows the current-voltage characteristics of a diode-backed junction, using $I_s = 10^{-17}$ A, $R_p = 5 \cdot 10^{15}\ \Omega$, an ideality factor of 1.5 and serial resistance of $R_s = 1$ and $R_s = 100$ MΩ for the on and off state of the junction, respectively.

Figure 7 exemplifies a possible diode (junction) characteristic. The stored information is given by the serial resistance of this diode (i.e. the magnitude of the current at high forward bias). The parameters of the diode we used in the simulations are saturation current $I_s = 10^{-17}$ A, $R_p = 5 \cdot 10^{15}\ \Omega$, an ideality factor of 1.5 and serial resistance of $R_s$ = 1 (curve 72) and $R_s$ = 100 MΩ for the on and off state of the junction, (curve 71). Curve 71 may be associated with a binary "1" and curve 72 with a binary "0" of stored information, or vice versa.

Using these characteristics, Figure 8 shows the sense current and the parasitic currents as a function of array size. The current inflow at different array sizes is simulated by SPICE at $V_{dd}$ = 2.0$V$. For about $n \approx 6 \cdot 10^4$ array sizes, the net current flowing through the reverse biased (unaccessed) junctions (curve 81 and curve 82) starts to exceed the 'useful' current flowing through the accessed bit and word line (curve 83 and curve 84). This causes unnecessary power dissipation, but the parasitic current on a single bit / word line (on average ($I/n$)) still remains small. Noise margin is high, as most of the parasitic paths avoid the accessed bit and word lines. The diode-backed crossbar memory is scalable to very large array sizes, at least in the region of $n > 10^5$, $N > 10^{10}$, as required by our previously specified design target. This is assured in any case when the diode nonlinearity is sufficiently high (in the order of n) and the wire series resistances are negligibly small

## 11.3 Transient behavior and slow read-out speed of the crossbar memory

We will now investigate whether the described crossbar memory 40 really exhibits the desired slow-read out rates. Transient behavior of the crossbar memory 40 can be modeled by adding the junction and wire-to-wire capacitances 67 to the model as shown in Figure 6. It is required to consider the serial (Thevenin equivalent) resistance $R_{in}$ of the voltage generators that drive the accessed / unaccessed bit and word lines (these are omitted from Figure 6).

Assuming that the series resistance of the wires of the bit wires 54 / word wires 52 is negligible and that the wires survive any current density, it is the generator resistance $R_{in}$ and the net capacitance of the word line , $C_{word}$ that determines the $\tau = R_{in} C_{word}$ time constant of the circuit.

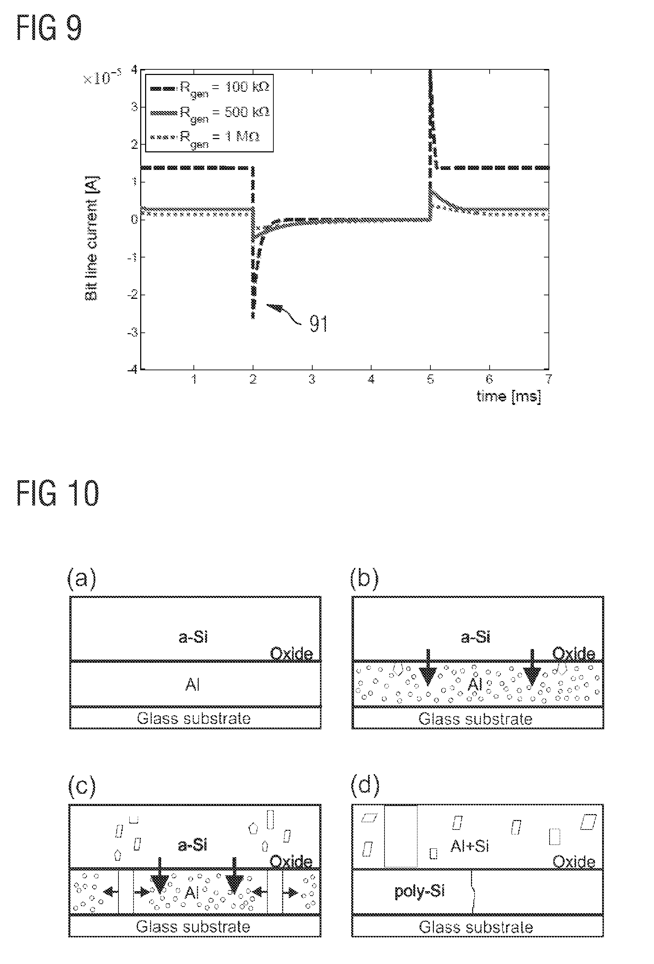

Figure 9 shows the simulation of a complete read cycle, using a junction capacitance of $C_{junction} \approx 10^{-14}$ F and assuming generator resistances of $R_{gen}$ = 100 kΩ, $R_{gen}$ = 500 kΩ, $R_{gen}$ = 1 MΩ. The curves show the time dependence of $I_{sens}$ current. At $t$ = 5 ms the accessed junction isunbiased (reverse biased) and at $t$ = 10 ms biased again.It takes about 0.5 ms for the read current to stabilize.

Smaller values of $R_{gen}$ lead to faster read-out cycles and at the same time, a high capacitive peak current 91 during the charge-up of the bit or word lines. The wire can be overloaded and destroyed by this. $R_{gen}$ has to be chosen in such a way that the driven word line is not destroyed - consequently, the speed of a large crossbar memory is limited by the finite current-carrying ability of the nanoscale wires. Faster readout attempts will inevitably result in rapid destruction of these wires, rendering the structure unusable / unreadable.

The resulting read-out speed of around 100 bits/s corresponds well to our previously specified design target. In order to achieve junction/ interwire capacitances in the $C_{junction} \approx 10^{-14}$ range, the air gaps of the structure should be filled up with high-k materials, with a dielectric constant being in the _r ≈ 100-1000 range. Such very high-k materials (ferro-electrics) were widely investigated and characterized for ferroelectric memory applications, and their technology is known to be compatible with standard silicon processing [10021].

If more than a single bit of information is stored in the junctions (a plurality of curves can be distinguished in Figure 7, not only curve 71 and 72) (analogously to multi-bit storage in modem memories), then the required measurement precision will further slow down circuit operation. Instead of reading out junctions one by one, one could compare the resistances of two randomly selected junctions. This may also provide compensation against power supply fluctuations and certain aging effects.

What active adversarial attacks against such a structure are conceivable? The attacker could try to manipulate or even to entirely replace the read-out circuitry of the memory in order get quick access to its content. This can be done by using a smaller value for $R_{gen}$ (i.e. decreasing the time constant) and/ or reading out multiple bits in parallel.

Both of these approaches are prevented, however, if the wires have been set to have only a limited $i_{\max}^{in}$ current carrying capability. Decreasing the value of $R_{gen}$ $m$-fold will result in $m$ times larger peak currents and destroys the wire. Reading multiple (say $h$) bit values simultaneously loads the corresponding bit / word line with $h \times i_{static}$ current and exceeds the value of $i_{\max}^{in}$ already for small $m$. As our simulation results show, the $i_{\max}^{in}$ current limit could still be a few times larger than the $i_{static} = V/(R_{gen} + R_{on})$ steadystate current flow, meaning that a convenient parameter regime exists where the crossbar would still be reliably readable, but at the same time secure.

Furthermore, if the crossbar is fabricated by state of the art lithographic technology, tampering with the internal structure of the crossbar array seems to be technologically impossible, even for adversaries with practically unlimited financial resources. This prevents attacks in which the adversary would split the crossbar into several subblocks and reads them out in parallel or fabricate contacts to access inner nodes.

### 11.4 Realization of the random information content of a SHIC-crossbar

One crucial component of the SHIC-crossbar memory is a information carrying 'layer'. Ideally its irregular structural features should result in a truly random information content of the memory. There are several suggestive 'random' physical processes which form the sought type of nanostructures.

- One possibility involves phase change materials, which is illuminated by a random image (such as a series of unaligned speckle patterns), resulting in an inhomogenously conducting media [85]. This method is not manufacturers resistant, meaning that a fraudulent manufacturer can generate more than one memory with the same information content.

- Alternatively, a very thin oxide layer with a non-uniform thickness can provide a tunneling current which is different from junction to junction.

- Also crystallization processes exhibit an inherent randomness: the exact location of nucleation sites depend on atomic-scale defects or roughness of material surfaces. One example would be amorphous silicon crystallized with a laser beam again in combination with a speckle pattern. For phosphorous-doped a-Si:H a resistivity change between crystallized and non-crystallized areas of 100 and $10^6$ can be obtained for a P-concentration of $10^{-5}$ % and 2 % in the initial layer, respectively. These crystallization processes can reach resolutions below 100 nm due to the small heat diffusion length in the silicon [86]. A polycrystalline material can be doped as well, resulting in an inhomogenously doped semiconductor.

One particular advantage of these processes is that they can be made compatible with modem semiconductor manufacturing technology.

### 11.5 A first prototype

To illustrate the feasibility of a randomly conducting layer, we have performed experiments on a medium prepared with a random recrystallization process. Such crystallization processes are particularly attractive for our goal since the nucleation site cannot be calculated or predicted, and the nucleation process is governed by atomic-scale inhomogeneites of the starting material.

We chose the aluminum-induced layer exchange (ALILE) process [87], [84], [88], which is used to crystallize amorphous silicon layers. A typical ALILE process is illustrated in Figure 10. The Figure 10 shows the steps of the ALILE process:

(a) Al/amorphous Si layer stack on glass substrate as starting configuration;

(b) and (c) During the annealing Si nuclei form in the Al and grow in size; and

(d) Finally a closed polycrystalline layer has formed replacing the Al.

Thus Figure 10 illustrates the following steps: An Al/amorphous Si (a-Si) layer stack, separated by a thin oxide film (Figure 10 a), is annealed at temperatures below the eutectic temperature of the Al-Si system. Annealing of the sample leads to diffusion of Si atoms into the Al layer. Crystallite formation occurs where local supersaturation of the Al with Si is achieved. In addition to that, irregularities and defects, e.g. grain boundaries of the Al, can serve as crystallization sites. As nuclei have appeared, they grow until they reach the substrate. From this point crystallites grow laterally (see Figure 10 c) until a closed poly-Si layer has formed (Figure 10 d). After the process is completed, the silicon and aluminum layers exchanged their respective positions and the a-Si has been crystallized.

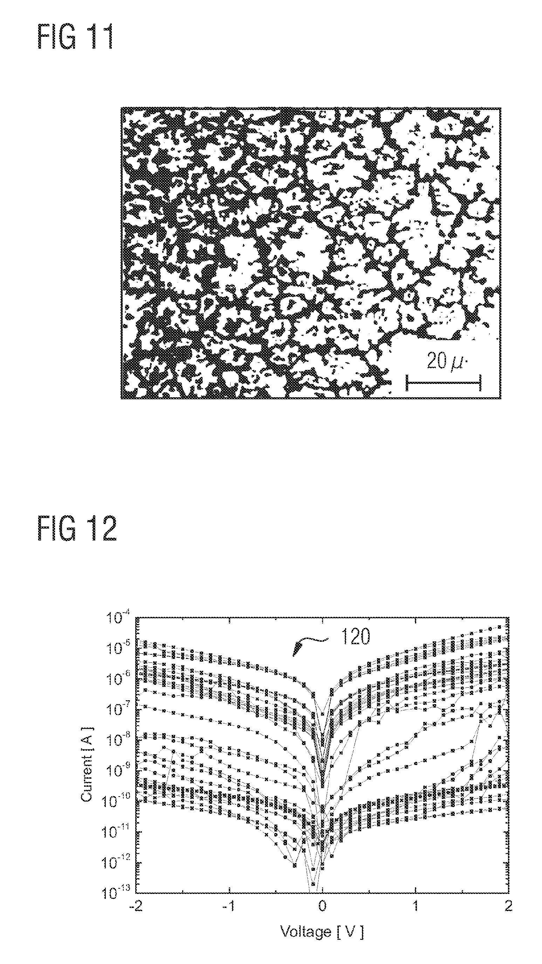

By adjusting the initial Al/Si layer thickness ratio, an incomplete poly-Si layer composed of not fully interconnected grains can be achieved. An example showing the randomness of such an incomplete ALILE layer is shown in Figure 11. Figure 11 is a top-view optical microscopy image of the resulting layer where the white areas represent the crystallized silicon grains and the black surrounding the glass substrate. In this case, the Al remaining on top of the poly-Si layer has been removed by wet chemical etching. The ratio between the area covered with crystallites and the bare glass can be adjusted by the Al/Si thickness ratio. The size of the crystallites is determined by the annealing temperature. Since the crystallized silicon grains are Al-doped after the layer exchange process, this method results in conducting (Si-grains) and nonconducting (bare glass) regions in a truly random arrangement.

Fully crystallized layers also reflect the randomness of their formation process and show inhomogenous conductivity. We have fabricated small-size crossbar structures having the ALILE layer as the information carrier. Hydrogen passivation is used to reduce the hole carrier concentration in the poly-Si film. The details of the hydrogenation process can be found elsewhere [84]. Poly-Si wires with a width of 1 $\mu$m - 4 $\mu$m were crystallized by the ALILE-process. The ALILE layer constitutes the bottom wiring. Then aluminium wires of the same size were evaporated with a mask aligned perpendicular to the Si wires.

Figure 12 shows some measured $I(V)$ curves 120 on these junctions. It is clear that the $I(V)$ show sufficient randomness. By using crystallite sizes or other, random, inhomogenoues materials in the in the 100 nm regime, our previously specified design targets ofN = $10^{10}$ and a read-out rate of 100 - 1000 bits per second (see above), can even be realized within a small (1 $cm^2$ size) active chip surface.

The presented layer stack already shows a weakly rectifying behavior, due to the Schottky-type contact between Al and Si layers. This nonlinearity is insufficient to make the crossbar addressable, but it demonstrates that there could be a possibility to realize the storage and the selector layer with in one material stack, rendering a separate diode layer redundant.

Should a dedicated diode layer become necessary, there are many technologies in the recent literature giving solutions for the fabrication of it. Crossbar memories can be made from standard semiconductor material systems (silicon, poly-Si) and oxide-based switching layers [111], [115]. Molecular switching elements are researched to achieve true nanometerscale storage [112], [115]. Crossbar memories are proposed to be built from semiconductors, which allow low-temperature processing, higher integration densities (such as ZnO) [114] and Back end of the Line (BEOL) fabrication. This latter possibility is especially promising: a low cost crossbar layer placed on top of a silicon IC can serve as a tamper sensitive SHIC system, physically protecting the underlying circuitry. It would also be possible to use high-capacitance, high resistance amorphous semiconductors (such as amorphous silicon suboxides [119]).

## 11.6 Implementation Variants and Limits

The design target of N = $10^{10}$ and a read-out bitrate of 100 bits/sec. outlined earlier results in a structure that may withstand about three years of continuous, uninterrupted adversarial access until full charaterization. Depending on the application, however, other design targets may be relevant. The following table gives a brief overview of different scenarios. It shows, in particular, that the ALILE technology employed in our protoype can be readily used for a number of applications, including credit cards, passports, and key exchange. These applications realistically require only a security against - at most - several days of uninterrupted, continuous, and unnoticed adversarial access.

Table I gives specific figures for the slow-access, memory based cryptographic SHIC system. The leftmost column gives the resolution or the employed fabrication technology. The next columns denote the number of memory units, the storage capacity of each unit, their read-out rate and the net read-out rate of the entire memory the time required for full read-out, and the planar size of the (possibly multilayered memory). ALILE+T refers to a technology which is currently investigated in our group, which allows to further slow down the read-out rates by using very slow semiconductor traps at the crossbar junctions. It is discussed further in section 12 of this application.

The table also shows the ultimate limits of our approach: Read-out rates of $10^5$ bits per second and security of tens of years seem achievable. If multilevel storage is applied, the tradeoff between size, security and resolution can be improved yet further. Note also that the total adversarial access time and the security lifetime of a product must be strictly distinguished; during the three years lifetime of a credit card, for example, the maximal, hypothetical adversarial access time will never go beyond a few days (card is stolen and brought back unnoticed), and will typically be significantly lower.

## 11.7 Summary of the Detailed Description

We investigated a specific, new design paradigm for the construction of highly secure SHIC systems. While the well-known standard approach in the area of Physical Unclonable Functions (PUFs) is to employ many interacting components and high read out speeds, we suggest to use as many single, densely packed, independent subunits as possible, while drastically reducing the read-out frequency. We showed that it is possible to enforce the slow read-out speed as an intrinsic property of the SHIC system's wiring and cell architectures, and not only by an intentionally slow access module, which might potentially be circumvented or cut off.

This new design principle allows the construction of SHIC systems, which are secure even against computationally unbounded adversaries and in the face of weeks or years of uninterrupted adversarial access. Furthermore, these PUFs are electrical and can be integrated conveniently on a chip. The slower, limited read-out speed seems no severe disadvantage in typical appliances, such as key exchange, credit cards or hardware tamper detection.

We suggest using crossbar arrays as a preferable way to implement our general idea. They reach ultimate information densities and are potentially very cost effective, since they have a very regular geometry and use only two-terminal, passive devices. Due to their simple layout, they can be produced at the limit of current nanofabrication, which gives them high security against invasive attacks and increases their security lifetime.

We have backed our new design proposal by a discussion of several concrete implementations, intensive simulation data, and a first physical prototype. Our research suggests that it should be possible to build a USB-stick type device with dimensions of a few mm $\times$ 1 cm $\times$ 1.5 cm, which is secure for ideally up to tens of years, and which can be used for user identification, hardware identification, key exchange, and other security appliances. Other implementation variants tailored for specific settings can be made yet smaller and cheaper, and may thus be integrated conveniently in existing microelectronic systems.

## 12. TFT-based SHIC Systems / Flash memory based SHIC Systems

## 12. 1. System description

A network 130 of thin film transistors (TFTs) 131, which show a random variation in device parameters as the threshold voltage, field effect mobility, saturation current or semiconductor/insulator interface quality, is proposed as a SHIC system 1. The information content is comprised in the random characteristics of the TFTs 131 situated at each wire crossing. The stored values can be either digital (on or off) or the whole curve of the transistor can be recorded carrying several bits of information. Also the time-dependent transient behavior of the TFTs 131 is suitable to store information. The presence of a complicated interplay of traps at the semiconductor/insulator interface and within the insulator makes the time-dependent readout interesting especially for this kind of SHIC systems. In addition, bias-dependent trap-filling or emptying can be used for a random individual programming of each transistor. Analogous to the resistor/diode crossbar structure introduced and discussed in the previous sections 8, 9 and 10, the information content of this SHIC system scales with the number of wire crossings and therefore with the number of TFTs 131.

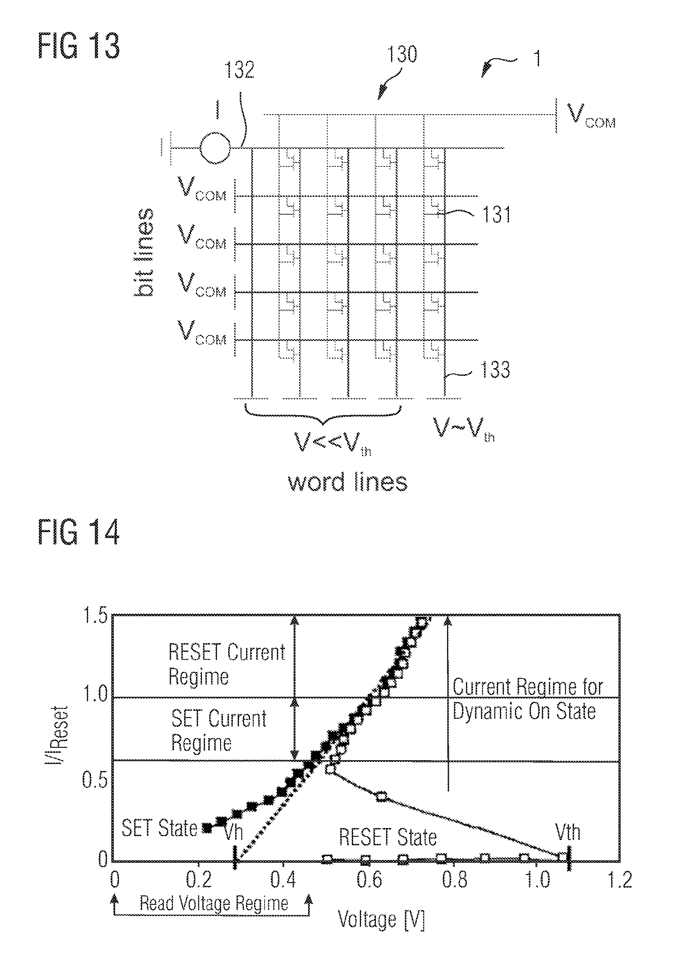

A possible wiring for such a TFT-based SHIC system 1 is shown in Figure 13. The word lines 132 are connected to the TFTs' gates and the bit lines 133 to their source contacts. The drain contacts of all TFTs are connected over thin wires to a common voltage $V_{COM}$. In the situation shown in Figure13 the TFT in the upper right of the network 130 is read out. The parasitic current flow through the not addressed crossings is suppressed by applying a voltage $V<<V_{th}$ to the corresponding transistor gates. A parallel read-out of all TFTs in one word line is prevented by the limiting current carrying capability of the wire connections between the drain contacts of the individual TFTs and $V_{COM}$.

As for SHIC systems 1 based on the crossbar memory 40, the security of SHIC systems 1 based on the TFTs 131 relies on an inevitably low read out speed. Since the capacitances of the connecting wires are in the same range as for the SHIC systems 1 based on the crossbar memory 40, in principle the same security situation will apply. To further increase the capacitance in the system 1, the dielectric layer used in the transistor structure could be placed also between the wire connections decreasing the readout speed. Furthermore, the presence of slow traps in the insulating layer of the TFT structures also slows down the read out speed.

With modem state of the art lithography technology a comparable information density can be obtained for the SHIC systems 1 based on the TFTs 131 as for the SHIC systems 1 based on the crossbar memory 40.

**12.2 Possible implementations**

Variations in the device performance for modem MOSFETs do exist, but they are rather small. A larger spread of device parameters is observed in thin film transistor preparation techniques. E.g. in laser-crystallized polycrystalline silicon transistors [82] and in many organic TFTs [83] reproducibility is still an important issue. These device to device variations can be increased even more by using processes that inherently involve randomness, like crystallization processes. These are of such kind that the exact crystallization site cannot be calculated or predicted. Thin film transistors produced by metal-induced crystallization [84] can lead to a large device to device variation of parameters especially when the channel size approaches the size of the individual crystallites.

**12.3 Alternative approaches**

There are similar, non-volatile transistor - based memory cell constructions that can serve as SHIC systems with high information densities and slow read out speed. One example would be SHIC systems based on flash memory-like devices, where the information content of the cells could be given by random manufacturing variations, for example. The very high information density of flash memories, combined with purposely high capacitances and / or long access paths (similar to the ones in NAND flash) can help them to fulfil the necessary security requirements.

**12.4 Summary**

In summary, a matrix array of TFTs 131 exhibiting variations in their device performances is proposed as a SHIC system 1. The TFT matrix offers the possibility to address the individual TFTs for read out, which minimizes leakage currents. Parallel read-out is prevented by a limited current carrying capability of the wire connections. The security of the system is comparable with SHICs systems 1 based on crossbar memories 40. The use of crystallization processes like metal-induced crystallization would also lead to high cost efficiency.

**13. Realization of SHIC systems with slow read-out speeds by using interface traps/oxide traps**

In several of the electrical SHIC systems proposed in this application, the information content is stored in the form of junctions having individual current-voltage characteristics, which are embedded in a circuit-based structure. This leads to an intrinsically slowed down access time coming from the RC constants of the circuit construction (as pointed out, for example, in sections 10, 11 and 12).
In addition to that, the read-out of individual junctions can be slowed down by intentionally increasing their trap state density. Associated with these trap states, an additional capacitance is introduced to the system. By applying a certain voltage to the measured junction, the trap states have to be charged/discharged before a stable measurement value can be obtained. Depending on the corresponding time constants of the traps, which may typically lie in a range from $10^{-5}$ s up to several hours [1301, 1302] the charge/discharge process can take considerable time frames slowing down the read out correspondingly.
For junctions like pn- or Schottky-diodes, interface trap states can be introduced simply by working under "dirty" conditions, for example by using a bad vacuum or low cleanliness standard. This can lead to a thin oxide layer between the two junction materials, which increases the effect of slowing down the read out. Also other measures like a high surface roughness at the junction interface can lead to increased interface trap state densities.
For SHIC systems based on transistor structures, in addition to defect states at the oxide/semiconductor interface, also defects able to trap charge *within* the oxide can be introduced. Lifetimes of such "slow states" can be remarkably long, reaching up to several hours [1302] or more.. Here, a good balance between a very slow-read out, which maximizes the system's security, and the faster read-out times required for practical applications needs to be found. In SHIC systems 1 based on the TFTs 131, bias-dependent trap-filling or emptying can also be used for a random individual programming of each transistor.
Besides working under "dirty" conditions, also other methods can increase the density of oxide traps. E.g. for thermal $SiO_2$ such states can be occasionally introduced by high field stressing, exposure to ionizing radiation, electron avalanche injection, hole injection or Fowler-Nordheim electron injection. Furthermore, high-k dielectrics (like e.g. $HfO_2$, $ZrO_2$, $Ta_2O_5$...) usually exhibit a worse quality than thermally grown $SiO_2$ and therefore exhibit a higher trap density.
It is furthermore important to note that randomly introduced trap states as described above (e.g. by "dirty" process conditions), have the further asset that they increase the desired randomness and/or the extractable random information of each individual junction.
Overall, using slow read-out trap states can add significantly to the intended, inevitable long read-out times in slow-read out SHIC systems 1. In opposition to approaches based on suitable RC constants coming from the system construction, they can reach even longer read-out times, ranging up to the order of hours per junction. They also seem to be less intricate to realize in practice: The traps have the only purpose of slowing down the read out and can therefore be optimized easily in this respect, while the RC constants coming from the system construction must be balanced more carefully to lie in a regime where a reliable read-out and the functionality of the structure are maintained in general, but not possible too quickly.

## 14. Implementation of Erasable/Rewritable SHIC Systems

The principle of erasable SHIC Systems has been described in section 6. The fabrication of erasable (rewritable) slow read-out memories can - in principle - be based on the same techniques that allowed us to build SHIC systems from ROM memories. We have described these basic techniques in detail over the previous chapters.

In order to construct erasable SHIC systems, we require an information-storage layer that fulfills the following requirements:

1. The state of the memory is defined by a 'random' process (ideally with no manufacturer control).

2. Each stored bit value (junction resistance) can be defined / changed electrically by the user, with no significantly faster or slower speed than the requirements set up for the slow read-out memory or slow read-out SHIC systems specified in the previous sections.

We believe that crossbar structures containing phase change materials can fulfill these requirements. We envisage a crossbar memory, exactly as previously described, having diodes as selector elements and finite current-carrying capability wires for accessing them. The information carrying layer can be a chalcogenide-type phase change material [79].

The phase change layer (and hence the information content of the structure) can be generally set to an essentially random value by heating the entire structure for a short time to a temperature close to the phase transition temperature, where small regions (in the size scale of a single junction) are randomly in the crystallyine or amorphous state (low or high resistance states, respectively), or by optically pre-programming [80] the device by a random-like pattern.

The "erasure" of the information stored in one junction can then be done by applying a stronger current pulse for resetting / setting the junction, just as it is done in 'normal' phase change memories. This can set the information at the junction to either a predefined value or to a random value, which means that in both cases that the original information stored at the junction is no longer present. In principle, this procedure of setting/resetting the junction can be repeated multiple times.

Note that the current density required to rewrite the accessed junction are not significantly higher than the read-out current density. Since the ultimate read-out speed is determined by the finite current-carrying ability of the bit and word lines, a higher write (erase) current density would also allow a higher read-out current and faster read-out speed (which is prohibited by our construction).

A big benefit of phase-change materials is that the read / set / reset current densities are lying in a very close range. An illustration for a particular cell is given at Figure 14. This graph, taken from [79] shows the I-V-curve for a particular phase-change memory element. The same order of magnitude currents can be used to interrogate or set / reset / destroy the state of a particular junction. The same order of magnitude currents can be used to interrogate or set/reset/destroy the state of a particular junction.

## 15. Irregular networks in an inhomogeneous nonlinear medium

### 15.1 Description of the device

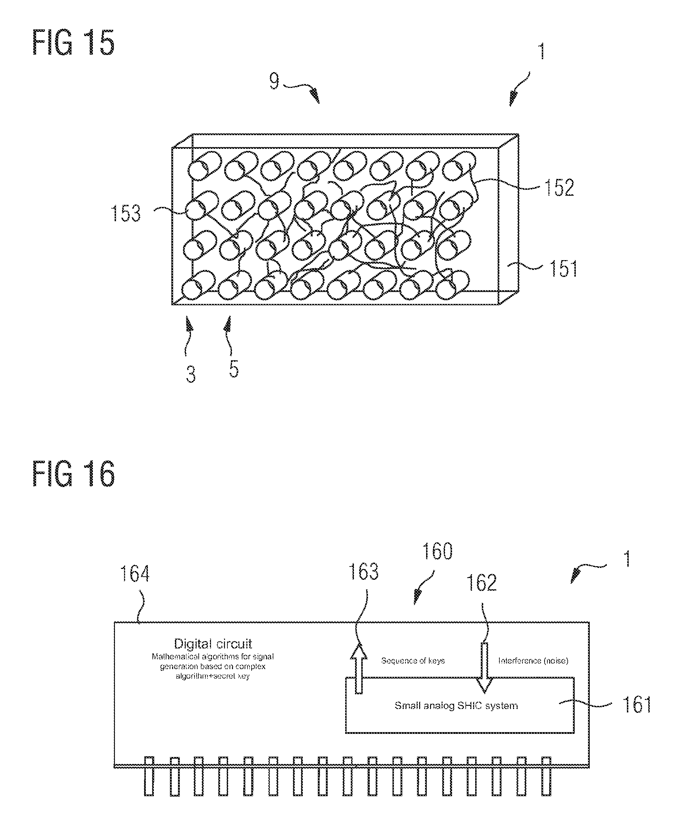

Figure 15 shows a possible random nonlinear network 150, that can also be used as system 1. The network 150 comprises a plurality of long range filaments 151 that are embedded in a medium 152. The filaments 151 can be contacted via a large number of contacts 153 that are drilled into the medium 152. This structure is measured by applying voltage/current at some of the contact wires and probing the current/voltage at another subset of the wires. The amount of extractable information should be so large ( bit) that it is practically impossible to create a look-up table for the emulation of the SHIC system behavior, even if the circuit can be accessed at a relatively fast rate.

Some advantageous properties of this implementation are:

• The structural information is stored in a three-dimensional volume, not only on a two-dimensional surface, leading to a higher amount of information

• The nonlinear I(V) curves of the junctions carry more than a single bit of information,

- Combinatorial inputs can be applied: applying excitations separately on, say, and does not allow to deduce the output vector to be deduced for the simultaneous excitation of the structure, since the structure is non-linear.

Note again that the medium should be a nonlinear system; it could contain long-range interconnections, to make the reconstruction of the circuit graph more difficult. Without long-range interconnections the coupling between physically distant contacts will be weak, which reduces the structure's input-output complexity.

### 15.2 Implementation possibilities

Possible realizations of this structure are the folloving:

- Metal filaments embedded in an inhomogenously doped polysilicon matrix.

- Carbon nanotubes in a polymer matrix which can contain semiconductor nano crystals.

- A mixture of metal filaments, semiconductor nanowires embedded in a non-conducting medium.

- Presence of magnetic nanoparticles would create a complex network of nonlinear inductances.

One preferred example of implementation is a coating layer on top of a standard silicon chip, which provides the contacts and the read-out (amplifying) circuitry. The coating can serve as a tamper-sensitive protective layer on top of a silicon chip, which can be used to sense any invasive tampering attempts.

### 15.3 Measurements in the time domain and frequency domain

Note that besides measuring static current-voltage characteristics, there are two other ways for extracting information from this object:

- Measuring the AC impedance between any two points (while applying static or AC excitation at other points) makes the measurement dependent on mutual capacitances/inductances, further increasing the amount of extractable information. This method could also be advantageous, if the object is applied in SHIC RFID's.

- Measuring the time delay of a(n) applied pulse(s) or the deformation of the pulse(s) shape is an additional way of extracting the structural information.

### 15.4 Summary

In the last section, an inhomogeneous nonlinear conducting/capacitive/inductive medium has been suggested as SHIC system, which is accessed by a large number of contacts and interrogated by static or dynamic electrical measurements.
The structure is defined by nanometer-scale randomness and is possibly three-dimensional, providing a potentially very high security against copying and re-fabrication. The complexity of the internal interconnections (circuit graph) prohibits model building/emulation. Stability of a solid-state implementation is expected to be high.
With a suitable technology, the object can be made very cheap. A silicon-based measurement/control circuitry is required.

### 16. Cryptography based on interference between digital and analogue systems on a chip

Another promising option is to construct SHIC systems that are based on the interference between digital and analogic systems.
Figure 16 shows a chip 160 that is provided with a small analog system 161 that is affected by interference 162 and noise and produces a sequence 163 of keys. Thus, the analog system 161 has the function of a SHIC system 1. The chip 160 is further provided by digital circuit 164 that implements mathematical alogrithm for signal generation based on complex algorithm and a secret key. The digital circuit 164 can be accessed by pads 165.
Noise 'leaking in' the analog system 161 could become a major effect influencing circuit behavior of the digital circuit 164. We propose this mechanism as a way to provide complex and unique circuit behavior. The digital circuit 164 takes (digitalized) inputs from the analog system 1661 at multiple times, but also the time evolution of the analog signals depends on the digital operations. The influence of the digital circuit 164 to the analog system 161 unit is determined by (unique) stray capacitances, interconnection delays and individual device characteristics in both the analog and digital unit. The uniqueness of the circuit is carried by the analog circuitry and the algorithmic complexity is realized by the digital (non unique) circuit part.

## 17. Pattern formation in locally interconnected active networks

A further favourable strategy for the realization of SHIC systems is the exploitation of pattern formation phenomena.

This class of electrical SHIC systems uses the dynamic behavior of nonlinear, interconnected active circuit elements (cells). The information is carried by the varying characteristics of the cells/their coupling to the neighbors. The circuit produces an output vector as a result of a dynamic pattern formation process. These devices can be viewed as a random (unique) Cellular Nonlinear Network (CNN, [14]).

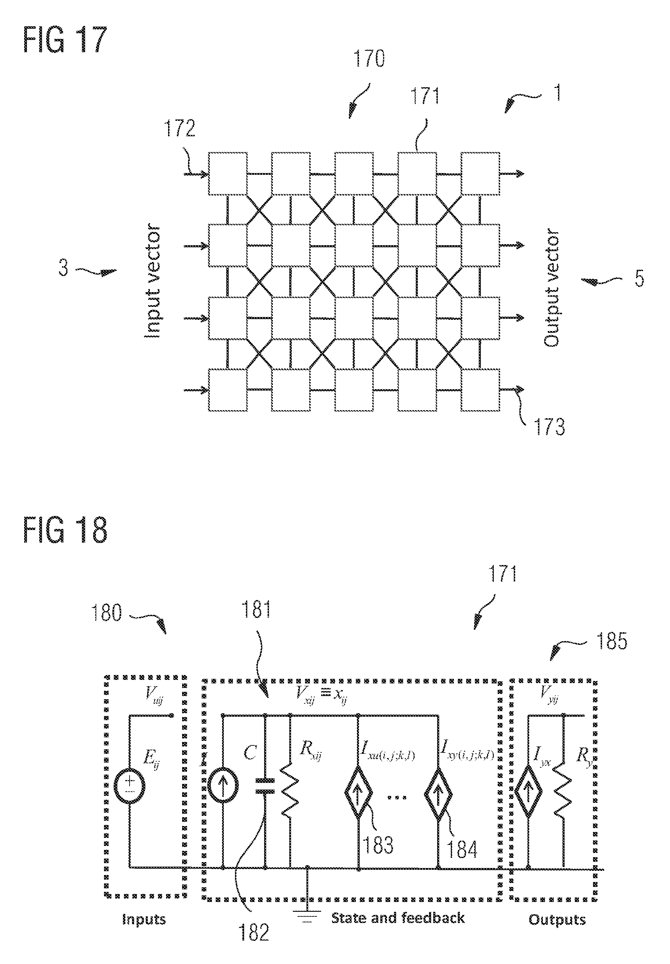

Figure 17 shows a network 170 of such locally interconnected nonlinear, active elements 171 (cells). The network 170 is accessible via input terminals 172 and output terminals 173. The input vector of the SHIC system is a voltage/current vector at one boundary, the output vector is the current/voltage vector at the other boundary (alternatively, inner cells instead of the boundaries can be used for the input or output vector). The full characterization and/or prediction is impossible because of the complicated pattern formation process (i.e. an analogic computation), the large number of possible overall inputs consisting of all input vectors at alldifferent input cells, and/or the notable time needed for the development of the pattern.

Cellular analog arrays, like any monolithic analog circuit, can be designed to provide protection against temperature and power supply fluctuations [71]. Special circuit blocks (such as bandgap references/operational transconductance amplifiers) should be included in the circuit.

## 18. Cellular Automata Designs for SHIC systems

Also so-called cellular automata can be used for the design of SHIC systems with complex behavior.

A cellular automaton is a computationally universal model system used widely in physics, biology, mathematics and complexity theory [72]. They can be considered to be a sub-class of CNNs [68], with binary input/output values and discrete time. It is straightforward to implement special hardware for the simulation of cellular automate systems either with ASICs (Application Specific Integration Circuits) or FPGAs [73]. The correct operation of such cellular automata simulator requires correctly set supply voltages and clock frequencies. Too low supply voltage/too high clock frequency (overclocking) will result in faulty circuit operation, and the resulting pattern will become dependent on the device parameters of the circuit and could be used as a SHIC systems.

We performed simulations, which 'mix' two cellular automa rules (i.e. some randomly picked cells follow one rule, other cells follow an other rule). We found that in most cases, the complexity of the original cellular automata rule is preserved. In other words, a cellular automata combined from two rules, which result in nonperiodic patterns, the resulting CA will be also be nonperiodic. This gives the possibility that due to fabrication mismatches, 1D or 2D cellular automata will yield to unique and non-trivial patterns.

The cellular automata type implementation carries less structural information than the CNN-based device, but could be less sensitive to temperature, noise, and be more compatible with digital circuit technology.

Due to the high and choosable complexity of the random automata rules, this possibility of a SHIC system can be built on delay differences such as the well-known Arbiter PUF, but increases the complexity of the internal mechanisms of the SHIC system /PUF and therefore also its input/output complexity substantially.

## 19. Detailed Description of CNNs as SHIC systems

In the following, we will describe which templates and which transistor level architectures are suitable for the design of CNN-based SHIC systems. Furthermore, we apply a novel design principle: We use architectures that are inspired by differential equations/partial differential equations. If these equations describe complex natural or social phenomena, then the CNNs designed according to them will inherit precisely this complexity.

### 19.1 Specification of secure circuit-based SHIC systems

We stipulate the following design goals for highly secure, circuit-based SHIC systems:

1. It carries as much as possible structural information per chip area. As much of this information as possible is relevant in the chip's electrical behavior, meaning that it influences the measurement results $M(p_i)$ for most or many $p_i$.

2. A small and localized change in circuit parameters should globally alter the circuit behavior.

3. The characteristics of the circuit elements are difficult to measure invasively, and difficult to deduce from known measurement results ($p_i$, M($p_i$)).

4. There is a strong, non-linear, complex interaction between the different subcomponents of the SHIC system.

5. The circuit is scalable to large sizes. The scaling should increase both the information content and the complexity of circuit operation, while maintaining the circuit stability.

6. The circuit operation should be stable and repeatable over time and relatively insensitive to temperature variations, noise, aging, power fluctuations.

7. The circuit is physically unique, and it is infeasible to build a clone which is accurate enough to show the same challenge-response behavior as the original.

Several of the requirements seem to be contradictory, or at least difficult to achieve simultaneously. They require a special circuit architecture that - despite being highly sensitive to its circuit parameters - still leads to a stable behavior in time. Special types of so-called Cellular Nonlinear Networks meet precisely just these requirements, which is why they represent a promising approach to highly secure and complex electrical SHIC systems.

### 19.2 Background on Cellular Nonlinear Networks

### General Introduction

Cellular Nonlinear Networks (or Cellular Neural Networks, CNNs) are analog computing arrays [1605, 1606] originally proposed as a realizable (scalable) alternative to Hopfield networks. They are built from locally interconnected circuit units or cells, which are arranged on a regular grid. The grid is typically two-dimensional, and all cells are connected via analog connections to their neighbours, which neighbours are not necessarily nearest neighbours as shown in Figure 17.

Each cell is characterized by a dynamical state variable, which obeys an ordinary differential equation (ODE). The time evolution of the state variable is described by the following ODE:

$$\dot{x}_{ij} = -x_{ij} + \sum_{k,l} \mathbf{A}_{i,j,k,l} y_{kl} + \sum_{k,l} \mathbf{B}_{i,j,k,l} u_{kl} + z_{ij}$$

i.e. the time derivative of the state variable (for cell with *i, j* indices) depends on the *y* output of the neighboring cells (denoted by the *k, l* indices) via a the **A** cloning templates. Each cell has a bias (*z*) and inputs, which are coupled by the **B** template to the dynamical equation. The CNN behavior can be programmed by choosing appropriate templates. If only nearest neighbors are coupled, then the **A** and **B** templates are $3 \times 3$ matrices.

The output of each cell is sigmoid-like (saturating) function of the state variable, for example:

$$y_{ij} = f(x_{ij}) = \frac{1}{2}\left|x_{ij} + 1\right| - \left|x_{ij} + 1\right|$$

CNNs often have multiple layers and these layers are also coupled to each other via **B** templates.

As a mathematical model, CNNs are very general. For example, cellular automata [1607] can be interpreted as a special CNN which operates on discrete variables in discrete time (and where rules replace the ODE-based description). CNNs are also known to be Turing-complete [1608]. Furthermore, they have an extraordinary computational efficiency: for many tasks (typically those which involve large number of local operations) they are several orders of magnitude faster than standard Boolean microprocessors [1609], since the time evolution of thousands of cells goes on in parallel.

It is possible to construct a relatively simple circuit that solves the CNN equation 'by hardware'. This circuit 180, which is well known from the literature, is sketched in Fig. 18. The state variable is represented by the voltage 181 (or charge) on capacitor 182. Controlled current and voltage sources 183 and 184 are charging this capacitor and generate the output(s) 185 according to the CNN equation. Many different circuit functionalities can be generated by changing the control equation of the sources 183, 184 and / or 185.

**Physical Uniqueness and the Role of Mismatches**

A CNN cell, which is realized from solid-state electronic components does not follow precisely the ideal CNN equations. Parameter deviations of the integrated circuit elements [16010] result in the deviation of templates from their nominal values. These deviations can be introduced by the fabrication process, noise, temperature, device degradation and noisy input signals [16011]. Such mismatches represent a critical problem in scaling analog circuits in the sub-micrometer range. Templates, which are called *robust* in the CNN literature, are tolerating a certain amount of mismatch. A CNN with not robust templates may show a unique challenge-response behavior and serve as a circuit-based SHIC system.

**Read-Out Formalism for CNN-based SHIC systems**

Our proposed CNN-SHIC system is built from nominally identical, fixed-template cells (with or without an output/ bias). The measurement parameter $p_i$ is applied as an input or fixed value on some cells (similarly to the input vector sketched 172 in Figure 17). It triggers an excitation (wave) that propagates through the circuit and possibly bounces back and forth between the boundaries. The circuit may go to a stationary state after some time or oscillate indefinitely, depending on the choice of the **A** and **B** templates.

The steady-state values or, alternatively, the averaged oscillating voltages can serve as the response or measurement value M($p_i$). The value M($p_i$) should be sensitive to the deviations of the templates from their nominal value (cell mismatches) and consequently carries a signature from the individual device characteristics from each cell of the CNN. Note that even if the cells are only locally connected, far-away cells influence each other indirectly due to the propagation effects. Quantitative values for this influence can be obtained by simulations, and will be discussed in the next sections.

**CNNs and Partial Differential Equations**

CNNs are intimately related to Partial Differential Equations (PDEs), too [16012, 16013], a fact which we are going to exploit. Given a two-dimensional, continuous, one variable, time dependent PDE which was discretized in space (but not in time) on an $n \times m$ lattice, there are standard methods to design CNNs to directly simulate this discretized system - the CNN can be tuned to physically evolve according to a certain PDE. More precisely, we can derive a CNN template from the PDE such that the state variables of the CNN cells evolve over time in the same way to the states of the lattice points in the discretized $n \times m$ lattice. The necessary CNN templates, which enforce the right CNN behavior, can be directly determined from the finite difference approximation of the PDE.

We will demonstrate this procedure exemplarily for the case of the Maxwell equations and nonlinear optical behavior the next sections, deriving a concrete template that enforces a time evolution according to Maxwell's equations. As we will exemplify it is furthermore possible to translate this abstract template architecture into a concrete, relatively simple circuit block on the transistor level. This leads to cellular SHIC systems that can be commercially ordered on demand or fabricated in large volumes [16014].

**19.3 Wave Propagation on a Chip**

There is an infinite number of possible CNN templates, but there is no general, systematic method how to construct templates for a given set of requirements. As said earlier, one promising possibility to meet our specifications of Section 3 is to employ CNN templates which realize well-known PDEs describing physical systems. Then the CNN inherits its complex dynamics from the complex behavior described by these PDEs.

The appeal of *optical* implementations of SHIC systems and/or Physical Unclonable Functions and/or Physical One-Way Functions is coming from the 'global', long-range interconnections interactions that define the interference patterns. Therefore we will now investigate a CNN which solves a linear wave equation known from electromagnetic theory, aspiring that it will inherit the typically optical feature of non-local interactions. For weak excitations, the CNN solves a linear scattering problem (i.e. the original PDE). For stronger excitations, the nonlinear cell-cell dynamics come into play.

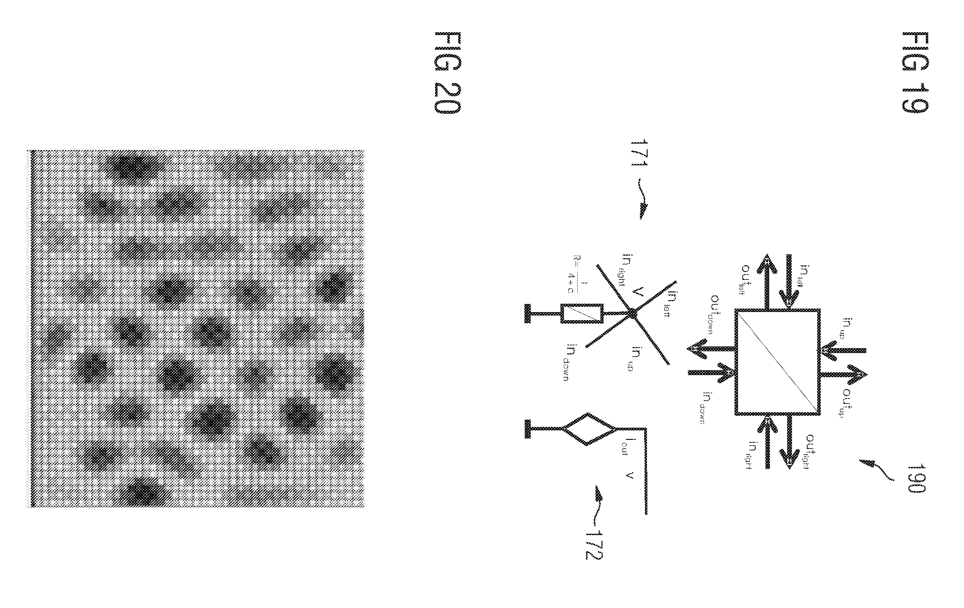

Figure 19 is a simple circuit which we used for preliminary simulations on a cellular array that solves the optical Helmholtz equation for an inhomogeneous media. Each cell is made from a random (possibly nonlinear) resistor and a transconductance amplifier and the DC voltages of the nodes 'calculate' the solution of the Helmholtz equation in a finite difference approximation. The structure of a cell 190 is shown in Figure 19, and these cells 190 have to be arranged in a matrix just as it was shown in Figure 17. The boundary conditions are defined by the voltages/currents applied at the side of the circuit, just as shown by 171 and 172. The cell 190 contains a current summation node 191 and a current source 192 that drives the neighboring cells and whose current depends on the voltage V of the summation node 191.

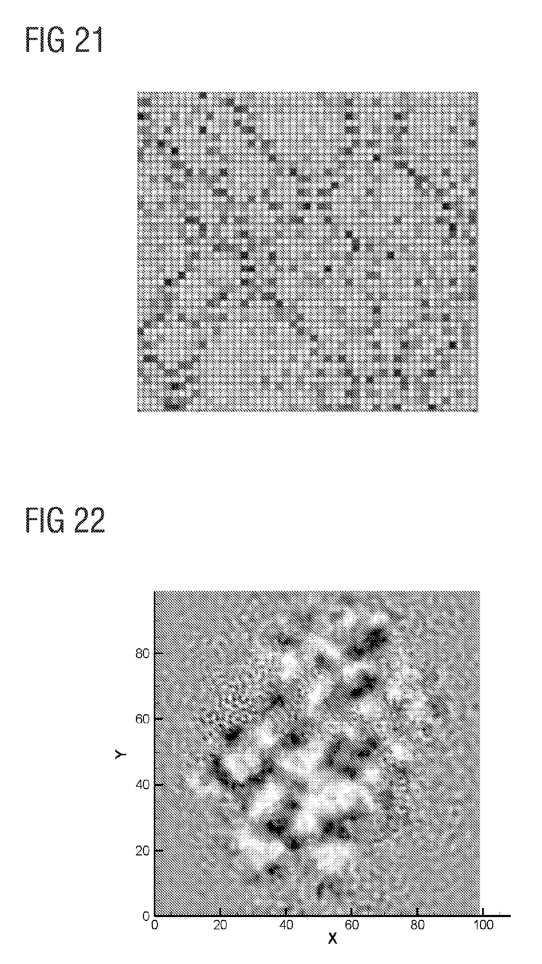

For certain parameters (which correspond to a longer wavelength in the physical model) the steady sate current distribution in the circuit shows a current intensity distribution pattern similar to interference patterns - this is illustrated by the contour plot of Figure 20, which is the map of state variables (voltages) on the ship surface. For shorter wavelength and larger parameter variations, the pattern becomes more complex as the pattern of Figure 21. Our simulations showed that in this design local effects (such as the change of the current or a circuit parameter in a single cell), spread strongly and globally throughout the circuit. This makes the structure dependent on relatively small fabrication variations, which is desired, and makes reverse engineering (i.e. determination of all relevant circuit parameters) extremely difficult.

**The Maxwell equation for TE waves**

Our CNN design is based on a simple numerical technique that rests on Zuse's seminal work [16015], [16016] for solving Maxwell's equations in two dimensions for TE (transversal electric) waves [16017]. Using $\mu_0 = \varepsilon_0 = 1$, Maxwell's equations take the form:

$$\text{curl } \mathbf{H} = \frac{d\mathbf{E}}{dt}, \text{curl } \mathbf{E} = \frac{d\mathbf{H}}{dt}, \text{div } \mathbf{H} = 0, \text{div } \mathbf{E} = 0$$

For a TE field (propagating in the *x-y* plane), the electric field vector has only an *Ez* component, while the magnetic field bears the $H_x$ and *Hy* components. A continuous time, spatially discretized form of the wave equations can be obtained by using a second-order, central finite difference approximation for the spatial deriatives:

$$\frac{dH_x^{i,j}}{dt} = -\frac{E_z^{i,j+1} + E_z^{i,j-1} - 2E_z^{i,j}}{\Delta y^2}$$

$$\frac{dH_y^{i,j}}{dt} = \frac{E_z^{i+1,j} + E_z^{i-1,j} - 2E_z^{i,j}}{\Delta x^2}$$

$$\frac{dE_z^{i,j}}{dt} = -\left( \frac{H_y^{i+1,j} + H_y^{i-1,j} - 2H_y^{i,j}}{\Delta x^2} - \frac{H_x^{i,j+1} + H_x^{i,j-1} - 2H_x^{i,j}}{\Delta y^2} \right)$$

Here $\Delta x$ and $\Delta y$ are the step width of the spatial discretization. We used $\Delta x = \Delta y = 5$ for all the example simulations. The 'CNN-hardware' that evolves according to the above equations (and thereby computes its solution) must be implemented as a three-layer CNN: One layer for each of the $E_z$, $H_x$ and *Hy* variables. Comparing the above equations with the CNN dynamical equations, the templates can be directly determined. The $H_x$ and *Hy* layers are bi-directionally coupled to the $E_z$ layer, and there is no direct coupling between $H_x$ and *Hy* layers. The corresponding templates are:

$$\mathbf{B}^{E_z \to H_x} = \frac{1}{(\Delta x)^2} \begin{bmatrix} 0 & 0 & 0 \\ -1 & 2 & -1 \\ 0 & 0 & 0 \end{bmatrix} \quad \mathbf{B}^{H_x \to E_z} = \frac{1}{(\Delta x)^2} \begin{bmatrix} 0 & 0 & 0 \\ 1 & -2 & 1 \\ 0 & 0 & 0 \end{bmatrix}$$

$$\mathbf{B}^{E_z \to H_y} = \frac{1}{(\Delta y)^2} \begin{bmatrix} 0 & 1 & 0 \\ 0 & -2 & 0 \\ 0 & 1 & 0 \end{bmatrix} \qquad \mathbf{B}^{H_y \to E_z} = \frac{1}{(\Delta y)^2} \begin{bmatrix} 0 & -1 & 0 \\ 0 & 2 & 0 \\ 0 & -1 & 0 \end{bmatrix}$$

All self-feedback templates are:

$$\mathbf{A} = \begin{bmatrix} 0 & 0 & 0 \\ 0 & 1 & 0 \\ 0 & 0 & 0 \end{bmatrix}$$

**Simulation of CNN-dynamics: sensitivity and complexity**

We numerically studied the behavior of larger CNNs by custom-built Matlab and C++ based simulators. We used a simple Runge-Kutta scheme for calculating the CNN dynamics integrating the above ODEs [16018].

If all the templates are fixed at their nominal value and the excitation vector is a single, fixedvalue cell placed at the center, then the CNN generates a wave, which is illustrated in Fig. 2a).

Initially, all state variables of the circuit were zero and the circuit does not cross into the nonlinear regime.

Figure 22 shows voltage distribution on chip for a mismatched Maxwell-equation solving CNN. The elements of the **B** templates (matrices) were varied by $\sigma = 0.03$. The initial similarity to the non-mismatched case quickly disappears, and non-periodic nonlinear waves appear in the structure. We found that for mismatched templates, the dynamic behavior never stays in the linear range, as even for very weak excitations signals rapidly amplify. The mismatches automatically lead into a non-linear regime, which is desirable in order to increase the system's complexity. The sigmoid-type nonlinearity has the further positive effect that it forces all the signals (circuit variables) to stay in the [-1;+1] range.

Physically, the mismatched **B** templates essentially are equivalent to a nonlinear, non-isotropic and optically active gain material. This 'world' is much more rich than the linear scattering effects used in [1], [2]. On the other hand, the CNN model is only two-dimensional unlike the 3D token described there [1], [2].

A more direct CNN analogy of the linear scattering PUF could also be built by placing fix zero-valued cells (obstacles, scatterers) at some (random) positions but this 'randomization strategy' realizes only lower information content and density, and is to some extent unnatural in the circuit implementation case, since there are better sources of random information and uniqueness there.

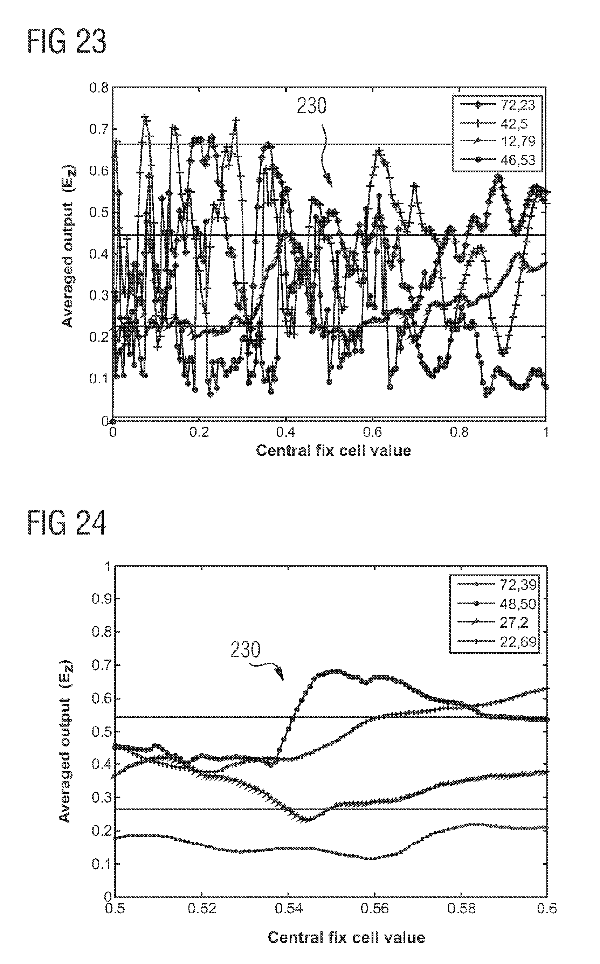

Simulation results confirm the sensitivity of this CNN for both the initial (input) values and the templates. A particular simulation result for the input sensitivity is sketched in Fig. 23. We placed one source (a fixed-value cell) in the center of the CNN array - all the other cells started from a zero initial value. The averaged absolute value ($|E_z|$) of some randomly picked cell outputs is plotted as a function of this source value resulting in curves 230. These curves 230 are oscillating with a high amplitude even far away from the source and the curves230 belonging to nearby cells seem to be uncorrelated. This demonstrates that this structure fulfills the criteria that have been set up for the input sensitivity.

A close-up view (from a different simulation) in Figure 24 shows that despite the 'chaotic' appearance of the curves 230 in Figure 23, the curves 230 are changing continuously

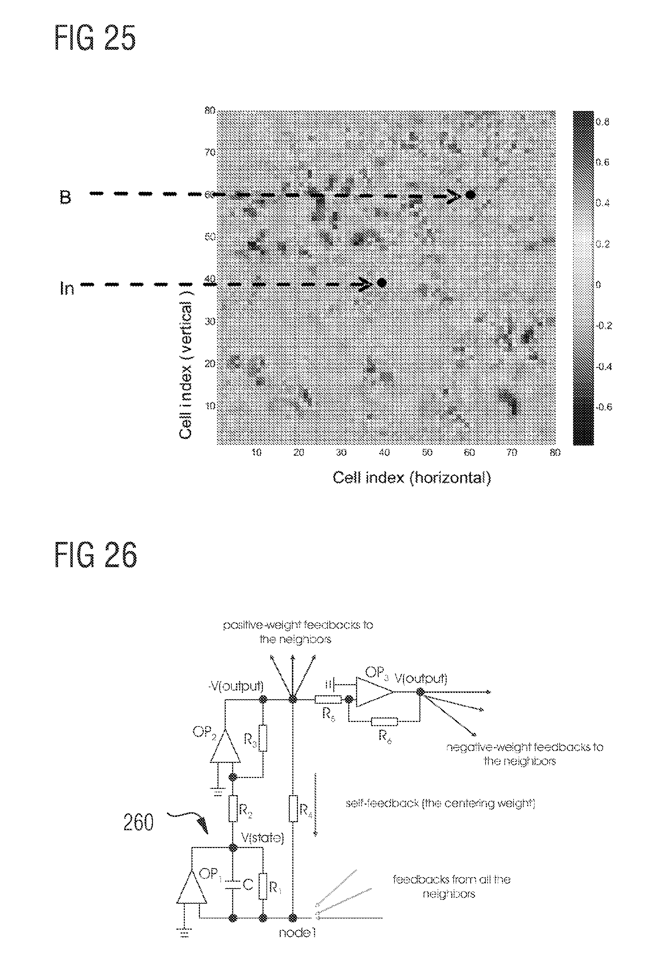

The simulations of Fig. 25 confirm that this structure sensitively responds to the change of circuit parameters (templates) as well. Changing only a single template at a particular position (denoted by **B** in the figure), even far away from an input (marked as *In* in the figure) going to alter the global behavior of the circuit detectably.

These simulation results confirm that this circuit inherits the 'global sensitivity' property from optical PUFs, which make those devices so appealing. The circuit behavior also appears to be complex, as it is expected from a nonlinear dynamic system with many degrees of freedom. Work is in progress to set up machine learning experiments on simulated data to confirm that our circuit indeed withstands such types of attacks.

Another very important characteristics of our circuit that its behavior is sensitive, but is not chaotic. Chaotic circuits are well known [16019] and several CNN templates are known to realize chaos [16020] [16021] [16022]. The time trajectories of a chaotic system are irreproducable in a real physical environment and seem to be unsuitable as a PUF.

**Effect Propagation and Read-Out Speed**

The interactions in the described cellular structures are propagating with a finite speed. If the dynamics of the system is interrupted after a short time then only cells lying within a finite neighbourhood can influence each other. Changing the length of the time evolution gives a possibility to balance 'global sensitivity' against error tolerance and robustness of the circuit.

Strongly depending on the template that we choose, the development of the full pattern *can* take considerable time. Assuming that the time constant of a single cell is $\Delta t$, and the circuit is composed of $n \times n$ cells, the entire pattern (with the signals bouncing back and forth between the boundaries) can take several times $n\Delta t$ time to develop.

This provides us with the possibility to design CNN-based SHIC systems which take *intendedly* long time in order to develop robust outputs, and even to set the read-out speed to an intrinsic, predefined value.

This leads the way for an extra security feature of CNN-based SHIC systems: it limits the rate at which data and information can be gathered from the circuit, making the task of reverse engineering or machine learning more difficult.

**19.4 Circuit implementation of CNN-based SHIC systems**

So far, we described the behavior of CNNs on an abstract, template-based level. We now investigate which design on a transistor level is necessary to enforce this behavior in a real circuit. This will allow us to estimate the information content per chip area and the scalability of the structure.

A non-programmable (fixed-template) CNN cell can be built using three operational amplifiers. Additional passive elements (resistors) set the cell to cell coupling via the cloning templates, and the feedback. The circuit schematics is shown in Figure 26.

The state variable is represented by a voltage 261 of a capacitor C. An operational amplifier $OP_1$, is used for limiting the state voltage and connecting one end 262 of the capacitor C, in particular (node1), to virtual ground. An operational amplifier $OP_2$ , a resistor $R_2$ and a resistor $R_3$ work as an inverting amplifier which can realize the full nonlinear transfer characteristic to map V(state) nonlinearly to -V(output). The resistor $R_3$ is usually several times larger than resistor $R_2$ so as to have the operational amplifier $OP_2$ driven to the saturation region. Another inverting amplifier $OP_3$ is used with resistor $R_5$ and $R_6$ to provide the actual V(output). The weights in the A template can be controlled by changing the resistances of one of the feedback resistors, e.g. the resistor $R_4$. The weight of the **B** templates are set by resistor values connecting from the neighboring cells to the node1. Kirchoff's current law applied for node1 can exactly present the CNN state equation we have discussed in Section 4. T

The simplest CMOS operational amplifiers can be built using seven transistors so the circuit of Figure 26 requires 21 transistors. Considering that a state of the art CPU contains a few times $\approx 10^7$ circuit elements, an approximately 1000 $\times$1000 cell fixed-template CNN could be reasonable to build [16023]. Each template carries at least a few bytes of information in its deviation from the nominal value. Obviously, some part of this information could be lost because of averaging / error correction, but the information content of the CNN-PUF should be comparable or even higher as the optical PUF of [1], [2].

Using a modest workstation and standard SPICE distribution [16024], we could verify the operation of few-hundred cell (few thousand transistor) circuits, and the results agree with the results from the template-based description.

Only highly parallelized, research-distributions of SPICE, running on supercomputers (such as Xyce [16025]) could deal with the few-million transistor circuits that could eventually be envisaged as CNN-based SHIC systems. This is a strong indication of the security of our CNN-based SHIC systems approach: Even if all the parameters of the circuit are known, it still takes hours for supercomputer to simulate the few microsecond or millisecond behavior of the CNN-based SHIC system. Reverse engineering of such a circuit would thus be formidably difficult.

**Error Correction and Stability.**

An important benefit of circuit-based SHIC systems is that there are efficient circuit solutions to minimize the output instability of the circuit. For example, bandgap references can provide temperature-independent voltage sources, albeit they make the circuit more complicated and slightly reduce the achievable information content per chip area.

We could not yet perform extensive simulations on large-scale circuits to estimate the effects of temperature, noise, power supply fluctuations, etc. on the circuits, as it requires extreme amount of computer power. It is known, however that cell to cell mismatch in CNN circuits dominates over temperature effects [16011, 16026], which is particularly important in our context. The templates are set by resistance ratios, so if those close-by resistors are at the same temperature, the temperature dependence of the templates will become very small. As the template-based simulations in Fig. 3 and Fig. 4 suggest, a one-percent change in circuit parameters does not make the circuit dynamics unrecognizable.

Furthermore, temperature compensation can be performed for certain templates by varying the currents and voltage levels. In cetain applications of CNN-SHIC Systems, it could hence be possible to measure the temperature of the CNN and to adjust the current and voltage levels accordingly to achieve stable read-outs.

In addition, the response vector $R_i$ is read-out as a result of a stationary process. While $R_i$ depends on the internal dynamics / timing of the circuit, noise, glitches may be averaged out, increasing the stability of the circuit.

## 19. 5 Conclusions: Assessment of CNN-based SHIC systems

In this dedicated section of this application, discussed CNN circuits with non-robust templates (i.e. CNNs which are sensitive to uncontrollable variations in their circuit parameters) as promising circuit implementations of SHIC systems.

We argued that (i) analog circuits, in general, yield to higher security than digital ones (ii) the CNN paradigm (or a similar cellular structure) is among the very few viable possibilities to build scalable analog arrays. Based on an physical analogy, we designed a template that inherits the benefits of optical SHIC systems or Optical Physical Unclonable Functions/Physical One-Way Functions [1] (such as high sensitivity, no averaging out effects, global interactions) and, on top of that, also displays nonlinear behavior. The complex internal interactions probably eliminate the possibility to construct a simple computationally non-intensive model of such a circuit.

Full characterization of the circuit by a faker is further complicated by the fact that the stationary (steady state) behavior of the CNN can be designed in such a manner that it takes time to develop; we could call such a circuit a *'slow read-out CNN-SHIC system'.* A brief analysis showed that the read-out time for one CRP can easily be put in the order of several milliseconds. This feature can make it complicated for a faker to obtain the large number of challenge-response pairs that he might need for reverse engineering or machine learning.

We could not give 'hard' computational limits on the difficulty of reverse engineering and simulating the behavior of a random (mismatched) CNN with the described template. Note, however, that providing such provably hard limits may be beyond the current state of complexity theory anyway. We refer in this context to the unsettled NP vs. P question and the general difficulty of giving hard, meaningful and non-linear boundaries for natural problems in NP.

Nevertheless, it can be argued convincingly that, based on the proven computational power of CNN chips [1609] [16027], [16028] their large internal information content and their parameter sensitivity, the use of CNNs as SHIC systems seems very promising. It may eventually yield to the highest security achievable by circuit-based SHIC systems with interacting components.

Large scale, cellular network of interacting analog (or mixed analog/digital) building blocks has been described, which acts as a high-performance analog computer with high sensitivity to individual device characteristics. We also propose the application of circuit design solutions to improve measurement repeatability. This class of electrical SHIC systems may also applied as interacting SHIC pairs to prove physical contacts between the circuits.

The security is provided by the computational difficulty of reverse-engineering. The analog computer significantly outperforms its digital emulation and the even more extensive cryptoanalysis by digital computers seems formidably difficult. Even if model building would succeed, re-fabrication would require VLSI ASIC fabrication combined with nanolithography, which could be expensive and time consuming even for government agencies.

Alternatively, the slowness of pattern formation can protect the full characterization of the device.

With mass fabrication, the CNN-SHIC object could be relatively cheap just as today's VLSI chips.

## 19.6 Variants, Part I

We further propose the use of similar nonlinear circuit arrays as above, which are giving an approximate, discretized solution of other, some known partial differential equations. Examples include the following:

    * Navier-Stokes equation
    * Newton's Second Law in dynamics (mechanics)
    * Navier-Stokes Equation in Fluid dynamics
    * Hamilton's equations in classical mechanics
    * Radioactive decay in nuclear physics
    * Newton's law of cooling in thermodynamics
    * The wave equation
    * Maxwell's equations in electromagnetism
    * The heat equation in thermodynamics 30
    * Laplace's equation, which defines harmonic functions
    * Poisson's equation
    * Einstein's field equation in general relativity
    * The Schrödinger equation in quantum mechanics
    * The geodesic equation

* The Navier-Stokes equations in fluid dynamics
* The Lotka-Volterra equation in population dynamics
* The Black-Scholes equation in finance
* The Cauchy-Riemann equations in complex analysis
* The Poisson-Boltzmann equation in molecular dynamics
* The shallow water equations
* Verhulst equation - biological population growth
* Lotka-Volterra equations - biological population dynamics
* Replicator dynamics - may be found in theoretical biology
* The Black-Scholes PDE
* Hyperbloic PDEs
* Parabolic PDEs
* Elliptic PDEs
* Stochastic PDEs
* Etc.

Further examples include the following PDEs:

* Benjamin-Bona-Mahony
* Benjamin-Ono
* Boomeron
* Born-Infeld
* Boussinesq
* Buckmaster
* Burgers
* Cahn-Hilliard equation
* Calabi flow
* Camassa-Holm
* Carleman
* Cauchy momentum
* Caudrey-Dodd-Gibbon- Sawada-Kotera
* Chiral field
* Clairaut equation
* Complex Monge-Ampère
* Davey-Stewartson
* Degasperis-Procesi
* Dispersive long wave
* Drinfel'd -Sokolov -Wilson
* Dym equation
* Eckhaus equation
* Eikonal equation
* Einstein field equations
* Ernst equation
* Euler equations
* Fisher's equation
* Fitzhugh-Nagumo
* Gardner equation
* Garnier equation
* Gauss-Codazzi
* Ginzburg-Landau
* Gross-Neveu
* Gross-Pitaevskii
*Hartree equation
* Hasegawa-Mima
* Heisenberg ferromagnet
* Hirota equation
* Hirota -Satsuma
* Hunter-Saxton

* Ishimori equation
* Kadomtsev-Petviashvili
* von Karman
* Kaup
* Kaup -Kupershmidt
* Klein -Gordon -Maxwell
* Klein -Gordon (nonlinear)
* Klein -Gordon -Zakharov
* Khokhlov -Zabolotskaya
* Korteweg-de Vries (KdV)
* KdV (generalized)
* KdV (modified)
* KdV (super), and other KdV variants
* Kuramoto -Sivashinsky
* Landau-Lifshitz model
* Lin-Tsien equation
* Liouville
* Minimal surface
* Molenbroeck
* Monge-Ampère
* Navier-Stokes (and its derivation)
* Nonlinear Schrödinger (cubic)
* Nonlinear Schrödinger (derivative)
* Omega equation
*Plateau
* Pohlmeyer -Lund -Regge
* Porous medium
* Prandtl
* Primitive equations
* Rayleigh
* Ricci flow
* Richards equation
* Sawada-Kotera
* Schlesinger
* Seiberg-Witten
* Shallow water
* Sine-Gordon
* Sinh-Gordon
* Sinh-poisson
* Swift-Hohenberg
* Three-wave equation
* Thomas equation
* Thirring model
* Toda lattice
* Veselov -Novikov
* Wadati- Konno- Ichikawa- Schimizu
* WDVV equations
* WZW model
* Witham equation
* Yamabe
* Yang-Mills equation (source-free)
* Yang-Mills (self-dual/anti-self-dual)
* Yukawa equation
* Zakharov system
* Zakharov-Schulman
* Zoomeron
* $\varphi 4$ equation
* $\sigma$-model

### 19.7 Variants, Part II: Autowave CNN

Another possible variant lies in the use of autowave CNNs.

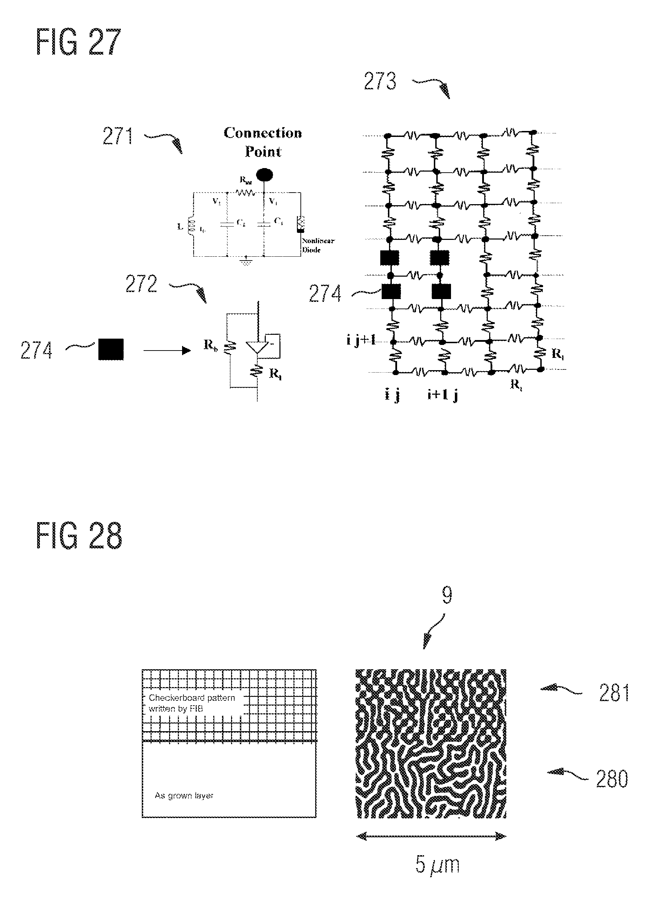

Figure 27 further shows elements of one particular implementation built from interconnected Chua's circuits [69], which are the classical example of chaotic circuits. Figure 27 shows a schematic view 271 of a Chua circuit, that is based on cells 272 which are arranged in an arrray 273, where the cell 272 is depicted by a black dot 274. Arrays of Chua circuits have been shown to produce complex patterns, such as spiral waves. The details of the patterns and the type of the pattern can be sensitive to the non-idealities of the circuit elements [70].

From the practically infinite number of possible autowave CNN templates there may be a lot more which are combined by fabrication mismatches, and which can serve as SHIC systems.

### 20. Using nonlinear magnetic materials in SHIC systems

### 20.1 Device description

Magnetic domains are among the most complex patterns occurring in nature and they are sensitive to atomic-scale variations of the material surface / roughness. When desired, magnetic domain walls can be defined artificially, e.g. writing them with an FIB (Focused Ion Beam) system on the surface of a chip.

Figure 28 show an example of a natural/random domain pattern 280 and an artificial, prestructured domain pattern 281 of a CoPt film. The example is taken from [75].

Magnetic materials can be used in SHIC systems in two ways:

- As a part of an electrical SHIC system and providing unique and nonlinear inductors in the circuit,

- A magnetic layer, when excited by external field sequences and measured by a magnetic sensor (e.g. Hall sensor) array can itself behave as a SHIC system.

### 20.2 Summary

A SHIC system, where the information is carried by the unique domain patterns of a magnetic elements which change in an external magnetic fields, or the unique inductance values represented by nanoscale magnets or magnetic domains.

Domain formation phenomena are directed by atomic-scale irregularities of the surface of the film, making characterization/re-fabrication very difficult.

The magnetic film/nanoparticles can be fabricated cheaply and price of an integrated or external read-out circuitry is acceptable.

### 21. On-chip interference of surface acoustic waves

### 21.1 System description

Wave phenomena, interference patterns may also be a useful realization of SHIC systems. Surface acoustic waves (SAWs) can be easily generated and detected on semiconductor surfaces, if the surface is inhomogenous [76] and there are multiple wave sources on the chip, complex standing wave phehomena can occur.

Surface acoustic waves can be generated / detected on the surface of a piezoelectric material in a straightofrward way (such as using interdigital transducers). Their frequency lies in the gigahertz range, so they can be easily converted to electrical signals.

The SAW-based SHIC object is a piezoelectric surface, with randomly positioned gratings / scratches / holes, with combinatorial excitations (microwave signals with varying amplitude / frequency) applied at chosen inputs and the electromechanical signals are picked up at the outputs, where their frequency / amplitude is measured. The nonlinear nature of the SAWs produces crosstalk and combinatorial excitations can be applied.

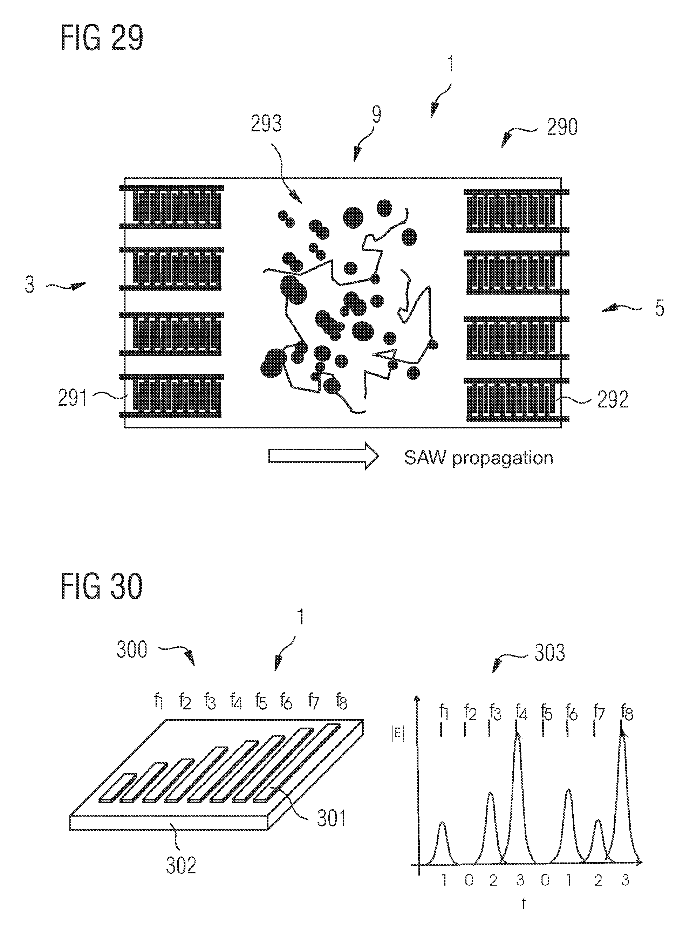

Figure 29 shows a device that can be used as a SHIC system 1 and is based on the propagation of surface acoustic waves. The device 290 comprise input transducers 291 and output transducers 292 and a disturbing structure 293 disposed between the input transducers 291 and the output transducers 292. The disturbing structure 293 maybe composed of gratings, scratches or holes.

Surface acoustic wave technology is mature and relatively cheap: SAW-based filters are found in almost all cell phones.

### 21.2 Summary

In summary, the SHIC system decribed in this section is a SHIC system whose physical uniqueness is coming from the surface irregularities of a piezoelectric film and where a complex interference pattern of surface acoustic waves can form.

The SAW wave pattern is sensitive to irregularities on the 10 nm - 100 nm size scale and it operates on a high frequency. Due to the damping of the SAWs they are probably less secure than a optical wave propagation based SHIC system

The device is similar to commercially available SAW filters and should be reasonably cheap.

### 22. SHIC systems accessed by electromagnetic fields (SHIC-RFIDs)

We propose that the above described systems (esp. the diode networks and non-linear cellular arrays) can be interrogated with electromagnetic fields and used in radio-frequency identification devices (RFIDs). We propose both passive (transistorless, chipless) and active (silicon-chip based) RFID devices.

### 22.1 Chip-based RFID

The device is composed of:

1. An antenna that draws power from EM field and receives information coded in the frequency domain/time domain,
2. A chip that generates combinatorial input from the signal received by the antenna
3. A SHIC system, which can be a low-power version of any above-proposed electrical SHIC devices and which generates an output vector,
4. An A/D converter which measures the output and modulator device that converts it to EM frequencies
5. An output antenna, which re-radiates the digitized answer of the SHIC system and which can be the same as the input antenna.

### 22.2 Chipless SHIC RFID

The device is build up from conductors (such as metal filaments), which act as frequency-selective antennas/ resonators, the combinatorial input is directly generated by the absence or presence of this frequency in the excitation spectrum.

The principle of operation is sketched in Figure 30. It shows a device 300 that comprises a plurality of different frequencies elective antennas 301 on a substrate 302. The four intensity level per frequency band (absence of signal and three intensities) codes two bits of information for each of the frequency levels. If we assume that the antennas 301 can be excited by ten different frequencies and they are also polarization sensitive, then thirty antennas 301 can be applied in each device 300 enabling distinct combinatorial inputs. An example for the spectra 303 of such excitation signals is also shown in Figure 30. The excited system for example, can be a random diode network measured in the frequency domain.

### 22.3 Summary

This section relates to variants of the proposed SHIC systems, which are powered and interrogated by electromagnetic (e.g. radio frequency) waves and can be used as SHIC RFID's, i.e. as SHIC systems that can be interrogated remotely.

The security aspects are similar to those of the underlying SHIC system.

The costs for production are slightly higher than the underlying SHIC system since antennas are not expected to increase production costs significantly.

### 23. On-chip optical implementations: Overview

After we have discussed electrical or electro-optical systems over the last sections, we will now devote our attention to optical implementations. As it was already discussed in section 6, optical system are suiteable devices for SHIC systems: their stability, the low losses occuring in transparent optical media and the intrinsic diversity and complexity of interference patterns are all desirable properties of a SHIC object.

The SHIC object as described in the seminal paper of [2] is highly impractical as the external optical measurement apparatus is delicate and unstable. Our invention descibes the possibilities to build an on chip implementation of an optical SHIC system and eliminate the need for accurate optical measurements. Note that this is a non-trivial task, as the SHIC system of [2] is intrinsically a precision-measurement *linear* SHIC system. Linear optical systems cannot display combinatorial complexity, for the same reasons as linear circuits cannot (see section 7.3). To extract the necessary amount of structural infomation from linear systems a very large parameter space is required for the input / output variables. This large parameter space translates to a very high positioning accuracy for the laser spot.

To realize non-precision measurement SHIC systems by optics some suggestive possibilities are:

- An optical system, with an extremely large number of fixed position inputs and outputs, which can carry super-high information content even if there is only a linear transfer function between the inputs and outputs.,

- An optical system that shows a linear optical behavior, but couples to nonlinear electrical components with detectors / light sources / circuits

- A nonlinear optical system that allows the application of combinatorial optical excitations

- A nonlinear optical system with a coupled nonlinear circuitry.

These possibility will be discussed over the next sections. A common property of the above described systems is that the sources (lasers, LEDS) and the photodetectors are placed in fix position to the SHIC systems, no moving parts are necessary and the the entire system can be integrated into a monolithic circuit.

The optical media is extremely stable against temperature variations, aging and fluctuations in optical power. This stability is more difficult to achieve in electrical systems. The proposed electrical / optical SHIC object can unite the beneficial properties of optical systems (i.e. stability) and electrical circuits (straightforward measurement and possibly complexity arising from nonlinear behavior).

## 24. SHIC systems with linear optical components

### 24.1 Scattering tokens with very large number of inputs / outputs

We propose SHIC objects, which are built as combinations of an inhomogenous, linear optical media (which produces a unique and highly complex speckle pattern) and an electrical excitation / detector array, to access it electrically.

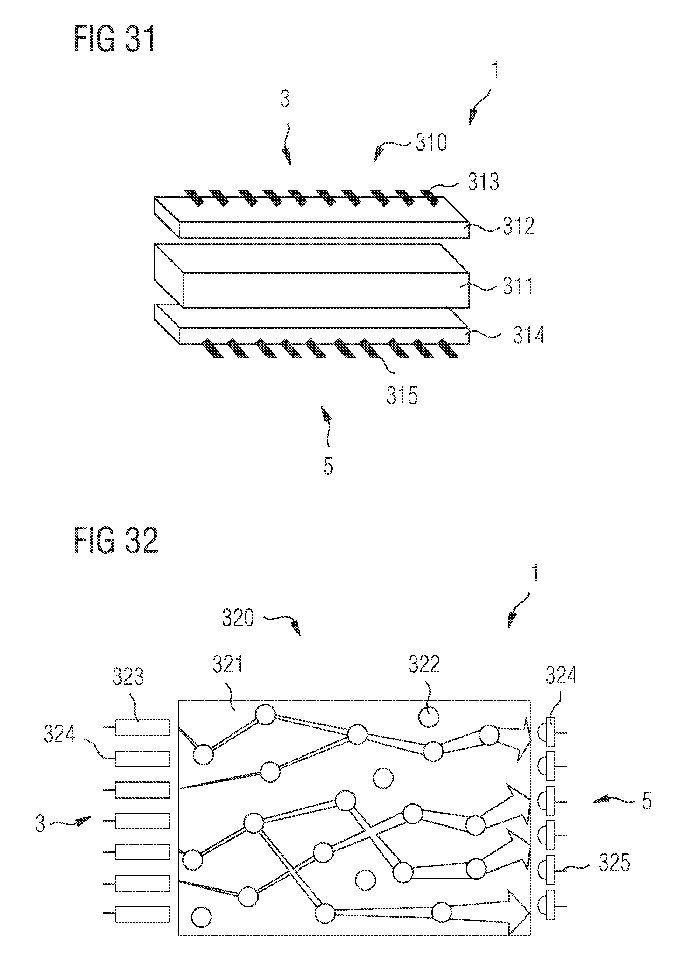

Figure 31 shows a device 310 that comprises an optical medium 311 that interacts with an array 312 of light sources such as laser diodes or LEDs, that can be controlled by input terminals 313. The optical medium 311 furher interacts with an array 314 of photo detectors such as photo diodes. The photo diodes of the array 314 are connected to output terminals 315.

The linear optical media can be characterized by a scatterig matrix $S$, with dimensions $m \times n$, where $m$ is the number of excitations sources (inputs, LEDs) and $n$ is the number of measurement points (i.e. the number of pixels in the detector array). Assuming that $m \approx 10^7$ and $n \approx 10^7$ and the photodetector array can distinguish between $k \approx 10$ intensity levels, the S matrix carries $m \times n \times \log k \approx 3 \cdot 10^{14}$ bits of information, a sufficent amount for a SHIC system. This system does not exhibit combinatorical or exponential input-output complexity, such as some of our earlier suggestions and the systems discussed in section 22. Rather, its considerable complexity stems from the large number of inputs / outputs and the complexity of long range optical 'interconnections'.

### 24.2 Scattering token coupled to nonlinear and / or slow circuitry

A linear optical media, with an electrical LED / photodetector array, the electrical circuits exhibiting nonlinear behavior and the source / detector array being optically and possibly also electrically interconnected. SHIC-behavior appears due to the interplay of the high-information optical matrix and the nonlinear circuit behavior. The nonlinear circuit behavior enables combinatorial adressing.

A further possibility id that the read-out circuitry (for example, a CCD array) can be constructed to be very slow - full characterization would then take very long time and this adds an additional layer of security. It would be extremely difficult for the attacker to disassemble the monolithic circuit and install a faster photodetector array.

Both constructions allow to reduce the number of inputs / outputs in the structure.

### 24.3 Summary

Therefore, a SHIC system may also a system where the information is carried by an optical media, which is accessed by an extremely large number of contacts and / or a nonlinear circuit attached to the photodiode / photodetector array or a detector array interconnected in a nonlinear way or a detector array that limits read-out speed and prevents full characterization in a reasonable amount of time.

Such a system is also secure because the optical medium carries a well-defined amount of information in three dimensions and with an excellent long-term stability.

If the LEDs / photodetectors and the electrical circuitry can be built from organic materials, then it can be reasonably cheap - solid state based implementations (with GaAs photodiodes / photodetectors) would be relatively expensive.

## 25. Combinatorial Optical SHIC systems

For linear optical systems, their response is independent of the illumination intensity (i.e. the amplitude of the interrogating optical signal) and only a very large number of inputs and outputs can result in SHIC-system behavior. On the contrary, if non-linear optical components are used, combinatorial complexity appears and a relatively small number of inputs / outputs can yield to sufficiently large information complexity.

Such a system has already been depicted in Figure 1.

## 25.1 Implementation possibilities

The optical medium of the SHIC system should show strong nonlinear behavior, it should resist to aging / degradation and its characteristics should not exhibit strong temperature dependence. It also has to be unique (non-reproducible and different for each device instance). Scattering centers (linear / nonlinear / active / passive), randomly distibuted in a transparent (linear / nonlinear / active / passive) medium can be used. As a rule, nonlinear optical behavior occurs at relatively high intensities, which is not practical in the applications envisioned. In general, resonant nonlinear effects require only moderate intensities as compared to nonresonant ones. Also gain/loss saturation effects can appear at modest intensities. Prominent examples are resonant plasmonic effects as resonant passive effects and random optical gain media similar to the ones used for random lasing.

## 25.2 Random gain media

Here we envision the use of random optical gain media similar to the ones used for random lasing, i.e., gain media which also contain scattering centers. Depending on the density of scattering centers, the degree of scattering can be adjusted between a combination of amplification and scattering for low densities and weak or even strong localization leading to local lasing for high densities of scatterers.

The principle of operation of a random lasing SHIC system 1 is sketched in Figure 32.

Figure 32 shows a device 320 that comprises an optical medium 321 which can be linear or nonlinear. In addition to the optical medium, there might be particles 322 that are embedded in the optical medium 321. These particles 322 may be made from a linear or nonlinear gain medium. Also the optical medium 321 may be made from an optical gain medium. The particles 322 are randomly placed and oriented scatterers, which are comparable in length with the wavelength of the exciting light. The device may in addition contain an external pumping source that is not shown in Figure 32. Instead of the particles 322 the optical medium may also contain other inhomogenities above the atomic scale.

The device 320 further comprise an array of light sources 323 such as laser diodes or LEDs. Finally, the device 320 also comprises an array of photo detectors 324. The light sources 323 and the detectors 324 are accessible by a plurality of input connections 325 and output connections 326.

In the context of random lasing, both optically and electrically pumped operation [77] has been demonstrated, so the proposed device can be realized in both ways.

Besides the random lasing SHIC object, we envision:

- Metallic nanoparticles, with different size / aspect ratio and plasmonic resonance frequencies, distributed randomly in a transparent glass / polymer matrix. The strong resonant field enhancement in these particles yields to nonlinear effects.
- Colloidal quantum dots as nonlinear media
- A large number of extremely small photodetector / photodiode circuits, embedded in a 2D or 3D transparent matrix

## 25.3 Active photonic crystals

Mutiple laser beams entering an active and nonlinear media through waveguides can exhibit strong and non-local crosstalk. The intensity / phase of the beams passing through the structure can strongly depend on the intensity / phase of the other beams entering the structure. This results in combinatorial complexity.

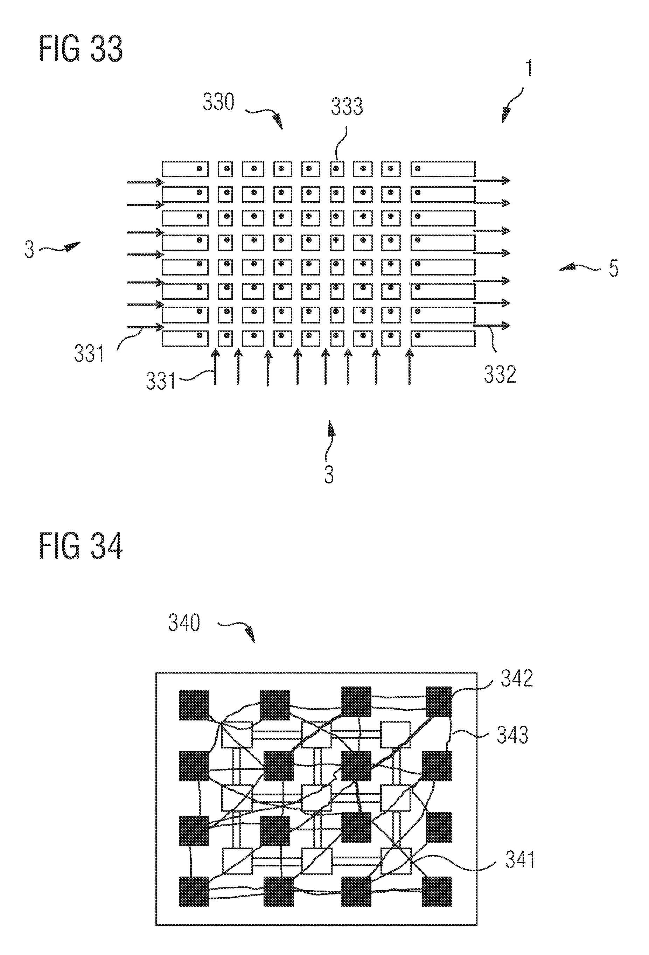

A possible implementation using photonic crystal waveguides is shown in Figure 33.
Figure 33 shows a device comprising an active two-dimensional photonic crystal 330 with a plurality of waveguide inputs 331, waveguide outputs 332 and a pluraltiy of cells 333.

From the system / architectural point of view this optical system shows a close analogy to the electrical SHIC system: it is also a cellular structure, the cells being nonlinear and active, but not in the electrical but the optical regime. Wiring is provided by photonic crystal waveguides. The most obvious choice for the cell elements are cavity nano-lasers / quantum dots.

### 25.4 Optical SHIC systems using inhomogenous organic materials

Organic solar cells / photodiodes are highly inhomogenous on the 100 nm / micrometer scale. Organic materials may make it possible to fabricate the photodiodes, photodetectors, the optical scattering media and the nonlinear circuitry from the same material system, potentially at very low costs. It is straightforward to add plasmonic nanoparticles to the organic matrix or other elements which increase nonlinearity.

### 25.5 Summary

Thus, optical systems, where the nonlinear and active optical materials / components give the possibility to combinatorial excitations, can also be used as SHIC systems.

The information density can be very high with material inhomogenities in the micrometer regime and media built in 3D and he speed of the device can potentially be much faster than any of its electrical imitation.

The need for photodiode / laser / photodetector array could make the device relatively pricey. This could be balanced by the fact that the random lasing optical media and the dispersed metallic nanoparticles can be relatively inexpensive. Photonic crystal based SHIC systems should be fabricated with a relatively complex and expensive technology. A full organic realization could be very cheap.

### 26. Tamper Sensitive SHIC Systems

Tamper-sensitive SHIC systems are specially designed circuit units, which physically protect an underlying electronic system. The output vector of these SHIC systems should drastically and irreversibly detect any (even small / delicate) change in their physical structure.

### 26.1 Passive tamper sensitive SHIC systems

Slow read-out crossbar structures can be fabricated to as a coating on top of conventional integrated circuits - their fabrication technology (BEOL process) makes them especially suitable for this. An attacker, who drills 'holes' in the crossbar, inevitably destroys some bit and word lines and changes their corresponding read-out value. The same holds for the irregular inhomogeneous medium - here the drilling can destroy some of the long range interconnections in the medium.

Passive tamper sensitive systems have inherent limitations: since in a passive device any disturbance will have a localized effect, a small 'hole' can remain unnoticed. For example, in a 1 cm size, slow-read out crossbar array, a 10 size hole would destroy only 100 bit and word lines and 99.9 percent of the information would remain intact and accessible.

### 26.2 Active tamper sensitive SHIC systems

Consider the circuit 340 sketched in Figure 34, where a protected circuit 341 is surrounded / covered by a cellular analog array 342 such as the systems described in Section 7. The interconnections 343 of the protected system and the protecting SHIC circuit are running close, and access to the protected circuit 341 should cut through / alter the interconnections 343 of the SHIC array. The cobweb-like analog interconnection 343 of the SHIC system protects the underlying circuit 341.

If the analog cellular array is sensitive to the timing / resistances between its cells and if any change in a single cell to cell interconnection has a non-local effect, possibly changing all SHIC output vectors, then it acts as an ideal tamper-sensitive SHIC system and the underlying (protected) circuit can verify its hardware integrity with a single (or a few) measurements.

### 26.3 Optics-based tamper-sensitive SHIC system

The random optical media described in previous sections can also serve as a tamper-sensitive SHIC system.

The photodetectors of the electrical circuit as shown in Figure 12 immediately detect any change in the interference pattern of the optical scattering medium, which inavoidably happens if the attacker breaks / drills into the optical matrix.

**26.4 Summary**

In summary, SHIC systems can also be used to create tamper-sensitive devices. In particular circuit-based SHIC systems allow to verify the physical integrity of the hardware of a protected circuit that can also be integrated with the SHIC system.

It should be noted that while passive SHIC systems can protect against a large number of invasive attacks, active SHIC circuits are even more sensitive and can detect practically any tampering.

The production of tamper-sensitive devices requests additional fabrication steps (crossbar / inhomogeneous media / optical components) or additional chip areas and mixed analog digital circuitry in addition to the protected chip. These added elements are still significantly cheaper than an external sensor-based protection circuit.

**27. Implementation of Interacting SHIC Systems**

**27.1 General considerations**

In section 5 of this application we discussed the concept of interacting SHIC systems. Their special characteristics allow a proof that two interacting SHIC systems $S_1$ and $S_2$ are in close physical proximity to each other, as described in detail in section 5. We argue now that networks of (locally) interconnected active circuit elements are attractive realizations of such systems.

The proposed device consists of:

- Two (or more) analog circuit / analog circuit and optics based SHIC system (similar to the ones described in previous section of this document), which are operating on a equence of combinatorial excitation and their response time lies in the microsecond - nanosecond range,

- An electrical / optical / radiowave transducer system is capable of reliably transmitting a sequence of combinatorial inputs / outputs at a high speed (Gbit/sec),

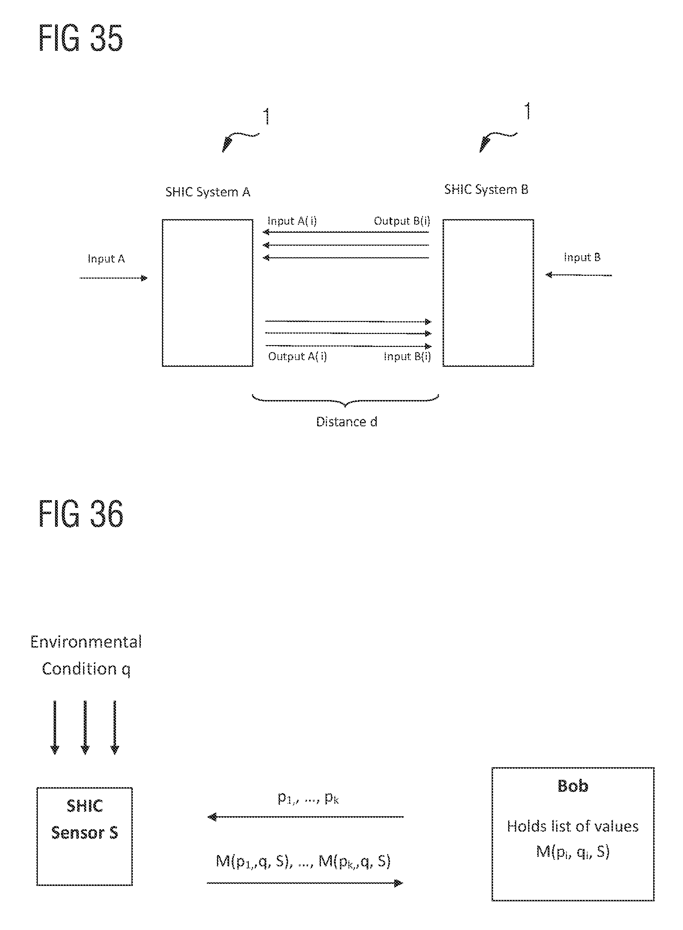

Figure 35 illustrates the interconnection of the SHIC systems and their excitation scheme.

The aim of the set-up is to prove to a third, remote party that the two depicted systems are in close proximity d to each other. To that end, they quickly exchange signals between each other, which mutually influence their behavior and their eventual outputs. If the two systems are in close proximity d, the signals can travel from one system to the other in short time, leading to different system outputs if the two systems were far remote of each other.

In particular, as shown in Figure 35, the vectors Input A and Input B can serve as an initial input to the two systems. They can be randomly chosen or otherwise determined by the third party, to whom it shall be proven that the two SHIC systems are in close proximity. The SHIC systems *A* and *B* then fastly mutually exchange a sequence of signals Output A(i) = Input B(i), and Output B(i) = Input A(i), for i=1, 2, ..., n, with each other. Eventually, they produce the (global) outputs Output A and Output B.

When the two systems A and B are placed not in close proximity d, but at a significantly larger distance D, then the input vectors Input A(i) and Input B(i) arrive from systems *A* and *B* with at least *D* / *c* additional delay, where *D* is the distance of the two systems and *c* is the speed of light. If the natural reaction time, for example the clock frequency, of the systems $S_1$ and $S_2$ is in the nanosecond (ormicrosecond) time range, then the *D* / *c* additional delay starts to inevitably and detectably influence the SHIC system responses Output A and Output B if their distance is larger than several decimeters (several hundred meters).

Output A and Output B are transferred to the third party, who knows the correct values for Output A and Output B for the case that the systems are in close proximity to each other, and compares them to the transferred values. An attacker (Eve) could thus break the security of the scenario only if she could emulate the behavior of one of the systems A or *B* in real time at a specific location. According to their definition, this is be impossible for an interacting SHIC system.

**27.2 Implementation**

The simplest interconnection of two SHIC systems can be done through a digital channel. A/D conversion and a simple microwave (or Ethernet) connection can easily achieve Gbit/s transfer rates and few-ten nanosecond conversion times. The physical limitation is only the $\Delta T$ response time. Any SHIC system implementation with a response time of $\Delta T = 10^{-6}...10^{-9}$ is applicable as interactive SHIC systems, such as optical or analog circuit-based realizations.

## 28. Implementation of SHIC Sensors

In section 7, we discussed the possibility of using special SHIC systems as sensors that can prove that the recorded sensor data is authentic. In this section, we will very briefly discuss implementations of this idea.

Again, non-linear networks are one suited ingredient for SHIC sensors. For example, callular non-linear networks (CNNs) with unique fabrication characteristics may be used as temperature-dependent sensors, especially if no dedicated circuit solutions (or only reduced/taylor-made solutions) are applied to delimit their temperature dependency. Furthermore, since CNNs have often been suggested in image transformations anyway, they are naturally suited as SHIC camera sensors. Tactile sensitive CNNs can also be imagined and are even currently researched, making them usable as SHIC fingerprint sensors.

In principle, most implementations of SHIC systems discussed in this application could be used as SHIC sensors, provided that their behavior is made dependent on a respective external quantity, and is sufficiently stable as a function of the quantity and the measurement parameter.

## 29. Advantages of SHIC based Cryptography and Security

Compared to standard techniques, the use of SHIC systems in cryptography and security offers the following advantages:

1. The security of some protocols based on SHIC systems is independent of the standard mathematical assumptions that plague mathematical cryptography. Thus, SHIC systems potentially can provide a new, independent fundament for cryptography, which depends on its own, independent class of assumptions.

2. Secret binary keys can be spied out or transferred from computer systems by malware such as viruses or Trojan horses. SHIC systems cannot.

3. Secret binary keys can be extracted from chips, especially from mobile environments, by a variety of attacks, including invasive, semi-invasive and side channel attacks. This is a strong problem in the generation of forgery proof, machine readable labels. SHIC systems are not endangered by these types of attacks, since they achieve the same goals without storing secret keys.

4. If used in hardware protection and labeling, SHIC systems are much cheaper and more lightweight than classical systems (such as tamper-proof environments with secret binary keys) with comparably security. This is of particular importance in mobile and mass-market applications.

The SHIC systems generally comprise at least two features of the group comprising the ability to process non-binary input signals, the ability to process wave signals, a bandwidth at the terminals and an information content ensuring an incomplete readout of the information content within a predefined access time period, a special and/or logical disorder of the inner structure, and a non-linear relation between the input signals and output signals appearing at the terminals wherein the parameters of these features must ensure that from the knowledge of a subset of the predefined settings and of associated response signals, the response signal associated with a particular setting outside the subset is not predictable with a probability higher than the probability for guessing the response signal. It should be noted that the readout of the information shall imply the direct retrieval of the information without further analysis or processing of the response signals. A system that comprises at least two of the features listed above and which has inner structure ensuring that a response signal is not predictable from a set of known challenge-response-pairs (CRPs) is a suitable system for security purposes. The system can be produced in a very compact way. Furthermore, it is easy to handle since no moving components are needed. Therefore, the system comprises also a high degree of reliability.

In one embodiment, the inner structure of the system may comprises a conducting network interconnecting input terminals that are used for the input signals and output terminals that are used for the output signals. Such a signal can be produced using standard lithographic technology for the production of semiconductor devices.

In one particular embodiment, the inner structure of the system comprises a non-volatile memory-like structure with a high, random information content and with a slow access speed or low read-out rate, respectively.

Further, the system may comprise an inner structure that includes conducting network components with non-linear current-voltage-characteristics. Such a system can also be used for security purposes since a prediction of the response signal requires knowledge of the exact current-voltage-characteristic of the individual network components.

Another embodiment of the system comprises a cellular non-linear network that includes a plurality of cells interconnected to radiation cells. The temporal behavior of the state of a particular cell depends on the state and on differentials with respect to the state of neighboring cells. Also these systems can assume a degree of complexity that prevents any successful attack of an adversary.

The system can also be realized by using wave signals as input signals generated by a plurality of input signals sources. In this case, output signal detectors that are associated with terminals of the inner structure are arranged for receiving wave signals as output signals.

In particular, if a medium is placed between the input signal sources and the output signal detectors that results in a non-linear relationship between the input signal and the output signal the complexity of the system can be significantly increased.

The same holds if the system comprises the ability to process input signals comprising waves with various wavelength. In this case, wavelength dependent properties of the medium can be used to create an unpredictable response signal, in particular, if the medium comprises a disordered structure.

The medium may, for example, comprise a disordered structure made from at least two materials having different wavelengths dependent physical properties regarding the propagation of waves.

Another new type of SHIC systems proposed in this application is the erasable SHIC system. Erasable SHIC systems can lead to strongly improved practicality in PUF-based or SHIC-system based protocols. For example, they can limit the storage volume that must be reserved for storing the response signals of previous measurements of a SHIC system/ a PUF in authentication or identification protocols. Furthermore, they allow to re-use the same SHIC system in many subsequent protocols without affecting the security of previous protocol executions. This leads to obvious economic advantages.

Furthermore, a number of SHIC systems can also form a joined system if the systems are arranged for generating a response signal that depends (i) on a challenge signal applied to the joined system and (ii) the inner structure of the joined system and (iii) the physical distance of the (sub-)systems forming the the joined system. The response signal can be sent to a remote system, and the challenge signal can be provided by a remote system, too. This technique allows to prove the physical distance of the SHIC systems forming the joined system to a third party. In particular, it enables the proof that two systems are in close physical proximity (so-termed proof of colocality).

The system can also be used for a method for security purposes. The method starts by requesting a measurement on the system, wherein the measurement is performed by applying a challenge signal to the system and by receiving a response signal dependent on a setting of the challenge signal and dependent on the inner structure of the system. The response signal is further validated by comparing the response obtained by the measurement with a response obtained from a previous measurement. Such a method can in particular be used for a secure cryptographic key exchange, for securing identification of entities over an insecure network and for testing labels.

The method can further be used for performing an oblivious transfer of information or for proving colocality of two interacting systems.

Table II shows the most important system implementations, their information complexity. We claim that our application is the first which proposes such systems and their corresponding security protocol.

Table III below shows a summary according the physical quantity representing the information and information hiding/protecting mechanism:

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds or groups described in conjunction with a particular aspect, embodiment or example of the invention are to be understood to be applicable to any other aspect, embodiment or example described herein unless incompatible therewith.

Table I: Some specific implementation variants (see text for details)

| Res/Tecb | #/Bl | $N_{Bl}$ | $k_{Bl}$ | $k_{tot}$ | $T_{full}$ | Size |
|---|---|---|---|---|---|---|
| 100 nm | 1 | $10^{10}$ b | $10^2$ b/s | $10^2$ b/s | 3 y | 1 cm$^2$ |
| 33 nm | 3 | $10^{11}$ b | $10^2$ b/s | $10^3$ b/s | 3 y | 1 cm$^2$ |
| 10 nm | 1 | $10^{10}$ b | $10^2$ b/s | $10^2$ b/s | 3 y | 1 mm$^2$ |
| 10 nm | 1 | $10^8$ b | $10^2$ b/s | $10^2$ b/s | 12 d | 100$\mu$m$^2$ |
| 10 nm | 10 | $10^{12}$ b | $10^3$ b/s | $10^5$ b/s | 31.7 y | 1 cm$^2$ |
| ALILE | 1 | $10^8$ b | $10^2$ b/s | $10^2$ b/s | 12 d | 1 cm$^2$ |
| ALILE | 10 | $10^8$ b | $10^2$ b/s | $10^3$ b/s | 12 d | 1 cm$^2$ |
| ALILE+T | 10 | $10^8$ b | 10 b/s | $10^2$ b/s | 116 d | 1 cm$^2$ |

Table II: Overview and comparison of the proposed systems, based on their implementation.

| Device name | Information Carrier | Est. information density | Excitation | Read-out | Variants | Special application | Technology | Remark |
|---|---|---|---|---|---|---|---|---|
| | | | | | | | | |
| **Slow read out crossbar** | Serial resistance / of nonlinear junctions | 1 bit / (50 nm)$^2$ $10^1$ bit /device | Voltage applied to word line though decoder Optically | Sense voltage measurement through decoder | Several possible material system + technology Y | Coating PUF | Standard Silicon + nanowire by nanoimprint | |
| | programmed phase change or other photosensitive layer | | | | | | | |
| **Irregular diode network** | Diode nonlinearity + circuit interconnection graph device | Volumetric- 1 bit / (100 nm)$^2$ | Combinatorial, static voltage | Static current / voltage measurement at selected outputs | Several possible material system + technology Y | Coating PUF Interacting SHIC coupies | Silicon read-our circuity + spezial technology | |
| | Mutual capacitances | Up to $10^{12}$ bit / device | Combinatorial, pulse | Time delay measurements | | | | |
| **Cellular Nonlinear Circuits** | Transistor thresholds, resistances, interconnection delays, mutual capacitances | Few bits per square micron Few-ten bits / cell $10^8$ cell / device | Electrical signals at the edges or internal circuit nodes Optical excitation via built-in sensors | A $\rightarrow$ D conversion, electrical read-out | Very wide scale of circuit design: PDE, CA, Chaotic oscillators, etc. | Cameras Interacting SHIC coupies | Analog CMOS, standard Silicon-based | Special designs for increased stability against temperature, power supply variations |
| **Magnetic media** | Domain pattern / surface roughness of magnetic film | 1 bit / (100 nm)$^2$ $10^{10}$ bit/ /device | Sequence of magnetic fields generated by external or integrated coils | Built-in Hall sensors or optical | Many possible magnetic films of mixtures of magnetic nanoparticles | | Silicon + silicon compatible | |

(continued)

| Device name | Information Carrier | Est. information density | Excitation | Read-out | Variants | Special application | Technology | Remark |
|---|---|---|---|---|---|---|---|---|
| **SHICRFID** | Any of the above | Any of the above | EM fields, presence / absence of certain frequencies in the spectrum | EM fields, presence / absence of certain frequencies in the spectrum | | Mobile devices | Antenna printing of the above | |
| **Combined optical / electrical SHIC system** | Optical scattering media and possibly circuit element nonlinearities | Optical part: volumetric, $1 \text{ bit} / (100 \text{ nm})^3$ | Integrated LED or laser array | Integrated photo detector array | Linear optical system with very large number of I/O Linear optical system + nonlinear circuit elements | | Organic based, or expensive solid-state based implementation | The most stable of the proposed systems |

EP 2 230 794 A2

Table III: Overview and comparison of the proposed systems, based on the information carrying/hiding mechanism.

| *Information carrier* | *Mechanism preventing model building* | *Source of uniqueness* | *Implementation* | *Read-out* |
|---|---|---|---|---|
| **Memory / standard single or few-bit value** | Slowness of read-out | Random resistive layer Optically programmed phase change / photosensitive layer | Crossbar memory using standard Si or ZnO, current-limiting wires | Standard, Si based decoder / demultiplexer circuitry |
| **Device / interconnection delays** | Analog circuit operation sensitive to timing | Variations in capacitances, wire resistances and interconnection length | Random electrical media | On chip delay measurements by Si based apparatus |
| | | | | RFID |
| **Electronic element nonlinearities** | Analog circuit operation sensitive to element nonlinerities | Differences in doping, mask alignments, atomic-level fluctutations | CNN-like structures, coupled oscillators / Chua circuits | Read-out of nodal voltages after A/D conversion |
| **Material conductivity nonlinearities** | 3D nonlinear structure + difficulty in mapping circuit⇔graph | Completely random media | Metallic filaments / nanotubes embedded in semiconductor matrix | Read-out of voltages at contact points after A/D conversion |
| | | | | RFID |
| **Magnetic Material nonlinearities** | Complexity of magnetic domain patterns | Sensitivity to atomic-level surface roughness | Magnetic multilayers / magnetic films fabricated by standard evaporation | Hall sensor arrays |
| | | | | Inductive read-out from an electrical SHIC system |
| **Optical media** | Large number of scattering parameters | Randomly placed scattering centers in 3D | Standard LEDs / photodetector arrays (CCD) + optical token | Solid state based photodetector array |

**References:**

[1] R. Pappu, B. Recht, J. Taylor, N. Gershenfeld, Physical One-Way Functions, Science, vol. 297, pp. 2026-2030, 20 September 2002.

[2] R. Pappu, Physical One-Way Functions, PhD Thesis, MIT.

[3] David Deutsch: Quantum Theory, the Church-Turing Principle and the Universal Quantum Computer. Proc. Royal Soc. London A 400, pp. 96- 117, 1985.

[4] Rolf Landauer: Information is Physical. Physics Today, pp. 23-29, 1991.

[5] D.W. Bauder, An Anti-Counterfeiting Concept for Currency Systems. Research report PTK-11990. Sandia National Labs. Albuquerque, NM, 1983.

[6] Daihyun Lim, Jae W. Lee, Blaise Gassend, G. Edward Suh, Marten van Dijk, Srinivas Devadas, Extracting secret keys from integrated circuits. IEEE Trans. VLSI Syst. 13(10): 1200-1205 (2005)

[7] Blaise Gassend, Daihyun Lim, Dwaine E. Clarke, Marten van Dijk, Srinivas Devadas, Identification and authentication of integrated circuits. Concurrency - Practice and Experience 16(11): 1077-1098

[8] G. Edward Suh, Dwaine E. Clarke, Blaise Gassend, Marten van Dijk, Srinivas Devadas: AEGIS: architecture for tamper-evident and tamper-resistant processing. ICS 2003: 160-171

[9] Blaise Gassend, Dwaine E. Clarke, Marten van Dijk, Srinivas Devadas: Delay-Based Circuit Authentication and Applications. SAC 2003: 294-301

[10] Blaise Gassend, Dwaine E. Clarke, Marten van Dijk, Srinivas Devadas: Silicon physical random functions. ACM Conference on Computer and Communications Security 2002: 148-160

[11] Blaise Gassend, Dwaine E. Clarke, Marten van Dijk, Srinivas Devadas: Controlled Physical Random Functions. ACSAC 2002: 149-160

[12] Blaise Gassend, Physical Random Functions, MSc Thesis, MIT, 2003.

[13] G. Edward Suh, Charles W. O'Donnell, Ishan Sachdev, Srinivas Devadas: Design and Implementation of the AEGIS Single-Chip Secure Processor Using Physical Random Functions. ISCA 2005: 25-36

[14] Daihyun Lim: Extracting Secret Keys from Integrated Circuits. MSc Thesis, MIT, 2004.

[15] B. Skoric, S.Maulbach, T. Kevenaar, S. Tuyls: Information-theoretic analysis of capacitative physical unclonable functions. Journal of Applied Physics 100, 2006

[16] Pim Tuyls, Geert Jan Schrijen, Boris Skoric, Jan van Geloven, Nynke Verhaegh, Rob Wolters Read-Proof Hardware from Protective Coatings. CHES 2006: 369-383

[17] Pim Tuyls, Lejla Batina: RFID-Tags for Anti-counterfeiting. CT-RSA 2006: 115-131

[18] Pim Tuyls: Grey-Box Cryptography: Physical Unclonable Functions. ESAS 2006: 3-5

[19] Boris Skoric, Pim Tuyls, W. Ophey: Robust Key Extraction from Physical Uncloneable Functions. ACNS 2005: 407-422

[20] Pim Tuyls, Boris Skoric, S. Stallinga, Anton H. M. Akkermans, W. Ophey: Information-Theoretic Security Analysis of Physical Uncloneable Functions. Financial Cryptography 2005: 141-155

[21] Darko Kirovski: A Point-Set Compression Heuristic for Fiber-Based Certificates of Authenticity. DCC 2005: 103-112

[22] Darko Kirovski: Toward an automated verification of certificates of authenticity. ACM Conference on Electronic Commerce 2004: 160-169

[23] Darko Kirovski: Point Compression for Certificates of Authenticity. Data Compression Conference 2004: 545

[24] Gerald de Jean, Darko Kirovski: Radio Frequency Certificates of Authenticity. http://research.microsoft.com/users/darkok

[25] Gerald de Jean, Darko Kirovski, Certifying Authenticity using RF Waves, http://research.microsoft.com/users/darkok

[26] Ross Anderson (2001): Security Engineering. Wiley. ISBN 0-471-38922-6.

[26 a] Deepak Vijaywargi, Dave Lewis, Darko Kirovski: Optical DNA. Financial Cryptography 2009: 222-229

[26 b] Gerald DeJean, Darko Kirovski: RF-DNA: Radio-Frequency Certificates of Authenticity. CHES 2007: 346-363

[27] The World Economic Forum, Davos, 2004.

[28] Y. Dodis, L. Reyzin, A. Smith: Fuzzy Extractors: How to Generate Strong Keys from Biometrics and Other Noisy Data. EUROCRYPT 2004: 523 -- 540

[29] R. Renner, S. Wolf: Simple and Tight Bounds for Information Reconciliation and Privacy Amplification. ASIACRYPT 2005: 199 -- 216.

[30] C. H. Bennett, G. Brassard, C. Crepeau, U. Maurer: Generalised Privacy Amplification. IEEE Transactions on Information Theory 41(6), 1995: 1915 -- 1923.

[31] U. Maurer, Conditionally perfect secrecy and a provably secure randomized cipher. Journal of Cryptology 5(1), pp. 53-66, 1992.

[34] M. Hallermann: Characterization of Photonic Crystal Nanostructures for Molecular Cryptography. Bachelor Thesis, 2005.

[35] U. Rührmair, J. J. Finley, M. Stutzmann: Unique Objects and Their Applications to Cryptography and Security. Report, 2006.

[36] U. Rührmair: SHIC Objects and Their Applications to Cryptography and Security. Report, 2007.

[37] U. Rührmair: SIMPL Objects and Their Applications. Report, 2007.

[39] Catherine Taylor Clelland, Viviana Risca, Carter Bancroft: Hiding Messages in DNA Microdots. Nature Vol 399, pp. 533 -- 534, 1999.

[40] James D. R. Buchanan, Russel P. Cowburn, Ana-Vanessa Jausovec, Dorothee Petit, Peter Seem, Gang Xiong, Del Atkinson, Kate Fenton, Dan A. Allwood, Matthew T. Bryan: Fingerprinting documents and packaging. Nature Vol. 236, p. 475, 2005.

[41] Sönke Maseberg: Fail-safe Konzept für Public Key Infrastrukturen. Doctoral Thesis, Technische Universität Darmstadt, 2002

[42] C. H. Bennett, G. Brassard, C. Crepeau, and U. Maurer: Generalized privacy amplification, IEEE Transactions on Information Theory, Vol. 41, No. 6, 1915-1923, 1995.

[43] Joe Kilian, Founding crytpography on oblivious transfer. Proceedings of the twentieth annual ACM Symposium on Theory of Computing, Chicago, Illinois, United States. pp. 20 -31,1988.

[44] Ueli M. Maurer, Secure multi-party computation made simple. Discrete Applied Mathematics 154(2): 370-381 (2006)

[45] S. Skorobogatov, Semi-invasive attacks -- A new approach to hardware security analysis. PhD Thesis, Cambridge University, 2005.

[46] Jorge Guajardo, Sandeep S. Kumar, Geert-Jan Schrijen, and Pim Tuyls, FPGA Intrinsic PUFs and Their Use for IP Protection. CHES 2007, Springer LNCS 4727, pp. 63-80,2007.

[47] Bruce Schneier, Applied Cryptography, Second Edition, John Wiley & Sons, 1996.

[48] G. Edward Suh, Srinivas Devadas, Physical Unclonable Functions for Device Authentication and Secret Key Generation. Proceedings of the 44th Design Automation Conference (DAC), 2007.

[49] Douglas R. Stinson, Cryptography: Theory and Practice, Third Edition. CRC Press, 2005. ISBN: 9781584885085. ISBN 10: 1584885084

[50] Pim Tuyls, Geert-Jan Schrijen, Boris Skoric, Jan van Geloven, Nynke Verhaegh, and Rob Wolters, Read-Proof Hardware from Protective Coatings. CHES 2006, Springer LNCS 4249, pp. 369-383, 2006.

[51] Charles H. Bennett, Gilles Brassard, Claude Crepeau, and Ueli M. Maurer: Generalized Privacy Amplification. IEEE Transactions on Information Theory, Vol. 41, No. 6, November 1995.

[52] Charles H. Bennett, Gilles Brassard, Jean-Marc Robert: Privacy amplification by public discussion. SIAM Journal on Computing, Vol. 17, Issue 2, April 1988.

[53] T. M. Cover: Enumerative Source Encoding, IEEE Transactions on Information Theory 19 (1973), No. 1, pp. 73 -- 77.

[54] C. Cachin, C. Crepeau, J. Marcil: Oblivious transfer with a memory-bounded receiver. Proceeding of the 39th Annual Symposium on Foundations of Computer Science, 1998, pp. 493-502.

[55] Y.Z. Ding, D. Harnik, A. Rosen, R. Shaltiel: Constant-Round Oblivious Transfer in the Bounded Storage Model. Journal of Cryptology, 2007.

[55a] Stefan Wolf, Jürg Wullschleger: Oblivious Transfer Is Symmetric. EUROCRYPT 2006: 222-232. Published in Springer Lecture Notes in Computer Science, Vol. 4004.

[56] Erik Anderson, Tim Draelos, Andy Lanzone, and William Neumann: Key Management and Encryption under the Bounded Storage Model. SANDIA REPORT SAND2005-6979, November 2005.

[57] Ueli Maurer: Conditionally-perfect secrecy and a provably-secure randomized cipher. Journal of Cryptology, Vol. 5, No. 1, 1992, Springer New York.

[59] Bhavnagarwala, A.J.; Xinghai Tang; Meindl, J.D., The impact of intrinsic device fluctuations on CMOS SRAM cell stability Solid-State Circuits, IEEE Journal of, vol.36, no.4, pp.658-665, Apr 2001

[60] Daihyun Lim; Lee, J.W.; Gassend, B.; Suh, G.E.; van Dijk, M.; Devadas, S., Extracting secret keys from integrated circuits, Very Large Scale Integration (VLSI) Systems, IEEE Transactions on , vol.13, no.10, pp. 1200-1205, Oct. 2005

[61] Michele Pra, György Csaba, Christoph Erlen and Paolo Lugli: Simulation of ZnO diodes for application in non-volatile crossbar memories, to be published in Journal of computational electronics, Online first DOI 10.1007/s10825-007-0167-1

[62] Coker, A., Taylor,V; Bhaduri, D., Shukla, S.; Raychowhury, A.; Roy, K.: Multi-Junction Fault Tolerance Architecture for Nanoscale Crossbar Memories, IEEE Transactions for Nanotechnology (DOI 10.1109/TNANO.2007.911319)

[63] de Graaf, C.; Woerlee, P.H.; Hart, C.M.; Lifka, H.; de Vreede, P.W.H.; Janssen, P.J.M.; Sluijs, F.J.; Paulzen, G.M., A novel high-density low-cost diode programmable read only memory , Electron Devices Meeting, 1996., International , vol., no., pp.189-192, 8-11 Dec 1996

[64] Johnson, M.; Al-Shamma, A.; Bosch, D.; Crowley, M.; Farmwald, M.; Fasoli, L.; Ilkbahar, A.; Kleveland, B.; Lee, T.; Tz-yi Liu; Quang Nguyen; Scheuerlein, R.; So, K.; Thorp, T., 512-Mb PROM with a three-dimensional array of diode/antifuse memory cells, Solid-State Circuits, IEEE Journal of, vol.38, no.11, pp. 1920-1928, Nov. 2003

[65] Yong Chen, Gun-Young Jung, Douglas A A Ohlberg, Xuema Li, Duncan R Stewart, Jan O Jeppesen, Kent A Nielsen, J Fraser Stoddart and R Stanley Williams: Nanoscale molecular-switch crossbar Circuits, Nanotechnology 14 (2003) 462--468

[66] R. Janssen, A. Janotta, D. Dimova-Malinovska, M. Stutzmann: Optical and electrical properties of doped amorphous silicon suboxides Phys. Rev. B 60, 13561 - 13572 (1999)

[67] Pim Tuyls, Geert-Jan Schrijen, Boris ¡Skori'c, Jan van Geloven, Nynke Verhaegh, and Rob Wolters Read-Proof Hardware from Protective Coatings Lecture Notes in Computer Science Publisher Springer Berlin/Heidelberg 2006

[68] L. O. Chua and T. Roska: Cellular Neural Networks and Visual Computing: Foundations and Applications Cambridge University Press 2005

[69] M. G'omez-Gesteira, M. deCastro, V. P'erez-Villar, L. O. Chua: Experimental Chua's Circuit Arrays As an Autowave Simulator, IEEE TRANSACTIONS ON CIRCUITS AND SYSTEMS---I: FUNDAMENTAL THEORY AND APPLICATIONS, VOL. 46, NO. 4, APRIL 1999

[70] Maciej J. Ogorzalek, Zbigniew Galias, Andrzej M. Dqbrowski, Wladyslaw R. Dqbrowski: Chaotic Waves and Spatio-Temporal Patterns in Large Arrays of Doubly-Coupled Chua' s Circuits, IEEE TRANSACTIONS ON CIRCUITS AND SYSTEMS-I: FUNDAMENTAL THEORY AND APPLICATIONS, VOL. 42, NO. 10, OCTOBER 1995
[71] Vittoz, E.A., The Design of High-Performance Analog Circuits on Digital CMOS Chips, Solid-State Circuits, IEEE Journal of, vol.20, no.3, pp. 657-665, Jun 1985

[72] S. Wolfram: Statistical mechanics of cellular automata Rev. Mod. Phys. 55, 601 - 644 (1983)

[73] T. Kobori, T. Manuyama, T. Hoshino: A Cellular Automata System with FPGA Proceedings of the the 9th Annual IEEE Symposium on Field-Programmable Custom Computing Machines

[74] Saar Drimer: Volatile FPGA design security -- a survey

[75] M. Becherer, G. Csaba, W. Porod, R. Emling, P. Lugli,D. Schmitt-Landsiedel: Magnetic Ordering of Focused-Ion-Beam Structured Cobalt-Platinum Dots for Field-Coupled Computing IEEE Transactions on Nanotechnology (2008) and private communication with M. Becherer

[76] X. Huang, A. A. Maradudin: Propagation of surface acoustic waves across random gratings Phys. Rev. B 36, 7827 - 7839 (1987)

[77] E. S. P. Leong, S. F. Yu,S. P. Lau: Directional edge-emitting UV random laser diodes Appl. Phys. Lett. 89, 221109 (2006)

[78] P. Tuyls, B. Skoric, T. Kevenaar (Eds.): Security with Noisy Data. Private Biometrics, Secure Key Storage and Anti-Counterfeiting. Springer Verlag London, 2007. ISBN: 978-1-84628-983-5. e-ISBN: 978-1-84628-984-2.

[79] Lai, S., "Current status of the phase change memory and its future," Electron Devices Meeting, 2003. IEDM '03 Technical Digest. IEEE International , vol., no., pp. 10.1.1-10.1.4, 8-10 Dec. 2003
URL: http://ieeexplore.ieee.org/stamp/stamp.jsp?arnumber=1269271&isnumber=28396

[80] P. Nangle: Apparatus for optically pre-programming electrically-programmable phase-change memory devices US patent 7,254,056 B2

[81] P. Tuyls, B. Skoric. Strong Authentication with Physical Unclonable Functions. In: Security, Privacy and Trust in Modem Data Management, M. Petkovic, W. Jonker (Eds.), Springer, 2007.

[82] T.-F. Chen, C.-F. Yeh, C.-Y. Liu, J.-C. Lou, A novel four-mask-processed poly-Si TFT fabricated using excimer laser crystallization of an edge-thickened $\alpha$-Si active island, IEEE Electron. Dev. Lett. 25, 396 (2004)

[83] S. F. Nelson, Y.-Y. Lin, D. J. Gundlach, T. N. Jackson, Temperature-independent transport in high-mobility pentacene transistors, Appl. Phys. Lett. , 72, 1854 (1998)

[84] C. Jaeger, T. Antesberger, M. Stutzmann, Hydrogen passivation of ultra-thin low-temperature polycrystalline silicon films for electronic applications, Journal of Non-Crystalline Solids, Volume 354, Issues 19-25, Amorphous and Nanocrystalline Semiconductors, 22nd International Conference on Amorphous and Nanocrystalline Semiconductors - Science and Technology, 1 May 2008, Pages 2314-2318, ISSN 0022-3093, DOI: 10.1016/j.jnoncryso1.2007.09.040.

[85] Peter Nangle: *Apparatus for optically pre-programming electrically programmable phase-change memories* JS Patent Application, 7 254 056 B2

[86] S. D. Brotherton, Polycrystalline silicon thin film transistors, Semicond. Sci. Technol., 10, 721-738 (1995)

[87] T. Antesberger, C. Jaeger, M. Scholz, and M. Stutzmann, Structural and electronic properties of ultrathin polycrystalline Si layers on glass prepared by aluminum-induced layer exchange Appl. Phys. Lett. 91, 201909 (2007), DOI:10.1063/1.2803072

[88] O. Nast, T. Puzzer, L. M. Koschier, A. B. Sproul, and S. R. Wenham, Aluminum-induced crystallization of amorphous silicon on glass substrates above and below the eutectic temperature, Appl. Phys. Lett. 73,3214(1998)

[111] de Graaf, C.; Woerlee, P.H.; Hart, C.M.; Lifka, H.; de Vreede, P.W.H.; Janssen, P.J.M.; Sluijs, F.J.; Paulzen, G.M., A novel high-density lowcost diode programmable read only memory , Electron Devices Meeting, 1996., International , vol., no., pp.189-192, 8-11 Dec 1996

[112] Csaba, G.; Lugli, P., Read-out design rules for molecular cross bar architectures, submitted to IEEE

[114] Michele Pra, Gy¨orgy Csaba, Christoph Erlen and Paolo Lugli: Simulation of ZnO diodes for application in non-volatile crossbar memories, to be published in Journal of computational electronics, Online first DOI 10.1007/s10825-007-0167-1

[115] Johnson, M.; Al-Shamma, A.; Bosch, D.; Crowley, M.; Farmwald, M.; Fasoli, L.; Ilkbahar, A.; Kleveland, B.; Lee, T.; Tz-yi Liu; Quang Nguyen; Scheuerlein, R.; So, K.; Thorp, T., 512-Mb PROM with a threedimensional array of diode/antifuse memory cells, Solid-State Circuits, IEEE Journal of , vol.38, no.11, pp. 1920-1928, Nov. 2003

[119] R. Janssen, A. Janotta, D. Dimova-Malinovska, M. Stutzmann: Optical and electrical properties of doped amorphous silicon suboxides Phys. Rev. B 60, 13561 - 13572 (1999)

[1001] R. Pappu, B. Recht, J. Taylor, and N. Gershenfeld: Physical One-Way functions Science, 297(5589): 2026-2030, Sep 2002.

[1002] D. Blaise Gassend, Dwaine Clarke, Marten van Dijky and Srinivas Devadas Silicon Physical Random Functions CSC 2002 November 18-22, Washington DC, USA

[1003] Daihyun Lim; Lee, J.W.; Gassend, B.; Suh, G.E.; van Dijk, M.; Devadas, S., Extracting secret keys from integrated circuits, Very Large Scale Integration (VLSI) Systems, IEEE Transactions on , vol.13, no.10, pp. 1200-1205, Oct. 2005

[1004] Daihyun Lim: Extracting Secret Keys from Integrated Circuits. MSc Thesis, MIT, 2004.

[1005] Maeda, S.; Kuriyama, H.; Ipposhi, T.; Maegawa, S.; Inoue, Y.; Inuishi, M.; Kotani, N.; Nishimura, T., An artificial fingerprint device (AFD): a study of identification number applications utilizing characteristics variation of polycrystalline silicon TFTs, Electron Devices, IEEE Transactions on , vol.50, no.6, pp. 1451-1458, June 2003

[1006] Maeda, S.; Kuriyama, H.; Ipposhi, T.; Maegawa, S.; Inuishi, M., An artificial fingerprint device (AFD) module using poly-Si thin film transistors with logic LSI compatible process for built-in security Electron Devices Meeting, 2001. IEDM Technical Digest. International, vol., no., pp.34.5.1-34.5.4, 2001

[1007] Blaise Gassend Physical Random Functions Masters Thesis Computer Science and Artificial Intelligence Laboratory, Massachusetts Institute of Technology February 2003

[1008] Gerald DeJean and Darko Kirovski RF-DNA: Radio-Frequency Certificates of Authenticity Springer Berlin / Heidelber Volume 4727/2007

[1009] D. B. Strukov, G. S. Snider, D. R. Stewart R. S. Williams, The missing memristor found Nature 453 May 2008

[10010] G. F. Cerofolini, G. Arena, C. M. Camalleri, C. Galati, S. Reina, L. Renna D. Mascolo, A hybrid approach to nanoelectronics Nanotechnology 16 (2005) 1040-1047

[10011] de Graaf, C.; Woerlee, P.H.; Hart, C.M.; Lifka, H.; de Vreede, P.W.H.; Janssen, P.J.M.; Sluijs, F.J.; Paulzen, G.M., A novel high-density lowcost diode programmable read only memory , Electron Devices Meeting, 1996., International , vol., no., pp.189-192, 8-11 Dec 1996

[10012] Csaba, G.; Lugli, P., Read-out design rules for molecular cross bar architectures, submitted to IEEE

[10013] Kumar, S.S.; Guajardo, J.; Maes, R.; Schrijen, G.-J.; Tuyls, P., Extended abstract: The butterfly PUF protecting IP on every FPGA, " Hardware-Oriented Security and Trust, 2008. HOST 2008. IEEE International Workshop on , vol., no., pp.67-70, 9-9 June 2008

[10014] Michele Pra, Gy̎orgy Csaba, Christoph Erlen and Paolo Lugli: Simulation of ZnO diodes for application in non-volatile crossbar memories, to be published in Journal of computational electronics, Online first DOI 10.1007/s10825-007-0167-1

[10015] Johnson, M.; Al-Shamma, A.; Bosch, D.; Crowley, M.; Farmwald, M.; Fasoli, L.; Ilkbahar, A.; Kleveland, B.; Lee, T.; Tz-yi Liu; Quang Nguyen; Scheuerlein, R.; So, K.; Thorp, T., 512-Mb PROM with a threedimensional array of diode/antifuse memory cells, Solid-State Circuits, IEEE Journal of , vol.38, no.11, pp. 1920-1928, Nov. 2003

[10017] Pim Tuyls, Geert-Jan Schrijen, Boris Skoric, Jan van Geloven, Nynke Verhaegh and Rob Wolters: Read-proof hardware from protective coatings, CHES 2006, p 369- 383

[10018] Y. Chen, G.-Y. Jung, D. A A Ohlberg, X. Li, D. R. Stewart, J. O Jeppesen, K. A Nielsen, J F. Stoddart, R Stanley Williams, Nanoscale molecular-switch crossbar circuits Nanotechnology 14 (2003) 462-468

[10019] R. Janssen, A. Janotta, D. Dimova-Malinovska, M. Stutzmann: Optical and electrical properties of doped amorphous silicon suboxides Phys. Rev. B 60, 13561 - 13572 (1999)

[10020] A. DeHon, S. C. Goldstein,P. J. Kuekes, P. Lincoln, Nonphotolithographic nanoscale memory density prospects Nanotechnology, IEEE Transactions on , vol.4, no.2, pp. 215-228, March 2005

[10021] S. K. Dey, R. Zuleeg: Processing and parameters of sol-gel PZT thinfilms for GaAs memory applications Ferroeloectrics, Vol. 112. pp. 309-319 (1990)

[10022] M.M. Ziegler, M. R. Stan, Design and analysis of crossbar circuits for molecular nanoelectronics Nanotechnology, 2002. IEEE-NANO 2002. Proceedings of the 2002 2nd IEEE Conference on , vol., no., pp. 323-327, 2002

[10023] M.M. Ziegler, M.R. Stan, CMOS/nano co-design for crossbar-based molecular electronic systems, Nanotechnology, IEEE Transactions on , vol.2, no.4, pp. 217-230, Dec. 2003

[10024] J. A. Buchmann: Introduction to Cryptography 2nd edition Springer 2003

[10025] B. Skoric, P. Tuylis, W. Ophey: Robust Key Extraction from Physical Uncloneable Functions Lecture Notes in Computer Science Springer Berlin / Heidelberg, 2005

[10026] A. Csurgay, On Circuit Models of Quantum-Classical Networks International Journal of Circuit Theory and Applications, Vol. 35, pp. 471-484, 2007

[10027] D. B. Strukov, K. K. Likharev Defect-Tolerant Architectures for Nanoelectronic Crossbar Memories J. Nanosci. Nanotechnol. 7, 151-167 (2007)

[10028] *http://www.linear.com/designtools/software/*

[1301] E. H. Nicollian, and A. Goetzberger, "The Si-SiO2 Interface-Electrical properties as determined by the MIS Conductance Technique", Bell Syst. Tech. J., 46, 1055 (1967)

[1302] L. P. Trombetta, F. J. Feigl, and J. R. Zeto, "Positive charge generation in metal-oxide-semiconductor capacitors", J. Appl. Phys., 69, 4 (1991)

[1605] L. O. Chua and T. Roska: Cellular Neural Networks and Visual Computing: Foundations and Applications Cambridge University Press, 2005

[1606] Chua, L.O. and L. Yang: Cellular Neural Networks: Theory, IEEE Transactions on Circuits and Systems, vol. 35, pp. 1257-1272.

[1607] S. Wolfram: Statistical mechanics of cellular automata, Rev. Mod. Phys. 55, 601 - 644, (1983)

[1608] Roska, T.; Chua, L.O., The CNN universal machine: An analogic array computer. Circuits and Systems II: IEEE Transactions on Analog and Digital Signal Processing, vol.40, no.3, pp.163-173, Mar 1993

[1609] Chua, L.O.; Roska, T.; Kozek, T.; Zarandy, A., CNN universal chips crank up the computing power Circuits and Devices Magazine, IEEE , vol.12, no.4, pp.18-28, Jul 1996

[16010] Bhavnagarwala, A.J.; Xinghai Tang; Meindl, J.D., The impact of intrinsic device fluctuations on CMOS SRAM cell stability Solid-State Circuits, IEEE Journal of , vol.36, no.4, pp.658-665, Apr 2001

[16011]S. Xavier-de-Souza, M. Yalcin, J. Suykens, and J. Vandewalle, Toward CNN Chip-Specific Robustness, IEEE Trans. On Circuits And Systems - 1, 51(5): 892-902, 2004.

[16012] T. Roska, L.O. Chua, D.Wolf, T. Kozek, R. Tetzlaff, F. Puffer: Simulating nonlin ear waves and partial differential equations via CNN-Part I: Basic techniques, IEEE Transaction on Circuits and Systems-I, vol. 42, pp. 807-815, 1995.

[16013] Serpico, C., Setti, G., and Thiran, P. 1997. Analogies between cellular neural networks and partial differential equations. In: Advances in intelligent Systems, F. C. Morabito, (Ed.) IOS Frontiers In Artificial Intelligence And Applications Series, vol. 41. IOS Press, Amsterdam, The Netherlands, 157-162.

[16014] For example, see: http://www.anafocus.com/

[16015] Konrad Zuse: Calculating space. MIT Technical translation, orig: K. Zuse: Rechnender Raum, Schriften zur Datenverarbeitung, 1 Friedr. Vieweg & Sohn, Braunschweig, 1969.

[16016] Wolfgang Porod, Henry K. Harbury, and Craig S. Lent, Study of Wave Phenomena in Physically- Coupled Device Arrays Using the Helmholtz Equation as a Model, Fourth Workshop on Physics and Computation - PhysComp96, Boston, Massachusetts, November 1996.

[16017] J. D. Jackson: Classical electrodynamics Wiley, 1998

[16018] William H. Press, Brian P. Flannery, Saul A. Teukolsky, William T. Vetterling: Numerical Recipes in C: The Art of Scientific Computing Cambridge University Press; 2 edition (October 30, 1992) or www.nr.com/

[16019] Kennedy, M.P., Three steps to chaos. II: A Chua's circuit primer, IEEE Transactions on Circuits and Systems I: Fundamental Theory and Applications, vol.40, no.10, pp.657-674, Oct 1993

[16020] Zou, F. and J.A. Nossek, A chaotic attractor with cellular neural networks, IEEE Transaction on Circuits and Systems, Vol. 38, pp. 811-812, 1991.

[16021] Maciej J. Ogorzalek, Zbigniew Galias, Andrzej M. Dqbrowski, Wladyslaw R. Dqbrowski: Chaotic Waves and Spatio-Temporal Patterns in Large Arrays of Doubly-Coupled Chua' s Circuits, IEEE Transactions on Circuits and Systems-I: Fundamental Theory and Applications, Vol. 42, No. 10, October 1995

[16022] M. Gomez-Gesteira, M. de Castro, V. Perez-Villar, L. O. Chua: Experimental-Chua's Circuit Arrays As an Autowave Simulator, IEEE Transactions on Circuits and Systems-I: Fundamental Theory and Applications, Vol. 46, No. 4, April 1999.

[16023] Cellular wave computers for nano-tera-scale technology - beyond spatial-temporal logic in million processor devices ELECTRONICS LETTERS 12th April 2007,Vol. 43 No. 8

[16024] http://www.linear.com/designtools/software/

[16025] http://xyce.sandia.gov/

[16027] L. O. Chua: CNN: A paradigm for complexity World Scientific Pub. Co Juni 1998

[16028] M. Ercsey-Ravasz, T. Roska, Z. Neda: Cellular Neural Networks for NP-Hard Optimization EURASIP Journal on Advances in Signal Processing Volume 2009, Article ID 64697

## Claims

1. A method for security purposes comprising the acts of:

   - performing a measurement by generating a challenge signal comprising a plurality of input signals, by applying the plurality of input signals to at least one terminal (3, 5) of a system (1) having a inner structure (9) and by receiving a response signal dependent on a setting of the challenge signal and dependent on the inner structure (9) of the system, **characterized in that**
   - a non-volatile data storage (30, 40, 130) having a plurality of data cells (34, 43, 131) containing random data content is used as system (1) having an inner structure, that
   - an addressing signal applied to at least one address terminal (31, 41, 132) of the data storage (30, 40, 130) is used as challenge signal for addressing the data cells, that
   - data signals depending on the random data content of the data storage (30, 40, 130) are received as response signals at data terminals (32, 42, 133), that
   - the access time for a adversarial read-out process is restricted to a predefined access time period, and that
   - the data rate of the read-out process disables a complete adversarial readout of the data content within the predefined access time period.

2. The method according to Claim 1,

   - wherein the inner structure of the system comprises a memory structure chosen from the group containing a crossbar memory (30, 40), a TFT memory (130), a flash memory or another transistor based memory
   - wherein the memory structure is provided with a plurality of input lines (31, 41, 132) connected to the input terminals (3) and a plurality of output lines (32, 42, 133) connected to the output terminals (5);
   - wherein the input lines (31, 41, 132) and output lines (32, 42, 133) are interconnected at a plurality of nodes (34, 43, 131) in which the data contained in the memory structure are stored randomly and
   - wherein the data rate for the readout process of the data content of the memory structure (20) ensures an incomplete readout of the data content within the predefined access time period.

3. The method according to Claim 1 or 2,
   wherein a data storage (30, 40, 130) is used that contains elements (52, 53) for limiting the band width using resistors, capacitances and inductance and/or for limiting the current carrying capability for the readout process.

4. A method for security purposes comprising the acts of:

   - performing a measurement by generating a challenge signal comprising a plurality of input signals, by applying the plurality of input signals to at least one terminal (3, 5) of a system having a inner structure (9) and by receiving a response signal dependent on a setting of the challenge signal and dependent on the inner structure (9) of the system, **characterized in that**
   - a unique two-dimensional analog cellular network (170) is used as system (1) having an inner structure, that
   - the network (170) comprises a plurality of cells (171) directly interconnected to at least three other cells (171) and that
   - the response signal depend on individualized characteristics of the inner structure or on manufacturing variations of the inner structure.

5. The method according to Claim 4,
   wherein the cellular non-linear network (170) is used as a system (1) having a inner structure, wherein the cellular non-linear network comprises a plurality of cells (171) interconnected to other cells (171) within a finite radius and wherein a temporal behavior of a state variable of a particular cell (171) depends on a state variable and on differentials with respect to the state variables of the interconnected cells (171).

6. A method for security purposes comprising the acts of:

- performing a measurement by generating a challenge signal comprising a plurality of input signals, by applying the plurality of input signals to at least one terminal (3, 5) of a system having a inner structure (9) and by receiving a response signal dependent on a setting of the challenge signal and dependent on the inner structure (9) of the system, **characterized in that**
- the challenge signal comprises wave signals applied to the input terminals (3) and that
- the inner structure of the used system comprises an gain medium (321) that is spatially inhomogeneous on the wavelength scale or on greater scales.

7. The method according to claim 6,
wherein the inhomogeneous gain medium is a gain medium comprising a plurality of scattering centers or is a non-amplifying medium (321) comprising a plurality of amplifying particles (322).

8. The method according to any one of Claims 1 to 7,
wherein at least one set of challenge signal and response signal is changed, rewritten or erased from the system (1) or set to a predefined state without affecting other sets of challenge signals and response signals.

9. The method according to any one of Claims 1 to 8,
wherein the response signal is validated by comparing the response signal obtained by the measurement with a response signal obtained from a previous measurement.

10. The method according to any one of Claims 1 to 9,
wherein a secure key exchange is performed by the acts:

- a unit B receives the system (1) over a physical channel,
- the unit B notifies the reception of the system (1) to an unit A,
- the unit B receives information on at least one input signals to be applied to the system (1) received from unit A,
- the unit B applies at least one input signals to the system (1) corresponding to the information on the at least one input signal and receives at least one corresponding response signal,
- the unit B sends the at least one response signal to unit A and receives a confirmation, that the at least one response signal has been measured previously by the unit A,
- the unit B receives further information on at least one further input signal from unit A, and
- the unit B applies the at least one further input signals to the system (1) corresponding to the information on the at least one further input signal and receives at least one corresponding further response signals usable as a secret key.

11. A method according to any one of Claims 1 to 9,
wherein an oblivious transfer of information is performed by the acts:

- a unit B performs a measurement on the system (1) using a particular setting of the challenge signals,
- the system (1) is transferred to a unit A,
- unit B receives random information from unit A,
- unit B transmits the particular setting to unit A using an transmission procedure that is based on the random information and allows unit A to retrieve various settings including the particular setting by using the random information,
- unit B retrieves information on the various settings obtained by unit A,
- unit B transmits indexing information to unit A,
- unit B receives a set of messages that contains information which has been generated by unit A and has been encoded in parallel using measurements performed by unit A on the system using the various settings, wherein the messages are indexed according to the indexing information sent to unit A,
- unit B decodes the message that has been encoded by the measurement using the particular setting and retrieves the information that unit A has generated and encoded using the measurement dependent on the particular measurement.

**12.** A method according to any one of Claims 1 to 9,
wherein a process according to the bounded storage model is performed by sending a plurality of different systems (1) from a source to participants of a protocoll or cryptographic scheme according to the bounded storage process or by sending a single system (1) from a unit acting as source to a particular participant with subsequent passing on to further participants.

**13.** A method according to any one of Claims 1 to 9,
wherein for proving proximity of two interacting systems (1), the following acts are performed:

- a unit C chooses a setting for a challenge signal for a joined system that is formed from the system (1) associated with unit A und from the system (1) associated with unit B, and sends the setting to unit A and unit B,
- the unit C receives a characteristic of the response signal generated by measurement on the joined system,
- the unit C performs a validation of the response signal by comparing the response signal obtained by the measurement on the joined system with a response signal obtained from a previous measurement on the joined system.

**14.** A system for security purposes,
wherein the system (1) is arranged for performing a method according to any one of the claims 1 to 13.

**15.** A software product on a data carrier,
wherein the software product comprises program code for implementing any one of the methods according to claim 1 to 13.

# FIG 1

# FIG 2

| Bank | | ATM + PUF |
|---|---|---|
| $\boxed{\text{ID}_{PUF}, n', m', \{C_i, W_i, S_i\}}$ | | $\boxed{\text{ID}_{PUF}, n, m = h^n(x)}$ |

Check $n \geq n'$.
Compute $M = h^{n-n'}(m')$.
$K_1' = h(m', \text{ID}_{PUF})$.
Randomly select challenge $C$.
Generate random $\beta$.

$\xleftarrow{\hspace{1cm} \alpha, n, \text{ID}_{PUF} \hspace{1cm}}$

Generate random $\alpha$.

$K_1 = h(m, \text{ID}_{PUF})$.

$\xrightarrow{\hspace{1cm} \text{E\&MAC}_{K1'}(\alpha, C, W, \beta) \hspace{1cm}}$

Check MAC.
Measure PUF response
and extract bitstring S.

$K' = h(K_1', S')$.

$\xleftarrow{\hspace{1cm} \text{MAC}_K(\beta) \hspace{1cm}}$

$K = h(K_1, S)$.

Check MAC.
$n' \to n+1$, $m' \to h(M)$.
Remove C from database.

$\xleftarrow{\hspace{0.5cm} \text{Use } K \text{ as session key} \hspace{0.5cm}}\dashrightarrow$

$n \to n+1$, $m \to h(m)$.

## FIG 3

## FIG 4

FIG 5

FIG 6

FIG 7

FIG 8

FIG 9

FIG 10

FIG 11

FIG 12

FIG 13

FIG 14

**FIG 15**

**FIG 16**

Digital circuit
Mathematical algorithms for signal generation based on complex algorithm+secret key

Sequence of keys

Interference (noise)

Small analog SHIC system

FIG 17

FIG 18

FIG 19

FIG 20

FIG 21

FIG 22

## FIG 23

## FIG 24

# FIG 25

Cell index (horizontal)

# FIG 26

FIG 27

FIG 28

FIG 29

SAW propagation

FIG 30

FIG 31

FIG 32

FIG 33

FIG 34

## FIG 35

1

1

SHIC System A

SHIC System B

Input A( i )　　　　Output B(i)

Input A

Input B

Output A( i )　　　　Input B(i)

Distance d

## FIG 36

Environmental
Condition q

SHIC
Sensor S

$p_1, ..., p_k$

$M(p_1, q, S), ..., M(p_k, q, S)$

**Bob**

Holds list of values
$M(p_i, q_i, S)$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7254056 B2

### Non-patent literature cited in the description

- **Edward G.** Srinivas: Physical Unclonable Functions for Device Authentication and Secret Key Generation, Proceedings of the 44th Design Automation Conference (DAC). *DEVADAS,* 2007
- **LIM, D.** Extracting secret keys from integrated circuits. *MSc thesis, MIT,* 2004
- **Ulrich, SÖLTER, Jan ; SEHNKE, Frank.** On the Foundations of Physical Unclonable Functions. *Appendix of RÜHRMAIR,* 2009
- **PAPPU, R. ; RECHT, B. ; TAYLOR, J. ; GERSHENFELD, N.** Physical One-Way Functions. *Science,* 20 September 2002, vol. 297, 2026-2030
- **LIM, D.** Extracting secret keys from integrated circuits. *MSc thesis, MIT*
- **R. Pappu ; B. Recht ; J. Taylor ; N. Gershenfeld.** *Physical One-Way Functions, Science,* 20 September 2002, vol. 297, 2026-2030
- **R. Pappu.** *Physical One-Way Functions, PhD Thesis, MIT*
- **David Deutsch.** *Quantum Theory, the Church-Turing Principle and the Universal Quantum Computer. Proc. Royal Soc. London A,* 1985, vol. 400, 96-117
- **Rolf Landauer.** *Information is Physical. Physics Today,* 1991, 23-29
- An Anti-Counterfeiting Concept for Currency Systems. **D.W. Bauder.** Research report PTK-11990. Sandia National Labs, 1983
- **Daihyun Lim ; Jae W. Lee ; Blaise Gassend ; G. Edward Suh ; Marten van Dijk ; Srinivas Devadas.** Extracting secret keys from integrated circuits. *IEEE Trans. VLSI Syst.,* 2005, vol. 13 (10), 1200-1205
- **Blaise Gassend ; Daihyun Lim ; Dwaine E. Clarke ; Marten van Dijk ; Srinivas Devadas.** Identification and authentication of integrated circuits. *Concurrency - Practice and Experience,* vol. 16 (11), 1077-1098
- **G. Edward Suh ; Dwaine E. Clarke ; Blaise Gassend ; Marten van Dijk ; Srinivas Devadas.** AEGIS: architecture for tamper-evident and tamper-resistant processing. *ICS,* 2003, 160-171

- **Blaise Gassend ; Dwaine E. Clarke ; Marten van Dijk ; Srinivas Devadas.** Delay-Based Circuit Authentication and Applications. *SAC,* 2003, 294-301
- **Blaise Gassend ; Dwaine E. Clarke ; Marten van Dijk ; Srinivas Devadas.** Silicon physical random functions. *ACM Conference on Computer and Communications Security,* 2002, 148-160
- **Blaise Gassend ; Dwaine E. Clarke ; Marten van Dijk ; Srinivas Devadas.** Controlled Physical Random Functions. *ACSAC,* 2002, 149-160
- **Blaise Gassend.** *Physical Random Functions, MSc Thesis, MIT,* 2003
- **G. Edward Suh ; Charles W. O'Donnell ; Ishan Sachdev ; Srinivas Devadas.** Design and Implementation of the AEGIS Single-Chip Secure Processor Using Physical Random Functions. *ISCA,* 2005, 25-36
- **Daihyun Lim.** Extracting Secret Keys from Integrated Circuits. *MSc Thesis, MIT,* 2004
- **B. Skoric ; S.Maulbach ; T. Kevenaar ; S. Tuyls.** Information-theoretic analysis of capacitative physical unclonable functions. *Journal of Applied Physics,* 2006, vol. 100
- **Pim Tuyls ; Geert Jan Schrijen ; Boris Skoric ; Jan van Geloven ; Nynke Verhaegh ; Rob Wolters.** Read-Proof Hardware from Protective Coatings. *CHES,* 2006, 369-383
- **Pim Tuyls ; Lejla Batina.** RFID-Tags for Anti-counterfeiting. *CT-RSA,* 2006, 115-131
- **Pim Tuyls.** Grey-Box Cryptography: Physical Unclonable Functions. *ESAS,* 2006, 3-5
- **Boris Skoric ; Pim Tuyls ; W. Ophey.** Robust Key Extraction from Physical Uncloneable Functions. *ACNS,* 2005, 407-422
- **Pim Tuyls ; Boris Skoric ; S. Stallinga ; Anton H. M. Akkermans ; W. Ophey.** Information-Theoretic Security Analysis of Physical Uncloneable Functions. *Financial Cryptography,* 2005, 141-155
- **Darko Kirovski.** A Point-Set Compression Heuristic for Fiber-Based Certificates of Authenticity. *DCC,* 2005, 103-112

- **Darko Kirovski.** Toward an automated verification of certificates of authenticity. *ACM Conference on Electronic Commerce,* 2004, 160-169
- **Darko Kirovski.** Point Compression for Certificates of Authenticity. *Data Compression Conference,* 2004, 545
- **Gerald de Jean ; Darko Kirovski.** *Radio Frequency Certificates of Authenticity, http://research.microsoft.com/users/darkok*
- **Gerald de Jean ; Darko Kirovski.** *Certifying Authenticity using RF Waves, http://research.microsoft.com/users/darkok*
- **Ross Anderson.** Security Engineering. Wiley, 2001
- **Deepak Vijaywargi ; Dave Lewis ; Darko Kirovski.** Optical DNA. *Financial Cryptography,* 2009, 222-229
- **Gerald DeJean ; Darko Kirovski.** RF-DNA: Radio-Frequency Certificates of Authenticity. *CHES,* 2007, 346-363
- *The World Economic Forum,* 2004
- **Y. Dodis ; L. Reyzin ; A. Smith.** Fuzzy Extractors: How to Generate Strong Keys from Biometrics and Other Noisy Data. *EUROCRYPT,* 2004, 523-540
- **R. Renner ; S. Wolf.** Simple and Tight Bounds for Information Reconciliation and Privacy Amplification. *ASIACRYPT,* 2005, 199-216
- **C. H. Bennett ; G. Brassard ; C. Crepeau ; U. Maurer.** Generalised Privacy Amplification. *IEEE Transactions on Information Theory,* 1995, vol. 41 (6), 1915-1923
- **U. Maurer.** Conditionally perfect secrecy and a provably secure randomized cipher. *Journal of Cryptology,* 1992, vol. 5 (1), 53-66
- **M. Hallermann.** Characterization of Photonic Crystal Nanostructures for Molecular Cryptography. *Bachelor Thesis,* 2005
- **U. Rührmair ; J. J. Finley ; M. Stutzmann.** *Unique Objects and Their Applications to Cryptography and Security,* 2006
- **U. Rührmair.** *SHIC Objects and Their Applications to Cryptography and Security,* 2007
- **U. Rührmair.** *SIMPL Objects and Their Applications,* 2007
- **Catherine Taylor Clelland ; Viviana Risca ; Carter Bancroft.** Hiding Messages in DNA Microdots. *Nature,* 1999, vol. 399, 533-534
- **James D. R. Buchanan ; Russel P. Cowburn ; Ana-Vanessa Jausovec ; Dorothee Petit ; Peter Seem ; Gang Xiong ; Del Atkinson ; Kate Fenton ; Dan A. Allwood ; Matthew T. Bryan.** Fingerprinting documents and packaging. *Nature,* 2005, vol. 236, 475
- **Sönke Maseberg.** Fail-safe Konzept für Public Key Infrastrukturen. *Doctoral Thesis,* 2002
- **C. H. Bennett ; G. Brassard ; C. Crepeau ; U. Maurer.** Generalized privacy amplification. *IEEE Transactions on Information Theory,* 1995, vol. 41 (6), 1915-1923
- **Joe Kilian.** Founding crytpography on oblivious transfer. *Proceedings of the twentieth annual ACM Symposium on Theory of Computing,* 1988, 20-31
- **Ueli M. Maurer.** Secure multi-party computation made simple. *Discrete Applied Mathematics,* 2006, vol. 154 (2), 370-381
- **S. Skorobogatov.** Semi-invasive attacks -- A new approach to hardware security analysis. *PhD Thesis,* 2005
- FPGA Intrinsic PUFs and Their Use for IP Protection. **Jorge Guajardo ; Sandeep S. Kumar ; Geert-Jan Schrijen ; Pim Tuyls.** CHES 2007. Springer LNCS 4727, 2007, 63-80
- **Bruce Schneier.** Applied Cryptography. John Wiley & Sons, 1996
- **G. Edward Suh ; Srinivas Devadas.** Physical Unclonable Functions for Device Authentication and Secret Key Generation. *Proceedings of the 44th Design Automation Conference (DAC),* 2007
- **Douglas R. Stinson.** Cryptography: Theory and Practice. CRC Press, 2005
- Read-Proof Hardware from Protective Coatings. **Pim Tuyls ; Geert-Jan Schrijen ; Boris Skoric ; Jan van Geloven ; Nynke Verhaegh ; Rob Wolters.** CHES 2006. Springer LNCS 4249, 2006, 369-383
- **Charles H. Bennett ; Gilles Brassard ; Claude Crepeau ; Ueli M. Maurer.** Generalized Privacy Amplification. *IEEE Transactions on Information Theory,* November 1995, vol. 41 (6
- **Charles H. Bennett ; Gilles Brassard ; Jean-Marc Robert.** Privacy amplification by public discussion. *SIAM Journal on Computing,* April 1988, vol. 17 (2
- **T. M. Cover.** Enumerative Source Encoding. *IEEE Transactions on Information Theory,* 1973, vol. 19 (1), 73-77
- **C. Cachin ; C. Crepeau ; J. Marcil.** Oblivious transfer with a memory-bounded receiver. *Proceeding of the 39th Annual Symposium on Foundations of Computer Science,* 1998, 493-502
- **Y.Z. Ding ; D. Harnik ; A. Rosen ; R. Shaltiel.** Constant-Round Oblivious Transfer in the Bounded Storage Model. *Journal of Cryptology,* 2007
- Oblivious Transfer Is Symmetric. **Stefan Wolf ; Jürg Wullschleger.** EUROCRYPT. Springer Lecture Notes in Computer Science, 2006, vol. 4004, 222-232
- **Erik Anderson ; Tim Draelos ; Andy Lanzone ; William Neumann.** Key Management and Encryption under the Bounded Storage Model. *SANDIA REPORT SAND2005-6979,* November 2005

- Conditionally-perfect secrecy and a provably-secure randomized cipher. **Ueli Maurer.** Journal of Cryptology. Springer, 1992, vol. 5
- **Bhavnagarwala, A.J. ; Xinghai Tang ; Meindl, J.D.** The impact of intrinsic device fluctuations on CMOS SRAM cell stability Solid-State Circuits. *IEEE Journal,* April 2001, vol. 36 (4), 658-665
- **Daihyun Lim ; Lee, J.W. ; Gassend, B. ; Suh, G.E. ; van Dijk, M. ; Devadas, S.** Extracting secret keys from integrated circuits, Very Large Scale Integration (VLSI) System. *IEEE Transactions,* October 2005, vol. 13 (10), 1200-1205
- **Michele Pra ; György Csaba ; Christoph Erlen ; Paolo Lugli.** Simulation of ZnO diodes for application in non-volatile crossbar memories. *Journal of computational electronics*
- **Coker, A. ; Taylor,V ; Bhaduri, D. ; Shukla, S. ; Raychowhury, A. ; Roy, K.** Multi-Junction Fault Tolerance Architecture for Nanoscale Crossbar Memories. *IEEE Transactions for Nanotechnology*
- **de Graaf, C. ; Woerlee, P.H. ; Hart, C.M. ; Lifka, H. ; de Vreede, P.W.H. ; Janssen, P.J.M. ; Sluijs, F.J. ; Paulzen, G.M.** A novel high-density low-cost diode programmable read only memory. *Electron Devices Meeting,* 08 December 1996, 189-192
- **Johnson, M. ; Al-Shamma, A. ; Bosch, D. ; Crowley, M. ; Farmwald, M. ; Fasoli, L. ; Ilkbahar, A. ; Kleveland, B. ; Lee, T. ; Tz-yi Liu.** 512-Mb PROM with a three-dimensional array of diode/antifuse memory cells. *Solid-State Circuits, IEEE Journal,* November 2003, vol. 38 (11), 1920-1928
- **Yong Chen ; Gun-Young Jung ; Douglas A A Ohlberg ; Xuema Li ; Duncan R Stewart ; Jan O Jeppesen ; Kent A Nielsen ; J Fraser Stoddart ; R Stanley Williams.** Nanoscale molecular-switch crossbar Circuits. *Nanotechnology,* 2003, vol. 14, 462-468
- **R. Janssen ; A. Janotta ; D. Dimova-Malinovska ; M. Stutzmann.** Optical and electrical properties of doped amorphous silicon suboxides. *Phys. Rev. B,* 1999, vol. 60, 13561-13572
- **Pim Tuyls ; Geert-Jan Schrijen ; Boris ¡Skori'c ; Jan van Geloven ; Nynke Verhaegh ; Rob Wolters.** Read-Proof Hardware from Protective Coatings Lecture Notes in Computer Science. Springer, 2006
- **L. O. Chua ; T. Roska.** Cellular Neural Networks and Visual Computing: Foundations and Applications. Cambridge University Press, 2005
- **M. G'omez-Gesteira ; M. deCastro ; V. P'erez-Villar ; L. O. Chua.** Experimental Chua's Circuit Arrays As an Autowave Simulator. *IEEE TRANSACTIONS ON CIRCUITS AND SYSTEMS---I: FUNDAMENTAL THEORY AND APPLICATIONS,* April 1999, vol. 46 (4
- **Maciej J. Ogorzalek ; Zbigniew Galias ; Andrzej M. Dqbrowski ; Wladyslaw R. Dqbrowski.** Chaotic Waves and Spatio-Temporal Patterns in Large Arrays of Doubly-Coupled Chua' s Circuits. *IEEE TRANSACTIONS ON CIRCUITS AND SYSTEMS-I: FUNDAMENTAL THEORY AND APPLICATIONS,* October 1995, vol. 42 (10
- **Vittoz, E.A.** *The Design of High-Performance Analog Circuits on Digital CMOS Chips, Solid-State Circuits, IEEE Journal,* June 1985, vol. 20 (3), 657-665
- **S. Wolfram.** Statistical mechanics of cellular automata. *Rev. Mod. Phys.,* 1983, vol. 55, 601-644
- **T. Kobori ; T. Manuyama ; T. Hoshino.** A Cellular Automata System with FPGA Proceedings. *9th Annual IEEE Symposium on Field-Programmable Custom Computing Machines*
- **Saar Drimer.** *Volatile FPGA*
- **M. Becherer ; G. Csaba ; W. Porod ; R. Emling ; P. Lugli ; D. Schmitt-Landsiedel.** *Magnetic Ordering of Focused-Ion-Beam Structured Cobalt-Platinum Dots for Field-Coupled Computing IEEE Transactions on Nanotechnology,* 2008
- **X. Huang ; A. A. Maradudin.** Propagation of surface acoustic waves across random gratings. *Phys. Rev. B,* 1987, vol. 36, 7827-7839
- **E. S. P. Leong ; S. F. Yu ; S. P. Lau.** Directional edge-emitting UV random laser diodes. *Appl. Phys. Lett.,* 2006, vol. 89, 221109
- Security with Noisy Data. Private Biometrics, Secure Key Storage and Anti-Counterfeiting. Springer Verlag
- **Lai, S.** Current status of the phase change memory and its future. *Electron Devices Meeting, 2003. IEDM '03 Technical Digest. IEEE International,* 08 December 2003, 10.1.1-10.1.4
- Strong Authentication with Physical Unclonable Functions. **P. Tuyls ; B. Skoric.** Security, Privacy and Trust in Modem Data Management. Springer, 2007
- **T.-F. Chen ; C.-F. Yeh ; C.-Y. Liu ; J.-C. Lou.** A novel four-mask-processed poly-Si TFT fabricated using excimer laser crystallization of an edge-thickened α-Si active island. *IEEE Electron. Dev. Lett.,* 2004, vol. 25, 396
- **S. F. Nelson ; Y.-Y. Lin ; D. J. Gundlach ; T. N. Jackson.** Temperature-independent transport in high-mobility pentacene transistors. *Appl. Phys. Lett.,* 1998, vol. 72, 1854
- **C. Jaeger ; T. Antesberger ; M. Stutzmann.** Hydrogen passivation of ultra-thin low-temperature polycrystalline silicon films for electronic applications. *Journal of Non-Crystalline Solids, Volume 354, Issues 19-25, Amorphous and Nanocrystalline Semiconductors, 22nd International Conference on Amorphous and Nanocrystalline Semiconductors - Science and Technology,* 01 May 2008, vol. 354 (19-25), ISSN 0022-3093, 2314-2318

- **S. D. Brotherton.** Polycrystalline silicon thin film transistors. *Semicond. Sci. Technol.,* 1995, vol. 10, 721-738
- **T. Antesberger ; C. Jaeger ; M. Scholz ; M. Stutzmann.** Structural and electronic properties of ultrathin polycrystalline Si layers on glass prepared by aluminum-induced layer exchange. *Appl. Phys. Lett.,* 2007, vol. 91, 201909
- **O. Nast ; T. Puzzer ; L. M. Koschier ; A. B. Sproul ; S. R. Wenham.** Aluminum-induced crystallization of amorphous silicon on glass substrates above and below the eutectic temperature. *Appl. Phys. Lett.,* 1998, vol. 73, 3214
- **de Graaf, C. ; Woerlee, P.H. ; Hart, C.M. ; Lifka, H. ; de Vreede, P.W.H. ; Janssen, P.J.M. ; Sluijs, F.J. ; Paulzen, G.M.** A novel high-density lowcost diode programmable read only memory. *Electron Devices Meeting, 1996., International,* 08 December 1996, 189-192
- **Csaba, G. ; Lugli, P.** *Read-out design rules for molecular cross bar architectures*
- **Michele Pra ; Gÿorgy Csaba ; Christoph Erlen ; Paolo Lugli.** Simulation of ZnO diodes for application in non-volatile crossbar memories. *Journal of computational electronics*
- **Johnson, M. ; Al-Shamma, A. ; Bosch, D. ; Crowley, M. ; Farmwald, M. ; Fasoli, L. ; Ilkbahar, A. ; Kleveland, B. ; Lee, T. ; Tz-yi Liu.** 512-Mb PROM with a threedimensional array of diode/antifuse memory cells. *Solid-State Circuits, IEEE Journal,* November 2003, vol. 38 (11), 1920-1928
- **R. Pappu ; B. Recht ; J. Taylor ; N. Gershenfeld.** Physical One-Way functions. *Science,* September 2002, vol. 297 (5589), 2026-2030
- **D. Blaise Gassend ; Dwaine Clarke ; Marten van Dijky ; Srinivas Devadas.** Silicon Physical Random Functions. *CSC,* 18 November 2002
- **Daihyun Lim ; Lee, J.W. ; Gassend, B. ; Suh, G.E. ; van Dijk, M. ; Devadas, S.** Extracting secret keys from integrated circuits. *Very Large Scale Integration (VLSI) Systems, IEEE Transactions,* October 2005, vol. 13 (10), 1200-1205
- **Maeda, S. ; Kuriyama, H. ; Ipposhi, T. ; Maegawa, S. ; Inoue, Y. ; Inuishi, M. ; Kotani, N. ; Nishimura, T.** An artificial fingerprint device (AFD): a study of identification number applications utilizing characteristics variation of polycrystalline silicon TFTs. *Electron Devices, IEEE Transactions,* June 2003, vol. 50 (6), 1451-1458
- **Maeda, S. ; Kuriyama, H. ; Ipposhi, T. ; Maegawa, S. ; Inuishi, M.** An artificial fingerprint device (AFD) module using poly-Si thin film transistors with logic LSI compatible process for built-in security. *Electron Devices Meeting, 2001. IEDM Technical Digest,* 2001, 34.5.1-34.5.4
- **Blaise Gassend.** Physical Random Functions. *Masters Thesis Computer Science and Artificial Intelligence Laboratory,* February 2003
- **Gerald DeJean ; Darko Kirovski.** RF-DNA: Radio-Frequency Certificates of Authenticity. Springer, 2007, vol. 4727
- **D. B. Strukov ; G. S. Snider ; D. R. Stewart ; R. S. Williams.** The missing memristor found. *Nature,* May 2008, vol. 453
- **G. F. Cerofolini ; G. Arena ; C. M. Camalleri ; C. Galati ; S. Reina ; L. Renna ; D. Mascolo.** A hybrid approach to nanoelectronics. *Nanotechnology,* 2005, vol. 16, 1040-1047
- **de Graaf, C. ; Woerlee, P.H. ; Hart, C.M. ; Lifka, H. ; de Vreede, P.W.H. ; Janssen, P.J.M. ; Sluijs, F.J. ; Paulzen, G.M.** A novel high-density lowcost diode programmable read only memory. *Electron Devices Meeting,* 08 December 1996, 189-192
- **Kumar, S.S. ; Guajardo, J. ; Maes, R. ; Schrijen, G.-J. ; Tuyls, P.** Extended abstract: The butterfly PUF protecting IP on every FPGA. *Hardware-Oriented Security and Trust, 2008. HOST 2008. IEEE International Workshop,* 09 June 2008, 67-70
- **Pim Tuyls ; Geert-Jan Schrijen ; Boris Skoric ; Jan van Geloven ; Nynke Verhaegh ; Rob Wolters.** Read-proof hardware from protective coatings. *CHES,* 2006, 369-383
- **Y. Chen ; G.-Y. Jung ; D. A A Ohlberg ; X. Li ; D. R. Stewart ; J. O Jeppesen ; K. A Nielsen ; J F. Stoddart ; R Stanley Williams.** Nanoscale molecular-switch crossbar circuits. *Nanotechnology,* 2003, vol. 14, 462-468
- **A. DeHon ; S. C. Goldstein ; P. J. Kuekes ; P. Lincoln.** Nonphotolithographic nanoscale memory density prospects. *Nanotechnology, IEEE Transactions,* March 2005, vol. 4 (2), 215-228
- **S. K. Dey ; R. Zuleeg.** Processing and parameters of sol-gel PZT thinfilms for GaAs memory applications. *Ferroeloectrics,* 1990, vol. 112, 309-319
- **M.M. Ziegler ; M. R. Stan.** Design and analysis of crossbar circuits for molecular nanoelectronics. *Nanotechnology, 2002. IEEE-NANO 2002. Proceedings of the 2002 2nd IEEE Conference,* 2002, 323-327
- **M.M. Ziegler ; M.R. Stan.** CMOS/nano co-design for crossbar-based molecular electronic systems. *Nanotechnology, IEEE Transactions,* December 2003, vol. 2 (4), 217-230
- **J. A. Buchmann.** Introduction to Cryptography. Springer, 2003
- **B. Skoric ; P. Tuylis ; W. Ophey.** Robust Key Extraction from Physical Uncloneable Functions Lecture Notes in Computer Science. Springer, 2005
- **A. Csurgay.** On Circuit Models of Quantum-Classical Networks. *International Journal of Circuit Theory and Applications,* 2007, vol. 35, 471-484
- **D. B. Strukov ; K. K. Likharev.** Defect-Tolerant Architectures for Nanoelectronic Crossbar Memories. *J. Nanosci. Nanotechnol.,* 2007, vol. 7, 151-167

- **E. H. Nicollian ; A. Goetzberger.** The Si-SiO2 Interface-Electrical properties as determined by the MIS Conductance Technique. *Bell Syst. Tech. J.,* 1967, vol. 46, 1055
- **L. P. Trombetta ; F. J. Feigl ; J. R. Zeto.** Positive charge generation in metal-oxide-semiconductor capacitors. *J. Appl. Phys.,* 1991, vol. 69, 4
- **Chua, L.O. ; L. Yang.** *Cellular Neural Networks: Theory, IEEE Transactions on Circuits and Systems,* vol. 35, 1257-1272
- **Roska, T. ; Chua, L.O.** The CNN universal machine: An analogic array computer. *Circuits and Systems II: IEEE Transactions on Analog and Digital Signal Processing,* March 1993, vol. 40 (3), 163-173
- **Chua, L.O. ; Roska, T. ; Kozek, T. ; Zarandy, A.** CNN universal chips crank up the computing power. *Circuits and Devices Magazine,* July 1996, vol. 12 (4), 18-28
- **Bhavnagarwala, A.J. ; Xinghai Tang ; Meindl, J.D.** The impact of intrinsic device fluctuations on CMOS SRAM cell stability. *Solid-State Circuits, IEEE Journal,* April 2001, vol. 36 (4), 658-665
- **S. Xavier-de-Souza ; M. Yalcin ; J. Suykens ; J. Vandewalle.** Toward CNN Chip-Specific Robustness. *IEEE Trans. On Circuits And Systems - 1,* 2004, vol. 51 (5), 892-902
- **T. Roska ; L.O. Chua ; D.Wolf ; T. Kozek ; R. Tetzlaff ; F. Puffer.** Simulating nonlin ear waves and partial differential equations via CNN-Part I: Basic techniques. *IEEE Transaction on Circuits and Systems-I,* 1995, vol. 42, 807-815
- Analogies between cellular neural networks and partial differential equations. **Serpico, C. ; Setti, G. ; Thiran, P.** Advances in intelligent Systems. IOS Press, vol. 41, 157-162
- Calculating space. **Konrad Zuse.** MIT Technical translation. 1 Friedr. Vieweg & Sohn, 1969
- **Wolfgang Porod ; Henry K. Harbury ; Craig S. Lent.** Study of Wave Phenomena in Physically- Coupled Device Arrays Using the Helmholtz Equation as a Model. *Fourth Workshop on Physics and Computation - PhysComp96,* November 1996
- **J. D. Jackson.** Classical electrodynamics. Wiley, 1998
- **William H. Press ; Brian P. Flannery ; Saul A. Teukolsky ; William T. Vetterling.** Numerical Recipes in C: The Art of Scientific Computing. Cambridge University Press, 30 October 1992
- **Kennedy, M.P.** Three steps to chaos. II: A Chua's circuit primer. *IEEE Transactions on Circuits and Systems I: Fundamental Theory and Applications,* October 1993, vol. 40 (10), 657-674
- **Zou, F. ; J.A. Nossek.** A chaotic attractor with cellular neural networks. *IEEE Transaction on Circuits and Systems,* 1991, vol. 38, 811-812
- **Maciej J. Ogorzalek ; Zbigniew Galias ; Andrzej M. Dqbrowski ; Wladyslaw R. Dqbrowski.** Chaotic Waves and Spatio-Temporal Patterns in Large Arrays of Doubly-Coupled Chua's Circuits. *IEEE Transactions on Circuits and Systems-I: Fundamental Theory and Applications,* October 1995, vol. 42 (10
- **M. Gomez-Gesteira ; M. de Castro ; V. Perez-Villar ; L. O. Chua.** Experimental-Chua's Circuit Arrays As an Autowave Simulator. *IEEE Transactions on Circuits and Systems-I: Fundamental Theory and Applications,* April 1999, vol. 46 (4
- Cellular wave computers for nano-tera-scale technology - beyond spatial-temporal logic in million processor devices. *ELECTRONICS LETTERS,* 12 April 2007, vol. 43 (8
- **L. O. Chua.** CNN: A paradigm for complexity. World Scientific Pub. Co, July 1998
- **M. Ercsey-Ravasz ; T. Roska ; Z. Neda.** *Cellular Neural Networks for NP-Hard Optimization EURASIP Journal on Advances in Signal Processing,* vol. 2009